# EUROPEAN PATENT SPECIFICATION

(11) **EP 3 750 358 B1**
(45) Date of publication and mention of the grant of the patent: **05.04.2023**
(21) Application number: 19755196.3
(22) Date of filing: 13.02.2019
(51) Int. Cl.: H04L 1/08, H04W 4/40, H04W 28/02, H04W 88/04

(54) **METHOD AND APPARATUS FOR TRANSMITTING AND RECEIVING DUPLICATED DATA IN WIRELESS COMMUNICATION SYSTEM**
VERFAHREN UND VORRICHTUNG ZUM SENDEN UND EMPFANGEN VON DUPLIZIERTEN DATEN IN EINEM DRAHTLOSEN KOMMUNIKATIONSSYSTEM
PROCÉDÉ ET APPAREIL D'ÉMISSION ET DE RÉCEPTION DE DONNÉES DUPLIQUÉES DANS UN SYSTÈME DE COMMUNICATION SANS FIL

(30) Priority: 13.02.2018 KR 20180018096; 19.03.2018 KR 20180031765; 12.04.2018 KR 20180042956; 11.05.2018 KR 20180054421
(43) Date of publication of application: 16.12.2020
(73) Proprietor: Samsung Electronics Co., Ltd., Gyeonggi-do 16677 (KR)
(72) Inventor: MOK, Youngjoong, Suwon-si Gyeonggi-do 16677 (KR); KANG, Hyunjeong, Suwon-si Gyeonggi-do 16677 (KR)
(74) Representative: Gulde & Partner
(86) International application number: PCT/KR2019/001752
(87) International publication number: WO 2019/160321

(56) References cited:
- US-A1- 2016 128 093
- POTEVIO: "Consideration on Packet Duplication over Sidelink", 3GPP DRAFT; R2-1801983 CONSIDERATION ON PACKET DUPLICATION OVER SIDELINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Athens, Greece; 20180226 - 20180302 12 February 2018 (2018-02-12), XP051398935, Retrieved from the Internet: URL:http://www.3gpp.org/ftp/tsg%5Fran/WG2% 5FRL2/TSGR2%5F101/Docs/ [retrieved on 2018-02-12]
- QUALCOMM INCORPORATED: "Buffer status reporting for PDCP duplication", 3GPP DRAFT; R2-1801431 BUFFER STATUS REPORTING FOR PDCP DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Vancouver, Canada; 20180122 - 20180126 12 January 2018 (2018-01-12), XP051386840, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]
- ITL: "Considerations on sidelink packet duplication", 3GPP DRAFT; R2-1713828 - CONSIDERATIONS ON SIDELINK PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Reno, USA; 20171127 - 20171201 17 November 2017 (2017-11-17), XP051372478, Retrieved from the Internet: URL:http://www.3gpp.org/ftp/tsg%5Fran/WG2% 5FRL2/TSGR2%5F100/Docs/ [retrieved on 2017-11-17]
- ZTE: "Discussion on sidelink resource request mechanism in PC5 CA", R2-1713072, 3GPP TSG-RAN WG2 Meeting #100, 17 November 2017 (2017-11-17), XP051371900, Reno, USA
- ERICSSON: "Packet duplication for PC5", R2-1713513, 3GPP TSG-RAN WG2 #100, 17 November 2017 (2017-11-17), XP051372212, Reno, Nevada, USA
- ERICSSON: "Support of Reliable transmission over PC5 using extended PPPP", S2-180209 , 3GPP TSG-SA WG2 Meeting #125, 16 January 2018 (2018-01-16), XP051389648, Gothenburg, Sweden
- ERICSSON: "Sidelink Carrier Selection Criteria for TX", R2-1713516, 3GPP TSG-RAN WG2 #100, 17 November 2017 (2017-11-17), XP051372215, Reno, Nevada, USA
- LG ELECTRONICS INC: "V2X sidelink transmission procedure considering packet duplication", 3GPP DRAFT; R2-1802696 V2X SIDELINK TRANSMISSION PROCEDURE CONSIDERING PACKET DUPLICATION, 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Athens, Greece; 20180226 - 20180302 14 February 2018 (2018-02-14), XP051399299, Retrieved from the Internet: URL:http://www.3gpp.org/ftp/tsg%5Fran/WG2% 5FRL2/TSGR2%5F101/Docs/ [retrieved on 2018-02-14]
- ERICSSON: "Packet duplication for PC5", 3GPP DRAFT; R2-1803525 - PACKET DUPLICATION FOR PC5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 16 February 2018 (2018-02-16), XP051400563, Retrieved from the Internet: URL:http://www.3gpp.org/ftp/tsg%5Fran/WG2% 5FRL2/TSGR2%5F101/Docs/ [retrieved on 2018-02-16]

## Description

### Technical Field

The disclosure relates to a wireless communication system and, more particularly, to a method and apparatus for transmitting and receiving duplicated data in a wireless communication system.

### Background Art

To meet the demand for wireless data traffic having increased since deployment of 4^{th} generation (4G) communication systems, efforts have been made to develop an improved 5^{th} generation (5G) or pre-5G communication system. Therefore, the 5G or pre-5G communication system is also called a `Beyond 4G Network' or a 'Post Long Term Evolution (LTE) System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid frequency shift keying (FSK) and quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The above information is presented as background information only to assist with an understanding of the disclosure. No determination has been made, and no assertion is made, as to whether any of the above might be applicable as prior art with regard to the disclosure.

POTEVIO: "Consideration on Packet Duplication over Sidelink", 3GPP DRAFT; R2-1801983 CONSIDERATION ON PACKET DUPLICATION OVER SIDELINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX, vol. RAN WG2, no. Athens, Greece; 20180226 - 20180302 12 February 2018 (2018-02-12) discusses issues on protocol architecture and activation/deactivation of packet duplication over eV2X sidelink and discloses the use of packets with high reliability for duplication transmission in order to increase the probability of receiving the packets correctly.

QUALCOMM INCORPORATED: "Buffer status reporting for PDCP duplication", 3GPP DRAFT; R2-1801431 BUFFER STATUS REPORTING FOR PDCP DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR, vol. RAN WG2, no. Vancouver, Canada; 20180122 - 20180126 12 January 2018 (2018-01-12) discusses how to efficiently support PDCP duplication in the CA case using the baseline BSR framework including PDCP duplication and the problem of improving the reliability of data transmission.

ITL: "Considerations on sidelink packet duplication", 3GPP DRAFT; R2-1713828 - CONSIDERATIONS ON SIDELINK PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ;vol. RAN WG2, no. Reno, USA; 20171127 - 20171201 17 November 2017 (2017-11-17) discusses details of supporting sidelink packet duplication for eV2X and proposes that a UE decides on activation of the packet duplication in sidelink.

### Disclosure of Invention

### Solution to Problem

An aspect of the disclosure is to provide a method and apparatus for effectively transmitting and receiving duplicated data in a wireless communication system.

The invention is defined by the independent claims.

Effects which can be acquired by the disclosure are not limited to the above described effects, and other effects that have not been mentioned may be clearly understood by those skilled in the art from the following description.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIG. 1 illustrates a diagram of a wireless communication system according to various embodiments of the disclosure;
FIG. 2A illustrates a diagram of the configuration of a base station in a wireless communication system according to various embodiments of the disclosure;
FIG. 2B illustrates a diagram of the configuration of a terminal in a wireless communication system according to various embodiments of the disclosure;
FIG. 3 illustrates a flowchart of the operation of a terminal according to various embodiments of the disclosure;
FIG. 4 illustrates a diagram of a scenario for allocating a resource pool for transmitting a duplicated packet to a radio resource control (RRC) connected V2X terminal according to various embodiments of the disclosure;
FIG. 5 illustrates a diagram of a process of allocating a duplication resource pool via a dedicated message between an RRC connected mode 3 terminal and a base station according to various embodiments of the disclosure;
FIG. 6 illustrates a diagram of an example of a sidelink buffer status report (BSR) according to various embodiments of the disclosure;
FIG. 7 illustrates a diagram of an example of a sidelink BSR according to various embodiments of the disclosure;
FIG. 8 illustrates a diagram of an example of a sidelink BSR according to various embodiments of the disclosure;
FIG. 9A illustrates a diagram of a process of allocating a duplication resource pool via a dedicated message between an RRC connected mode 3 terminal and a base station according to various embodiments of the disclosure;
FIG. 9B illustrates a diagram of a process of transmitting a duplicated packet using a V2X scheduling resource pool between an RRC connected mode 3 terminal and a base station according to various embodiments of the disclosure;
FIG. 10 illustrates a diagram of a process of allocating a duplication resource pool via a dedicated message between an RRC connected mode 4 terminal and a base station according to various embodiments of the disclosure;
FIG. 11 illustrates a diagram of a process in which an RRC idle mode 4 terminal uses a normal resource pool as a duplication resource pool according to various embodiments of the disclosure;
FIG. 12 illustrates a diagram of a process in which a terminal duplicates a packet when a V2X resource is not allocated to a carrier other than a first carrier, that is, a carrier other than a serving carrier according to various embodiments of the disclosure;
FIG. 13 illustrates a diagram of a process in which a V2X terminal duplicates a packet when V2X configuration information is not allocated from a serving carrier according to various embodiments of the disclosure;
FIG. 14 illustrates a diagram of a process when a packet to be duplicated and transmitted by an RRC connected V2X terminal does not exist according to various embodiments of the disclosure;
FIG. 15A illustrates a diagram of a process when a packet to be duplicated and transmitted by an RRC connected V2X terminal does not exist according to various embodiments of the disclosure;
FIG. 15B illustrates a diagram of a process in which a base station uses a duplication deactivation timer according to various embodiments of the disclosure;
FIG. 16 illustrates a diagram of a process when a packet to be duplicated and transmitted by an RRC idle mode terminal or a terminal outside coverage of a base station does not exist according to various embodiments of the disclosure;
FIG. 17A illustrates a diagram of a process when a packet to be duplicated and transmitted by an RRC idle mode terminal or a terminal outside coverage of a base station does not exist according to various embodiments of the disclosure;
FIG. 17B illustrates a diagram of a process in which an RRC idle mode V2X terminal or a V2X terminal that uses pre-configuration information deactivates packet duplication using a duplication deactivation timer according to various embodiments of the disclosure;
FIGS. 18A and 18B illustrate diagrams of examples of the V2X MAC PDU structure of an LTE system according to various embodiments of the disclosure;
FIGS. 19A and 19B illustrate diagrams of processes of utilizing a MAC PDU subheader in order to report duplicated information of V2X data according to various embodiments of the disclosure;
FIG. 20A illustrates a diagram of a sub-header for packet duplication (sub-header for duplication) which includes R/R/E/LCID/F/L fields according to various embodiments of the disclosure;
FIG. 20B illustrates a diagram of a sub-header for packet duplication which includes R/R/R/LCID/R/R fields according to various embodiments of the disclosure;
FIG. 20C illustrates a diagram of a sub-header for packet duplication which includes R/R/E/LCID fields according to various embodiments of the disclosure;
FIG. 20D illustrates a diagram of a sub-header for packet duplication which includes R/R/R/LCID fields according to various embodiments of the disclosure;
FIG. 20E illustrates a diagram of a sub-header for packet duplication which includes D2/R/E/LCID/F/L or R/D2/E/LCID/F/L fields according to various embodiments of the disclosure;
FIG. 20F illustrates a diagram of a sub-header for packet duplication which includes D2/R/R/LCID/R/R fields, R/D2/R/LCID/R/R fields, R/R/D2/LCID/R/R fields, R/R/R/LCID/D2/R fields, or R/R/R/LCID/R/D2 fields according to various embodiments of the disclosure;
FIG. 20G illustrates a diagram of a sub-header for packet duplication which includes D2/R/E/LCID fields or R/D2/E/LCID fields according to various embodiments of the disclosure;
FIG. 20H illustrates a diagram of a sub-header for packet duplication which includes D2/R/R/LCID fields, R/D2/R/LCID fields, or R/R/D2/LCID fields according to various embodiments of the disclosure;
FIG. 21 illustrates a diagram of a V2X MAC PDU structure for transmitting and receiving LCID information of duplicated data using a MAC CE according to various embodiments of the disclosure;
FIGS. 22A and FIG. 22B illustrate diagrams of the structures of a MAC CE for packet duplication which is used for reporting an LCID for packet duplication according to various embodiments of the disclosure;
FIGS. 23A and 23B illustrates diagrams of the operation of a reception V2X terminal when the method of FIGS. 18A to 22B is used according to various embodiments of the disclosure;
FIG. 24 illustrates a diagram of a method performed when a duplication indicator is included in each layer, for example, a PDCP layer, an RLC layer, and a MAC layer;
FIG. 25 illustrates a diagram of a process of determining the priority of a logical channel on the basis of a PPPP and a PPPR, and mapping an LCID according to various embodiments of the disclosure;
FIG. 26 illustrates a diagram of a process of determining the priority of a logical channel on the basis of a PPPP and a PPPR, and mapping an LCID according to various embodiments of the disclosure;
FIG. 27 illustrates a diagram of a process of determining the priority of a logical channel on the basis of a PPPP and a PPPR, and mapping an LCID according to various embodiments of the disclosure;
FIG. 28 illustrates a diagram of an example of a sidelink buffer status report (SL BSR) according to various embodiments of the disclosure;
FIG. 29 illustrates a diagram of an example of a sidelink buffer status report (SL BSR) according to various embodiments of the disclosure;
FIG. 30 illustrates a diagram of an example of the operation of a terminal that activates data duplication on the basis of a channel status and a service status according to various embodiments of the disclosure; and
FIG. 31 illustrates a diagram of an example of the operation of a terminal that deactivates data duplication on the basis of a channel status according to various embodiments of the disclosure.

### Best Mode for Carrying out the Invention

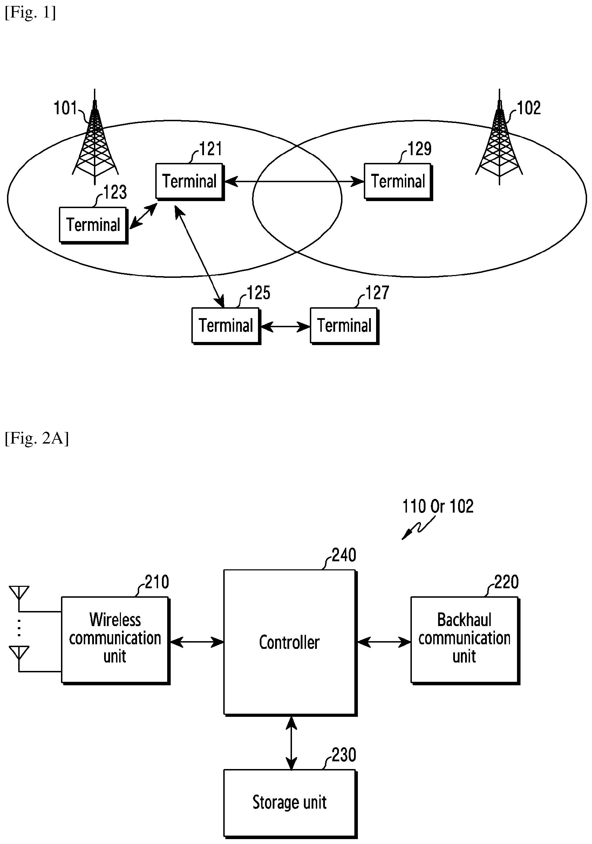

FIGS. 1 through 31, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

The disclosure relates to a method and apparatus for selecting a transmission carrier (Tx carrier) in a wireless communication system. Particularly, the disclosure describes technology for selecting a Tx carrier in a multi-carrier environment of the wireless communication system.

Hereinafter, terms indicating communication schemes, terms indicating signals, terms indicating information, terms indicating network entities, terms indicating elements of an apparatus, and the like used in the descriptions are for ease of description. Accordingly, the disclosure is not limited to the following terms, and other terms having the same technical meaning may be used.

Also, although the disclosure provides various embodiments using the terms in some communication standards (e.g., 3^{rd} generation partnership project (3GPP)), the terms are merely used for the purpose of description. Various embodiments of the disclosure may be easily modified and applied to other communication systems.

FIG. 1 illustrates a diagram of a wireless communication system according to various embodiments of the disclosure. FIG. 1 illustrates base stations 101 and 102, terminals 121, 123, 125, 127, and 129, as some of the nodes that use a radio channel in a wireless communication system.

The base stations 101 and 102 correspond to a network infrastructure that provides radio access to the terminals 120, 123, 125, 127, and 129. Each of the base stations 101 and 102 may have coverage defined by a predetermined geographic area based on a distance to which a signal is transmitted. Each of the base stations 101 and 102 may be referred to as "access point (AP)", "eNodeB (eNB)", "5^{th} generation node (5G node)", "wireless point", "transmission/reception point (TRP)", or other terms having equivalent technical meaning, in addition to "base station".

Each of the terminals 121, 123, 125, 127, and 129 is a device used by a user, and may perform communication with base stations 101 and 102 via a radio channel. Depending on the case, at least one of the terminals 121, 123, 125, 127, and 129 may operate, without handling by a user. That is, at least one of the terminals 121, 123, 125, 127, and 129 is a device that performs machine type communication (MTC), and may not be carried by a user. Each of the terminals 121, 123, 125, 127, and 129 may be referred to as "user equipment (UE)", "mobile state", "subscriber station", "remote terminal", "wireless terminal", "user device", or other terms having the equivalent technical meaning, in addition to "terminal".

Referring to FIG. 1, various examples of communication are illustrated. For example, communication between the base station 101 and the terminal 121 may be performed. As another example, communication between two terminals may be performed via a direct link. That is, two terminals 121 and 123 which are included in the scope of service by the base station 101 may perform communication using a direct link therebetween. The single terminal 121 within the service scope of the base station 101 and the single terminal 125 outside the service scope may perform communication using a direct link therebetween. Two terminals 125 and 127 outside the service scope of the base station 101 may perform communication using a direct link therebetween. Alternatively, the terminals 121 and 129 which exist in the service scopes of the different base stations 101 and 102, respectively, may perform communication using a direct link therebetween.

For the communication using a direct link, the terminals 121, 123, 125, 127, and 129 may use an intelligent transportation system (TIS) band (e.g., 5.9 GHz), instead of using the frequency resources of the base stations 101 and 102. The terminals 121 and 123 within the service scope of the base station 101 may set parameters for communication by the base station 101. The terminal 129 within the service scope of the base station 102 may set parameters for communication by the base station 102. The terminals 125 and 127 located outside the service scope of the base station 101 may perform operation according to a predetermined configuration.

In the disclosure, the terminals 121, 123, 125, and 127 may operate as a transmitting end or a receiving end when performing mutual communication. The roles of the transmitting end and the receiving end are not fixed, and may be changeable. For example, the terminal 121 may operate as a transmitting end at a point in time, and may operate as a receiving end at another point in time. Alternatively, the terminal 121 may operate as a transmitting end in a frequency band, and may operate as a receiving end in another frequency band.

FIG. 2A illustrates a diagram of the configuration of a base station in a wireless communication system according to various embodiments of the disclosure. The configuration of FIG. 2A may be construed as part of the configuration of the base station 101 or the base station 102. The term "unit" or the ending of a word, such as "...or", "...er", or the like may indicate a unit of processing at least one function or operation, and this may be implemented as hardware, software, or a combination of hardware and software.

Referring to FIG. 2A, the base station may include a wireless communication unit 210, a backhaul communication unit 220, a storage unit 230, and a controller 240.

The wireless communication unit 210 may perform functions for transmitting and receiving signals via a radio channel. For example, the communication unit 210 performs a function of conversion between a baseband signal and a bit stream according to the physical layer standard of a system. For example, in the case of data transmission, the communication unit 210 generates complex symbols by encoding and modulating a transmission bit stream. Also, in the case of data reception, the communication unit 210 restores a reception bit stream by demodulating and decoding a baseband signal.

Also, the communication unit 210 up-converts a baseband signal into a radiofrequency (RF) band signal and transmits the same via an antenna, and down-converts an RF band signal received via an antenna into a baseband signal. For example, the communication unit 210 may include a transmission filter, a reception filter, an amplifier, a mixer, an oscillator, a digital-to-analog convertor (DAC), an analog-to-digital convertor (ADC), and the like. Also, the wireless communication unit 210 may include a plurality of transmission and reception paths. Furthermore, the wireless communication unit 210 may include at least one antenna array including a plurality of antenna elements.

From the perspective of hardware, the communication unit 210 may include a digital unit and an analog unit, and the analog unit may include a plurality of sub-units on the basis of an operating power, an operating frequency, or the like. The digital unit may be implemented as at least one processor (e.g., a digital signal processor (DSP)).

The wireless communication unit 210 may transmit and receive a signal as described above. Accordingly, the entirety or a part of the wireless communication unit 210 may be referred to as a "transmitter", a "receiver", or a "transceiver". Also, the transmission and reception performed via a radio channel, which is described in the following descriptions, may be understood as a meaning that the above-described processing is performed by the communication unit 210.

The backhaul communication unit 220 provides an interface for performing communication with other nodes within the network. That is, the backhaul communication unit 220 converts a bit stream transmitted from the base station to another node, for example, another access node, another base station, an upper node, or a core network, into a physical signal, and converts a physical signal received from another node into a bit stream.

The storage unit 230 may store data, such as a basic program for operating a base station, an application program, configuration information, and the like. The storage unit 230 may be configured as a volatile memory, a non-volatile memory, or a combination of a volatile memory and a non-volatile memory. In addition, the storage unit 230 may provide data stored therein in response to a request from the controller 240.

The controller 240 controls the overall operation of the base station. For example, the controller 240 may transmit and receive signals via the wireless communication unit 210 or the backhaul communication unit 220. Further, the controller 240 records data in the storage unit 230 and reads the recorded data. The controller 240 may perform the functions of a protocol stack used by the communication standard. According to another implementation, the protocol stack may be included in the wireless communication unit 210. To this end, the controller 240 may include at least one processor.

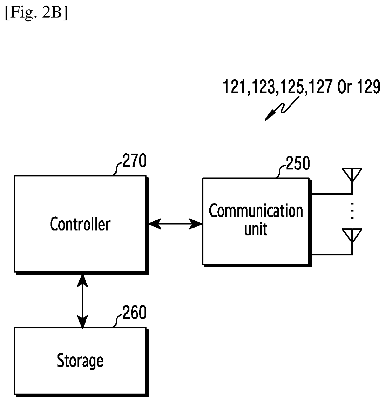

FIG. 2B illustrates a diagram of the configuration of a terminal in a wireless communication system according to various embodiments of the disclosure. FIG. 2B may be understood as the configuration of one of the terminals 121, 123, 125, 127, and 129. The term "...unit" or the ending of a word, such as "...or", "...er", or the like may indicate a unit of processing at least one function or operation, and this may be implemented as hardware, software, or a combination of hardware and software.

Referring to FIG. 2B, the terminal includes a communication unit 250, a storage unit 260, and a controller 270.

The communication unit 250 may perform functions for transmitting and receiving signals via a radio channel. For example, the communication unit 250 performs a function of conversion between a baseband signal and a bit stream according to the physical layer standard of a system. For example, in the case of data transmission, the communication unit 250 generates complex symbols by encoding and modulating a transmission bit stream. Also, in the case of data reception, the communication unit 250 restores a reception bit stream by demodulating and decoding a baseband signal. Also, the wireless communication unit 250 up-converts a baseband signal into an RF band signal and transmits the same via an antenna, and down-converts an RF band signal received via an antenna into a baseband signal. For example, the wireless communication unit 250 may include a transmission filter, a reception filter, an amplifier, a mixer, an oscillator, a DAC, an ADC, and the like.

Also, the communication unit 250 may include a plurality of transmission and reception paths. In addition, the communication unit 250 may include at least one antenna array including a plurality of antenna elements. The communication unit 250 may include a digital circuit and an analog circuit (e.g., radio frequency integrated circuit (RFIC)) from the perspective of hardware. Here, the digital circuit and the analog circuit may be implemented as one package. Also, the communication unit 250 may include a plurality of RF chains. In addition, the communication unit 250 may perform beamforming.

In addition, the communication unit 250 may include a plurality of communication modules for supporting a plurality of different radio access technologies. For example, the different radio access technologies may include Bluetooth low energy (BLE), Wi-Fi, WiFi gigabyte (WiGig), a cellular network (e.g., long term evolution(LTE)), and the like. Further, the different frequency bands may include a super-high frequency (SHF) (e.g., 3.5GHz and 5 GHz) band and a millimeter wave (mmwave) (e.g., 60 GHz) band.

The communication unit 250 may transmit and receive a signal as described above. Accordingly, the entirety or a part of the communication unit 250 may be referred to as a "transmitter", a "receiver", or a "transceiver". Also, the transmission and reception performed via a radio channel, which is described in the following descriptions, may be understood as a meaning that the above-described processing is performed by the communication unit 250.

The storage unit 260 may store data, such as a basic program for operating a terminal, an application program, configuration information, and the like. The storage unit 260 may be configured as a volatile memory, a non-volatile memory, or a combination of a volatile memory and a non-volatile memory. In addition, the storage unit 260 may provide data stored therein in response to a request from the controller 270.

The controller 270 may control the overall operation of the terminal. For example, the controller 270 may transmit and receive a signal via the communication unit 250. Further, the controller 270 writes and reads data to/from the storage unit 260. The controller 270 may perform the functions of a protocol stack used by the communication standard. To this end, the controller 270 may include at least one processor or microprocessor, or may be a part of a processor. Also, a part of the communication unit 250 and the controller 270 may be referred to as a communication processor (CP).

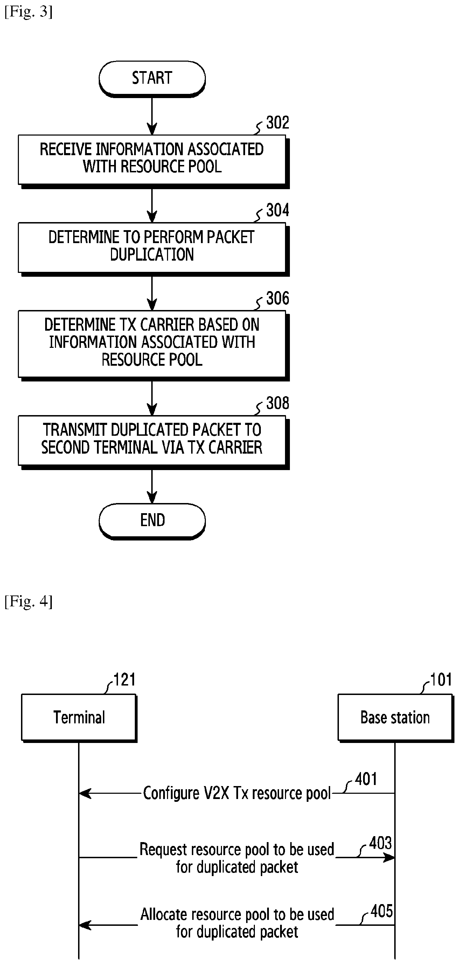

FIG. 3 illustrates a flowchart of the operation of a terminal according to various embodiments of the disclosure.

Referring to FIG. 3, in operation 302, a first terminal 121 receives information associated with a resource pool from the base station 101. When a resource pool is not received from the base station 101, pre-configured resource pool information which is stored in a first terminal may be used. According to various embodiments of the disclosure, when the base station 101 provides a scheduling pool to the first terminal 121, the terminal 121 operates as a terminal of mode 3. When the base station 101 provides a terminal-selected pool (UE-selected pool) to the first terminal 121, the terminal 121 may operate as a terminal of mode 4.

In operation 304, the first terminal 121 determines to perform packet duplication. According to various embodiments of the disclosure, the first terminal 121 may determine whether to perform data duplication using ProSe per packet reliability (PPPR). Particularly, whether to perform data duplication is determined on the basis of a set value of the PPPR. Depending on the case, the PPPR may be set to a Boolean value, the PPPR may be set to an index value, the PPPR may be set to a class, and the like.

In operation 306, the first terminal 121 determines a transmission (Tx) carrier on the basis of information associated with the resource pool. According to various embodiments of the disclosure, when resource pools are allocated to multiple carriers, the first terminal 121 may select a Tx carrier and a resource pool using the channel busy ratio (CBR) and the ProSe per packet priority (PPPP) of the resource pool of each carrier. For example, the first terminal 121 may select a carrier and a resource pool that have the lowest CBR, which is lower than a CBR threshold value allocated for each PPPP.

In operation 308, the first terminal 121 transmits a duplicated packet to the second terminal 123 via a Tx carrier. According to various embodiments, the first terminal 121 determines whether a packet to be transmitted exists or not in a packet buffer of service that uses packet duplication or a packet buffer corresponding to an LCID where packet duplication is performed. According to an embodiment, when it is determined that a packet to be transmitted does not exist any longer in the packet buffer, the first terminal 121 may optionally start a duplication deactivation timer. Also, duplication deactivation may be performed in various manners, according to various embodiments.

FIG. 4 illustrates a diagram of a scenario for allocating a resource pool for transmitting a duplicated packet to a radio resource control (RRC) connected V2X terminal according to various embodiments of the disclosure.

According to scenario 1-1 of the disclosure, the base station 101 allocates a scheduling pool to the V2X terminal 121 for normal V2X packet transmission, and the base station 101 may allocate the scheduling pool to the V2X terminal 121 as a resource pool to be used for duplicated packet transmission. According to scenario 1-2 of the disclosure, the base station 101 allocates a scheduling pool to the V2X terminal 121 for normal V2X packet transmission, and the base station 101 may allocate a terminal-selected pool (UE-selected pool) to the V2X terminal 121 as a resource pool to be used for duplicated packet transmission.

For example, the base station 101 may transfer, to the V2X terminal 121, a resource which is usable as a scheduling pool for normal V2X packet transmission in operation 401. When a resource pool for transmitting a packet to be duplicated does not exist, the V2X terminal 121 may request, from the base station 101, a resource pool for duplicated packet transmission in operation 403. When the request for the resource pool for duplicated packet transmission is received from the V2X terminal 121, the base station 101 may allocate a resource pool for duplicated packet transmission according to scenario 1-1 or 1-2.

For example, according to scenario 1-1, the base station 101 transfers the scheduling pool as a resource pool for duplicated packet transmission in operation 405. According to scenario 1-2, the base station 101 transfers the terminal-selected pool as a resource pool for duplicated packet transmission in operation 405.

According to scenario 2-1 of the disclosure, the base station 101 allocates a terminal-selected pool to the V2X terminal 121 for normal V2X packet transmission, and the base station 101 may allocate a scheduling pool to the V2X terminal 121 as a resource pool for duplicated packet transmission. According to scenario 2-2 of the disclosure, the base station 101 allocates a terminal-selected pool to the V2X terminal 121 for normal V2X packet transmission, and the base station 101 may allocate the terminal-selected pool to the V2X terminal 121 as a resource pool for duplicated packet transmission.

For example, the base station 101 may transfer, to the V2X terminal 121, a resource which is usable as a terminal-selected pool for normal V2X packet transmission in operation 401. When a resource pool for transmitting a packet to be duplicated does not exist, the V2X terminal 121 may request, from the base station 101, a resource pool for duplicated packet transmission in operation 403. When the request for a resource pool for duplicated packet transmission is received from the V2X terminal 121 in operation 403, the base station 101 may allocate a resource pool for duplicated packet transmission according to scenario 2-1 or 2-2.

For example, according to scenario 2-1, the base station 101 transfers the scheduling pool as a resource pool for duplicated packet transmission in operation 405. According to scenario 2-2, the base station 101 allocates the terminal-selected pool as a resource pool for duplicated packet transmission in operation 405.

In the scenarios of FIG. 4, the resource request and resource allocation for duplicated packet transmission may be supported via dedicated signaling.

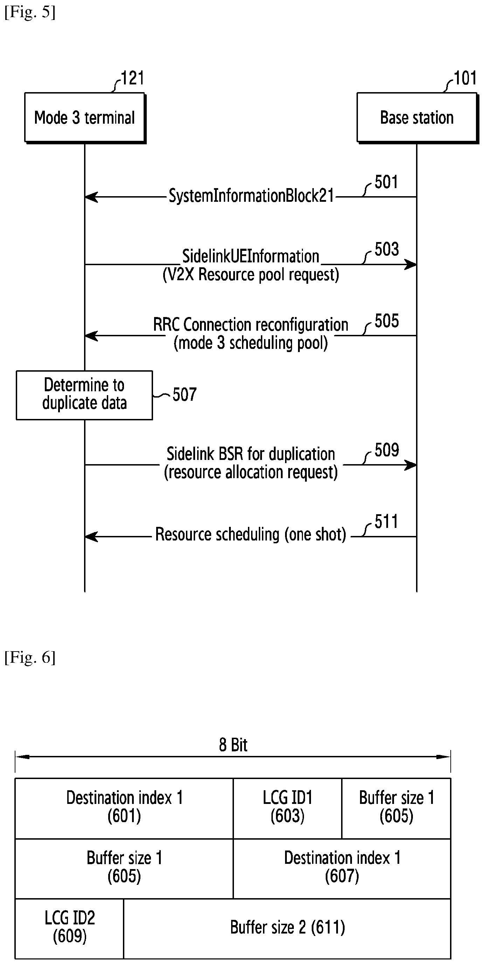

FIG. 5 illustrates a diagram of a process of allocating a duplication resource pool via a dedicated message between an RRC connected mode 3 terminal and a base station according to various embodiments of the disclosure.

In operation 501, the base station 101 provides normal resource pool information, which is usable for transmission and reception in an RRC idle mode, to the terminal 121 of mode 3 using a system information block 21 (SystemlnformationBlock21) or system information message for V2X service. Operation 501 is not related to the operation of the terminal 121 of RRC connected mode 3 according to FIG. 5.

In operation 503, the terminal 121 of V2X service may transmit a scheduling pool request message to the base station 101 in order to request a V2X transmission resource pool. According to various embodiments of the disclosure, the terminal 121 may request a resource pool corresponding to a carrier that the terminal 121 is interested in using sidelink terminal information (SidelinkUElnformation) of the RRC message.

In operation 505, the base station provides scheduling pool information that the terminal is capable of using for V2X message transmission and reception, in response to the scheduling pool request message of operation 503. The scheduling pool information may be provided using an RRC dedicated signaling, for example, an RRC connection reconfiguration message. When the base station 101 provides a scheduling pool to the terminal 121, the terminal 121 operates as a terminal of mode 3. When the base station 101 provides a terminal-selected pool (UE-selected pool) to the terminal 121, the terminal 121 may operate as a terminal of mode 4. In the case of FIG. 5, the base station 101 provides a scheduling pool to the terminal 121, and the terminal 121 operates as a terminal of mode 3.

According to an embodiment, the scheduling pool information may include two types of information, that is, mode 3 scheduling pool information and mode 3 duplication resource pool information.

Particularly, the mode 3 scheduling pool information may include: 1) scheduling pool information that connected mode 3 is capable of using in a first carrier, that is, a serving carrier, for example, the location of a resource pool; 2) modulation coding scheme (MCS) information which is MCS information for data transmission in the serving carrier; 3) LCGInfoList information which is logical channel group (LCG) identifier (ID) information to be used in the serving carrier; 4) sl-V-RNTI information which is sl-V-RNTI to be used in the serving carrier, that is, terminal identification information; and 5) MAC-Config information which is information for buffer status report (BSR).

Also, the mode 3 duplication resource pool information may be included in when the base station explicitly transfers resource pool information for duplication. When the base station does not transfer resource pool information for duplication, a resource pool defined in the mode 3 scheduling pool information may be used for duplicated packet transmission. The mode 3 duplication resource pool information may include duplication resource pool information which is usable by a carrier other than the first carrier, that is, a carrier other than the serving carrier. The duplication resource pool information which is usable by a carrier other than the first carrier may include: 1) carrier information usable for duplication, for example, frequency information or bandwidth information; 2) resource information usable for duplication, for example, the location of a resource pool; 3) sl-V-RNTI, that is, terminal identification information, which is to be used in the carrier usable for duplication (the same terminal identifier is allocated to a single terminal irrespective of a carrier or terminal identifiers which are different for respective carriers are allocated to a single terminal); 4) MCS information which is to be used in the carrier usable for duplication; and 5) LCG ID information which is to be used in the carrier usable for duplication.

The RRC message including the duplication pool information may be as shown in Table 1 and Table 2.

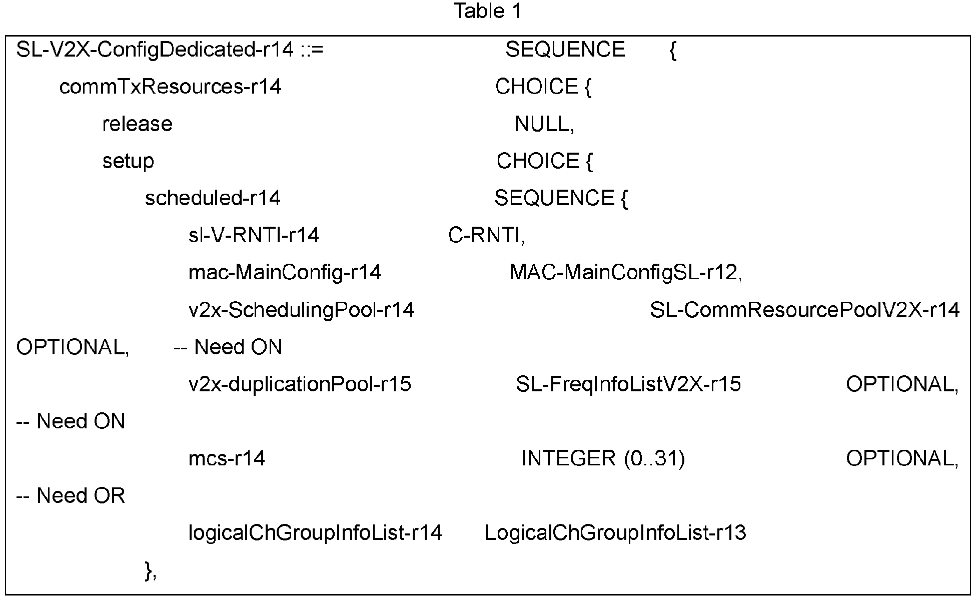

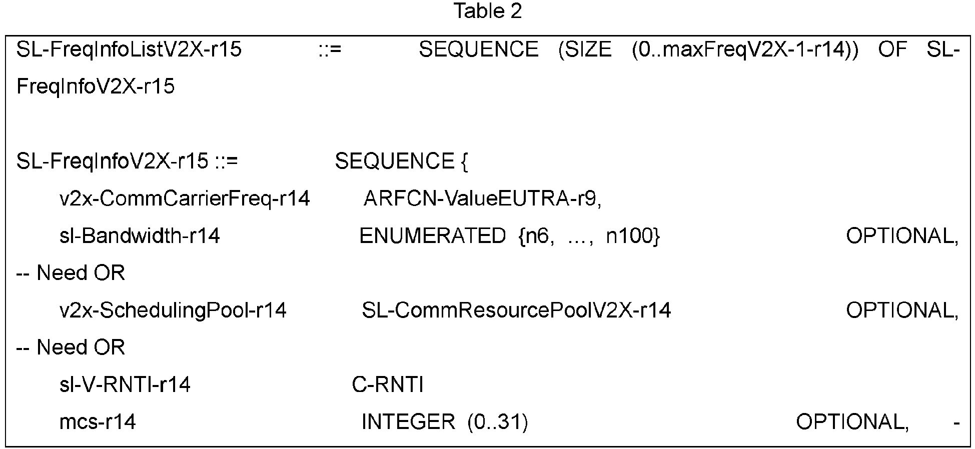

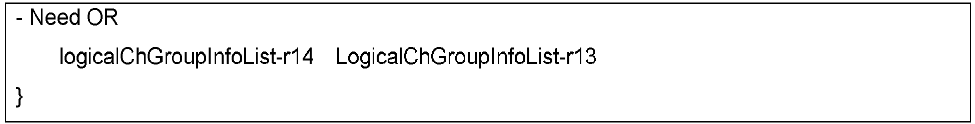

In operation 507, the terminal 121 may determine whether to perform data duplication on the basis of a ProSe per packet reliability (PPPR). Whether to perform data duplication may be determined according to the set value of a PPPR, as follows.
1. In the case in which the PPPR is set to a Boolean value, when a PPPR value is set to true, the terminal 121 may determine to perform data duplication. Also, in addition to the PPPR, a ProSe per packet priority (PPPP) may be used for performing data duplication. Further mode, a PPPP value may be used for determining the LCID of a packet to be duplicated. The LCID of a packet to be duplicated may be set in advance in association with an LCID corresponding to a PPPP value and a PPPR value. For example, when PPPP index 1 is mapped to LCID 1, a packet to be duplicated may be mapped to LCID 9. For example, PPPP (index 1) + PPPR (True) = LCID 9. As another example, in association with an LCID corresponding to a PPPP value and a PPPR value, LCID mapping information of the packet to be duplicated may be set by the base station 101.
2. In the case in which the PPPR is set to an index value, when a PPPR value is a predetermined value, data duplication is determined to be performed. According to an embodiment, when the PPPR value is a predetermined value, data duplication is determined to be performed. For example, when the PPPR value is 1, data duplication is determined to be performed. According to an embodiment, when the PPPR value is in a predetermined range of values, data duplication is determined to be performed. For example, when the PPPR value is in the range of 1 to 4, data duplication is determined to be performed. Also, a PPPP in addition to the PPPR may be used for performing data duplication, and the PPPP value may be used to determine the LCID of a packet to be duplicated. The LCID of a packet to be duplicated may be set in advance in association with the LCID corresponding to a PPPP value and a PPPR value. For example, when PPPP index 1 is mapped to LCID 1, a packet to be duplicated may be mapped to LCID 9. For example, PPPP (index 1) + PPPR (index 1) = LCID 9. As another example, in association with an LCID corresponding to a PPPR value and a PPPP value, LCID mapping information of the packet to be duplicated may be set by the base station 101.
3. In the case in which the PPPR is set to a class, that is, "high/low", or "high/medium/low", or "duplicate/non-duplicate", for example, when the class value of the PPPR is high, data duplication may be determined to be performed. According to an embodiment, when the class value of the PPPR is "high/medium", data duplication is determined to be performed. According to an embodiment, when the class value of the PPPR is "duplicate", data duplication is determined to be performed. Also, a PPPP in addition to the PPPR may be used for performing data duplication, and the PPPP value may be used to determine the LCID of a packet to be duplicated. The LCID of a packet to be duplicated may be set in advance in association with the LCID corresponding to a PPPR value and a PPPP value. For example, when PPPP index 1 is mapped to LCID 1, a packet to be duplicated may be mapped to LCID 9. For example, PPPP (index 1) + PPPR (high or duplicate) = LCID 9. As another example, in association with an LCID corresponding to a PPPR value and a PPPP value, LCID mapping information of the packet to be duplicated may be set by the base station 101.

When the terminal 121 determines to duplicate a packet in operation 507, the terminal 121 transmits a buffer status report (BSR) including original packet information and resource information of a packet to be duplicated, to the base station 101 in operation 509. The structure of the sidelink BSR may use the structures of FIGS. 6, 7, or 8 to be described below. The information associated with the sidelink BSR may include a destination index, the LCGID of an original packet, the buffer size of the original packet, the LCGID of a packet to be duplicated, the buffer size of the packet to be duplicated. When the LCGID of the packet to be duplicated is determined in association with the LCGID of the original packet, the LCGID of the packet to be duplicated may not be included in the sidelink BSR.

In operation 511, when the base station 101 receives a sidelink BSR including resource allocation request information from the terminal 121, the base station 101 may determine resource allocation information of a scheduling pool for original packet transmission, and may transfer the allocated resource information to the terminal 121. According to an embodiment, the resource allocation information may be indicated via DCI 5A.

Also, when the base station 101 receives, from the terminal 121, a sidelink BSR including information associated with the packet to be duplicated, the base station 101 determines resource allocation information in the duplication pool for transmission of the packet to be transmitted, and may transfer the resource allocation information to the terminal 121. According to an embodiment, the resource allocation information may be indicated via DCI 5A. The duplication pool information may be or may not be transferred to the terminal 121, such as the scheduling information described in operation 505. Signaling indicating resource allocation information for duplicated packet transmission will be described using Tables 3, 4, or 5 described below. In the disclosure, the signaling will be described using DCI 5A as an example.

According to an embodiment, the duplicated packet resource allocation information that the terminal 121 receives may indicate that packet duplication is activated.

FIG. 6 illustrates a diagram of an example of a sidelink buffer status report (BSR) according to various embodiments of the disclosure. Particularly, FIG. 6 illustrates an example of a sidelink BSR which is used to request allocation of a resource for packet duplication, and is usable in operation 509 of FIG. 5.

Destination index 1 601 is destination address information of an original packet. LCG ID1 603 is the LCG ID of the original packet. The LCG ID is determined according to the priority of a packet. Buffer size 1 605 is buffer information associated with the original packet. Destination index 1 607 is the destination address information of a duplicated packet, which is the same as the destination address of the original packet. LCG ID2 609 is the LCG ID of the duplicated packet, which is a value determined on the basis of the LCG ID of the original packet, or is an LCG ID value indicated by a base station. According to an embodiment, the LCG ID of the duplicated packet is determined on the basis of the LCG ID of the original packet. For example, when the LCG ID of the original packet is 1, the LCG ID of the duplicated packet may be 9. Buffer size 2 611 is buffer size information of the duplicated packet.

When destination index 1 601 and destination index 1 607 have the same information, the base station 101 that receives the format of FIG. 6 may recognize that it is a request for allocation of a resource for packet duplication.

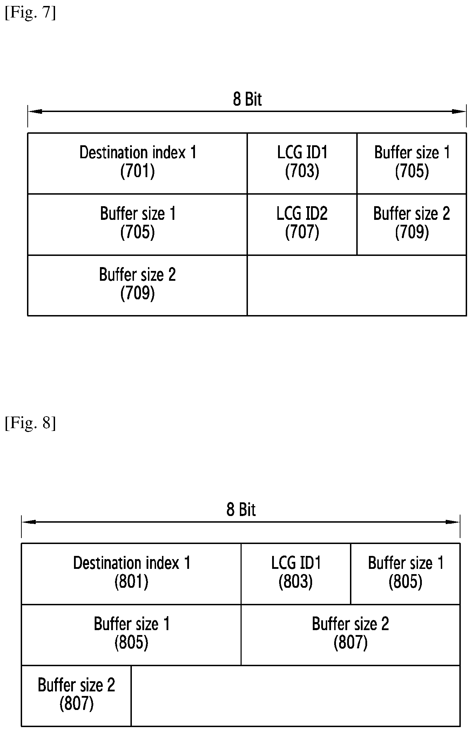

FIG. 7 illustrates a diagram of an example of a sidelink buffer status report (BSR) according to various embodiments of the disclosure. Particularly, FIG. 7 illustrates an example of a sidelink BSR which is used to request allocation of a resource for packet duplication, and is usable in operation 509 of FIG. 5.

Destination index 1 701 is destination address information of an original packet and a duplicated packet. LCG ID1 703 is the LCG ID of the original packet. Buffer size 1 705 is the buffer size of the original packet. LCG ID2 707 is the LCG ID of the duplicated packet, which is a value determined on the basis of the LCG ID of the original packet or is an LCG ID value indicated by the base station 101. According to an embodiment, the LCG ID of the duplicated packet is determined on the basis of the LCG ID of the original packet. For example, when the LCG ID of the original packet is 1, the LCG ID of the duplicated packet may be 9. Buffer size 2 709 is buffer size information of the duplicated packet.

The sidelink BSR of FIG. 7 is defined by a separate BSR name (e.g., new MAC control elements) so as to distinguish the same from a normal sidelink BSR. Also, although FIG. 7 includes the BSR information of a packet transmitted to a single destination, a plurality of pieces of BSR information of packets transmitted to many destinations may be included in the same sidelink BSR depending on the case.

According to various embodiments of the disclosure, when the base station 101 receives packet duplication resource allocation request information of FIGS. 6 or 7, the base station 101 may determine whether to activate packet duplication by allocating the resource of a packet to be duplicated to a terminal using information 601 to 611 or information 701 to 709.

When the terminal 121 requests, from the base station 101, packet duplication resource allocation using the format of FIG. 7, the terminal 121 may designate the LCID of a MAC subheader to an LCID defined as a packet duplication sidelink BSR and may inform the base station 101 that it is a request for allocation of a resource for packet duplication. When the base station 101 receives a MAC CE of which the LCID is set to a duplication sidelink BSR, the base station 101 may recognize information corresponding to the number of bits of LCG ID1 703 and buffer size 1 705 excluding the number of bits corresponding to destination index 1 701 as resource allocation request information for original packet transmission and may recognize information corresponding to the number of bits of LCG ID 2 707 and buffer size 2 709 as resource allocation request information for duplicated packet transmission.

FIG. 8 illustrates a diagram of an example of a sidelink buffer status report (BSR) according to various embodiments of the disclosure. Particularly, FIG. 8 illustrates an example of a sidelink BSR which is used to request allocation of a resource for packet duplication, and is usable in operation 509 of FIG. 5.

Destination index 1 801 is destination address information of an original packet and a duplicated packet. LCG ID1 803 is the LCG ID of the original packet. According to an embodiment, the LCG ID of the duplicated packet is determined on the basis of the LCG ID of the original packet. For example, when the LCG ID of the original packet is 1, the LCG ID of the duplicated packet may be 9. In this instance, the base station 101 may be already aware of the LCG ID of the duplicated packet which corresponds to the LCG ID of the original packet. Buffer size 1 805 is the buffer size of the original packet. Buffer size 2 807 is buffer size information of the duplicated packet. According to various embodiments of the disclosure, when the base station 101 receives packet duplication allocation request information of FIG. 8, the base station 101 may determine whether to activate packet duplication by allocating the resource of a packet to be duplicated to a terminal using information 801 to 807.

When the terminal 121 requests, from the base station 101, allocation of a resource for packet duplication using the format of FIG. 8, the terminal 121 may designate the LCID of a MAC subheader to an LCID defined in a packet duplication sidelink BSR and may inform the base station 101 that it is a request for allocation of a resource for packet duplication.

Table 3, 4, or 5 shows resource allocation information for transmitting a packet to be duplicated, which may be usable in operation 511 of FIG. 5.

When the base station 101 receives, from the terminal 121, a sidelink BSR including information associated with a packet to be duplicated, the base station 101 determines resource allocation information of packet duplication for transmission of the packet to be transmitted, and may transfer the allocated resource information to the terminal 121. The resource allocation information for packet duplication may be defined by DCI 5A or by a similar DCI structure.

**Table 3**

| |
|---|
| "Carrier information" 301 |
| "Lowest index of sub-channel allocation" 303 |
| "Frequency resource location" 305 |
| "Time interval between initial transmission and retransmission" 307 |
| "Padding bit" 309 |
| "Duplication indicator" 311 |

Table 3 is distinguished from normal DCI 5A by using the duplication indicator 311.

The "carrier information" 301 indicates carrier information associated with a carrier to which a resource is allocated for activation of duplication.

Information 303, 305, or 307 indicates location information of a resource which is actually allocated and is to be used for duplication.

For example, the "lowest index of sub-channel allocation" 303 is the sub-channel information of a resource to be used for duplication. The "frequency resource location" 305 is the frequency location information of a resource to be used for duplication. The "time interval between initial transmission and retransmission" 307 is the time interval information for transmission and retransmission to be used for duplication.

The "padding bit" 309 may be used as a padding bit used for adjusting a length to the format length of a DCI.

The "duplication indicator" 311 provides information indicating that a resource for duplication has been allocated to a terminal.

**Table 4**

| |
|---|
| "Carrier information" 313 |
| "Lowest index of sub-channel allocation" 315 |
| "Frequeny resource location" 317 |
| "Time interval between initial transmission and retransmission" 319 |
| "Padding bit" 321 |

Table 4 is used when a separate DCI is defined for duplication resource allocation.

The "carrier information" 313 indicates carrier information of a carrier to which a resource is allocated for duplication activation.

Information 315, 317, or 319 indicates location information of a resource which is actually allocated and is to be used for duplication.

For example, the "lowest index of sub-channel allocation" 315 is the sub-channel information of a resource to be used for duplication. The "frequency resource location" 317 is the frequency location information of a resource to be used for duplication. The "time interval between initial transmission and retransmission" 319 is the time interval information for transmission and retransmission to be used for duplication.

The "padding bit" 321 may be used as a padding bit for adjusting a length to the format length of a DCI.

The terminal 121 may receive information of Table 3 or Table 4, and may activate packet duplication.

**Table 5**

| |
|---|
| "carrier information" 323 |
| "lowest index of sub-channel allocation" 325 |
| "frequency resource location" 327 |
| "time interval between initial transmission and retransmission" 329 |
| "duplication carrier information" 331 |
| "lowest index of sub-channel allocation for duplication" 333 |
| "frequency resource location for duplication" 335 |
| "time interval between initial transmission and retransmission for duplication" 337 |

Table 5 shows resource allocation information for transmitting a packet to be duplicated, which may be usable in operation 511 of FIG. 5.

When the base station 101 receives, from the terminal 121, a sidelink BSR including information associated with a packet to be duplicated, the base station 101 determines resource allocation information for packet duplication for the transmission of a packet to be transmitted, and may transfer the allocated resource information to the terminal 121. The resource allocation information for packet duplication may be defined by DCI 5A or by a similar DCI structure. In this instance, the resource allocation information of an original packet and the resource allocation information of a duplicated packet may be transmitted together via the same DCI.

The "carrier information" 323 may indicate information associated with a first carrier (serving carrier) to which a resource is allocated for transmitting the original packet.

Information 325, 327, or 329 indicates location information of a resource which is actually allocated for the original packet and is to be used in the first carrier (serving carrier).

For example, the "lowest index of sub-channel allocation" 325 is the sub-channel information of a resource to be used for original packet transmission. The "frequency resource location" 327 is the frequency location information of a resource to be used for original packet transmission. The "time interval between initial transmission and retransmission" 329 is the time interval information for transmission and retransmission to be used for original packet transmission.

The "duplication carrier information" 331 indicates carrier information associated with a resource allocated for duplication activation.

Information 333, 335, or 337 indicates location information of a resource which is actually allocated and is to be used for duplication.

For example, the "lowest index of sub-channel allocation for duplication" 333 is sub-channel information of a resource to be used for duplication. The "frequency resource location for duplication" 335 is the frequency location information of a resource to be used for duplication. The "time interval between initial transmission and retransmission for duplication" 337 is the time interval information for transmission and retransmission to be used for duplication.

The terminal 121 may receive information of Table 5, and may activate packet duplication.

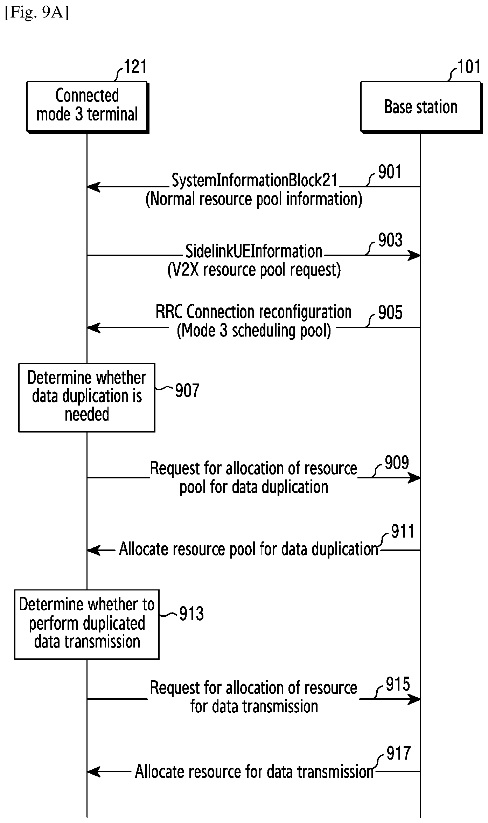

FIG. 9A illustrates a diagram of a process of allocating a duplication resource pool via a dedicated message between an RRC connected mode 3 terminal and a base station according to various embodiments of the disclosure.

Particularly, FIG. 9A is a procedure performed between the RRC connected mode 3 terminal 121 and the base station 101, and illustrates a method of allocating a duplication resource pool via a dedicated message.

In operation 901, the bases station 101 provides normal resource pool information which a V2X terminal is capable of using for transmission and reception in an RRC idle mode, via a system information block 21 or a V2X service system information message. The normal resource pool information in operation 901 is not related to a process of RRC-connected mode 3 according to FIG. 9A of the disclosure.

In operation 903, the V2X terminal 121 may transfer a scheduling pool request message to the base station 101 in order to request a V2X transmission resource pool. According to an embodiment, the terminal 121 may request a resource pool corresponding to a carrier that the terminal 121 is interested in, using sidelink terminal information (SidelinkUElnformation) of an RRC message.

In operation 905, the base station 101 provides scheduling pool information that the terminal 121 is capable of using for V2X message transmission and reception, in response to the scheduling pool request message of operation 903. The scheduling pool information may be provided using an RRC dedicated signaling, for example, an RRC connection reconfiguration message. When the base station 101 provides a scheduling pool to the terminal 121, the terminal 121 operates as a terminal of mode 3. When the base station 101 provides a terminal-selected pool (UE-selected pool) to the terminal 121, the terminal 121 may operate as a terminal of mode 4. In the case of FIG. 9A, the base station 101 provides a scheduling pool to the terminal 121, and the terminal 121 operates as a terminal of mode 3.

According to an embodiment, mode 3 scheduling pool information may include: 1) scheduling pool information that connected mode 3 is capable of using in a first carrier, that is, a serving carrier, for example, the location of a resource pool; 2) MCS information which is MCS information for data transmission in the serving carrier; 3) LCGInfoList information which is LCG ID information to be used in the serving carrier; 4) sl-V-RNTI information which is sl-V-RNTI to be used in the serving carrier, that is, terminal identification information; and 5) MAC-Config information which is information for buffer status report (BSR).

In operation 907, the terminal 121 may determine whether packet duplication is used on the basis of service information of a packet to be transmitted. The service information of the packet to be transmitted may be transferred in a higher layer, for example, an application layer, a facility layer, a V2X protocol layer, and the like. When packet duplication is used depending on service, the terminal 121 may determine whether a packet duplication resource pool or a packet duplication resource is configured. When the packet duplication resource pool or the packet duplication resource is not configured, the terminal 121 may determine to request, from the base station 101, a resource pool to be used for duplicated packet transmission. According to an embodiment, in the case of transmission of a packet corresponding to safety service, for example, a packet corresponding to "provider service identifier (PSID)= 1", when it is determined that a resource pool for duplication is used, the terminal 121 may request a resource pool from the base station 101.

When the terminal 121 determines to request a resource pool to be used for packet duplication, the terminal 121 may request a duplication resource pool from the base station 101 in operation 909. A duplication resource pool request signal may include at least one of the information as follows: 1) carrier information that the terminal 121 is interested in for packet transmission corresponding to V2X service; and 2) the destination address of V2X service, for example, at least one of a group ID, a multicast ID, a broadcast ID, and a unicast ID.

In operation 911, the base station 101 may allocate a duplication resource pool to the terminal 121. The duplication resource pool information provided by the base station 101 may include duplication resource pool information which is usable by a carrier other than the first carrier, that is, a carrier other than the serving carrier.

Particularly, the duplication resource pool information which is usable by a carrier other than the first carrier may include: 1) carrier information usable for duplication, for example, frequency information or bandwidth information; 2) resource information usable for duplication, for example, the location of a resource pool; 3) sl-V-RNTI, that is, terminal identification information, which is to be used in the carrier usable for duplication (herein, the same terminal identifier is allocated to the single terminal 121 irrespective of a carrier or terminal identifiers which are different for respective carriers are allocated to the single terminal 121); 4) MCS which is to be used in the carrier usable for duplication; and 5) LCG ID information which is to be used in the carrier usable for duplication.

The RRC message including the duplication pool information may be as shown in Table 6.

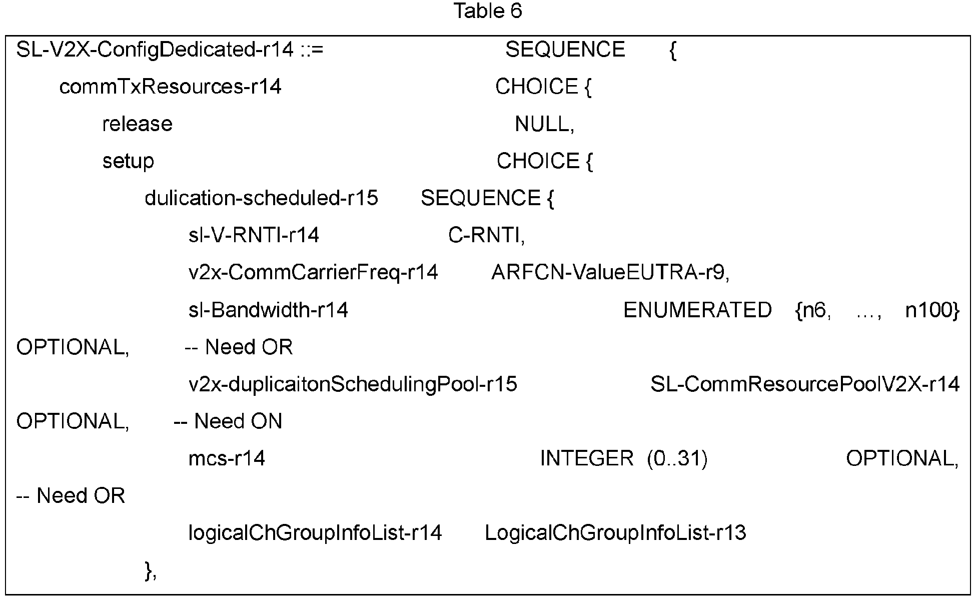

In operation 913, the terminal 121 may determine whether to perform data duplication on the basis of ProSe per packet reliability (PPPR). Whether to perform data duplication may be determined according to the set value of the PPPR, as follows.
1. In the case in which the PPPR is set to a Boolean value: when a PPPR value is set to true, the terminal 121 determines to perform packet duplication.
   1-i) Also, a PPPP, in addition to the PPPR, may be used to perform data duplication, and a PPPP value may be used to determine the LCID of a packet to be duplicated. The LCID of a packet to be duplicated may be set in advance in association with the LCID corresponding to a PPPP value and a PPPR value. For example, when PPPP index 1 is mapped to LCID 1, a packet to be duplicated is mapped to LCID 9. For example, PPPP (index 1) + PPPR (True) = LCID 9.
   1-ii) As another example, in association with an LCID corresponding to a PPPR value and a PPPP value, LCID mapping information of the packet to be duplicated may be set by the base station 101.
2. In the case in which the PPPR is set to an index value, the terminal 121 may determine to duplicate data when a PPPR value is a predetermined value. For example, the terminal 121 determines to perform data duplication when the PPPR value is 1. As another example, the terminal 121 may determine to duplicate data when a PPPR value is in a predetermined range of values. For example, the terminal 121 determines to perform data duplication when the PPPR value is in the range of 1 to 4.
   2-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPR value and a PPPP value. For example, when PPPP index 1 is mapped to LCID 1, the packet to be duplicated is mapped to LCID 9. For example, PPPP (index 1) + PPPR (index 1) = LCID 9.
   2-ii) As another example, in association with an LCID corresponding to a PPPP value and a PPPR value, LCID mapping information of the packet to be duplicated may be set by the base station 101.
3. In the case in which the PPPR is set to a class, such as "high/low", "high/medium/low", or "duplicate/non-duplicate", the terminal 121 may determine to perform data duplication when the class value of the PPPR is, for example, "high". As another example, the terminal 121 may determine to perform data duplication when the class value of the PPPR is "high/medium". As another example, the terminal 121 may determine to perform data duplication when the class value of the PPPR is "duplicate".
   3-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (high or duplicate) = LCID 9.
   3-ii) As another example, in association with an LCID corresponding to a PPPR and a PPPP, LCID mapping information of the packet to be duplicated may be set by a base station.

When the terminal 121 determines to perform packet duplication in operation 913, the terminal 121 may transmit, to the base station 101, a sidelink BSR including original packet information and resource information used for the packet to be duplicated in operation 915. The structure of the sidelink BSR may use the above-described structures of FIG. 6, 7, or 8. The information associated with the sidelink BSR may include a destination index, the LCGID of an original packet, the buffer size of the original packet, the LCGID of the packet to be duplicated, the buffer size of the packet to be duplicated. When the LCGID of the packet to be duplicated is determined in association with the LCGID of the original packet, the LCGID of the packet to be duplicated may not be included in the sidelink BSR.

When the base station 101 receives a sidelink BSR including resource allocation request information for transmitting the packet to be duplicated from the terminal 121, the base station 101 may determine resource allocation information in the scheduling pool of operation 905 for original packet transmission, and may transfer the allocated resource information to the terminal in operation 917. The resource allocation information may be indicated by, for example, DCI 5A.

The base station 101 may determine resource allocation information in the duplication pool of operation 911 for transmitting the packet to be duplicated, and may transfer the allocated resource information to the terminal. The resource allocation information may be indicated by, for example, DCI 5A.

Signaling indicating the resource allocation information for duplicated packet transmission has been described with reference to Table 3, 4, or 5. In the disclosure, the signaling will be described using DCI 5A as an example.

The duplicated packet resource allocation information that the terminal 121 receives may be construed as an indication that packet duplication is activated.

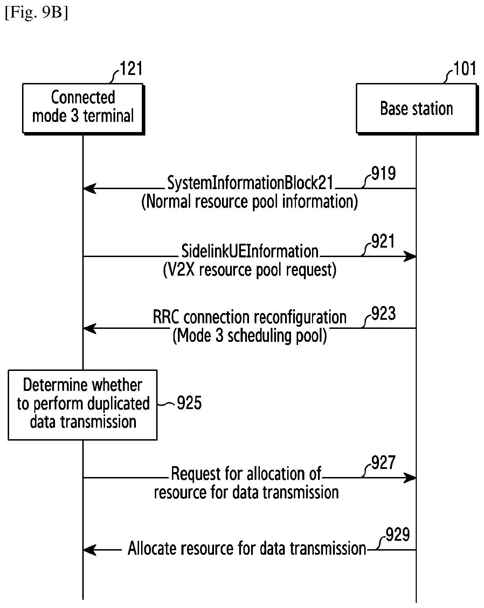

FIG. 9B illustrates a diagram of a process of transmitting a duplicated packet using a V2X scheduling resource pool between an RRC connected mode 3 terminal and a base station according to various embodiments of the disclosure.

In operation 919, the bases station 101 provides normal resource pool information which a V2X terminal is capable of using for transmission and reception in an RRC idle mode, via a system information block 21 or a V2X service system information message. The normal resource pool information in operation 901 is not related to a process of RRC-connected mode 3 according to FIG. 9B of the disclosure.

In operation 921, the V2X terminal 121 may transmit a scheduling pool request message to the base station 101 in order to request a V2X transmission resource pool. According to an embodiment, the terminal 121 may request a resource pool corresponding to a carrier that the terminal 121 is interested in, using sidelink terminal information (SidelinkUElnformation) of an RRC message.

In operation 923, the base station 101 provides scheduling pool information that the terminal 121 is capable of using for V2X message transmission and reception, in response to the scheduling pool request message of operation 921. The scheduling pool information may be provided using an RRC dedicated signaling, for example, an RRC connection reconfiguration message. Also, the scheduling pool may be usable as a resource for duplication. When the base station 101 provides a scheduling pool to the terminal 121, the terminal 121 operates as a terminal of mode 3. When the base station 101 provides a terminal-selected pool to the terminal 121, the terminal 121 operates as a terminal of mode 4. In FIG. 9B, it is assumed that the base station 101 provides a scheduling pool to the terminal 121, and the terminal 121 operates as a terminal of mode 3.

According to an embodiment, mode 3 scheduling pool information may include: 1) scheduling pool information that connected mode 3 is capable of using in a first carrier, that is, a serving carrier, for example, the location of a resource pool; 2) MCS information which is MCS information for data transmission in the serving carrier; 3) LCGInfoList information which is LCG ID information to be used in the serving carrier; 4) sl-V-RNTI information which is sl-V-RNTI to be used in the serving carrier, that is, terminal identification information; and 5) MAC-Config information which is information for buffer status report (BSR).

In operation 925, the terminal 121 may determine whether to perform data duplication on the basis of ProSe per packet reliability (PPPR). Whether to perform data duplication may be determined according to the set value of the PPPR, as follows.
1. In the case in which the PPPR is set to a Boolean value: when a PPPR value is set to true, the terminal 121 determines to perform packet duplication.
   1-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (True) = LCID 9.
   1-ii) As another example, in association with an LCID corresponding to a PPPR value and a PPPP value, LCID mapping information of the packet to be duplicated may be set by the base station 101.
2. In the case in which the PPPR is set to an index value, the terminal 121 may determine to duplicate data when a PPPR value is a predetermined value. For example, the terminal 121 determines to perform data duplication when the PPPR value is 1. As another example, the terminal 121 may determine to duplicate data when the PPPR value is in a predetermined range of values. For example, the terminal 121 determines to perform data duplication when the PPPR value is in a range of 1 to 4.
   2-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (index 1) = LCID 9.
   2-ii) As another example, in association with an LCID corresponding to a PPPP value and a PPPR value, LCID mapping information of the packet to be duplicated may be set by the base station 101.
3. In the case in which the PPPR is set to a class, such as "high/low", "high/medium/low", or "duplicate/non-duplicate", the terminal 121 may determine to perform data duplication when the class value of the PPPR is, for example, "high". As another example, the terminal 121 may determine to perform data duplication when the class value of the PPPR is "high/medium". As another example, the terminal 121 may determine to perform data duplication when the class value of the PPPR value is "duplicate".
   3-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (high or duplicate) = LCID 9.
   3-ii) As another example, in association with an LCID corresponding to a PPPP value and a PPPR value, LCID mapping information of the packet to be duplicated may be set by a base station.

When the terminal 121 determines to perform packet duplication in operation 925, the terminal 121 may transmit, to the base station 101, a sidelink BSR including original packet information and resource information used for a packet to be duplicated in operation 927. The structure of the sidelink BSR may use the structure described in FIG. 6, 7, or 8. The information associated with the sidelink BSR may include a destination index, the LCGID of an original packet, the buffer size of the original packet, the LCGID of the packet to be duplicated, the buffer size of the packet to be duplicated. When the LCGID of the packet to be duplicated is determined in association with the LCGID of the original packet, the LCGID of the packet to be duplicated may not be included in the sidelink BSR.

When the base station 101 receives a sidelink BSR including resource allocation request information for transmitting the packet to be duplicated from the terminal 121, the base station 101 may determine resource allocation information in the scheduling pool of operation 923 for original packet transmission, and may transfer the allocated resource information to the terminal 121 in operation 929. The resource allocation information may be indicated by, for example, DCI 5A.

The base station 101 may determine resource allocation information in the scheduling pool of operation 923 for transmitting the packet to be duplicated, and may transfer the allocated resource information to the terminal. The resource allocation information may be indicated by, for example, DCI 5A.

Signaling indicating the resource allocation information for duplicated packet transmission has been described with reference to Table 3, 4, or 5. In the disclosure, the signaling will be described using DCI 5A as an example.

Also, the resource allocation information for duplicated packet transmission may include at least one of the information as follows: i. Carrier information usable for duplication (e.g., frequency information or bandwidth information)
ii. Resource information usable for duplication (e.g., the location of a resource pool)
iii. sl-V-RNTI (terminal identifier) to be used in the carrier usable for duplication (herein, the same terminal identifier is allocated to a single terminal irrespective of a carrier, or terminal identifiers which are different for respective carriers are allocated to a single terminal)
iv. modulation coding scheme (MCS) to be used in the carrier usable for duplication
v. LCG ID information to be used in the carrier usable for duplication

The duplicated packet resource allocation information that the terminal 121 receives may be construed as a meaning that packet duplication is activated.

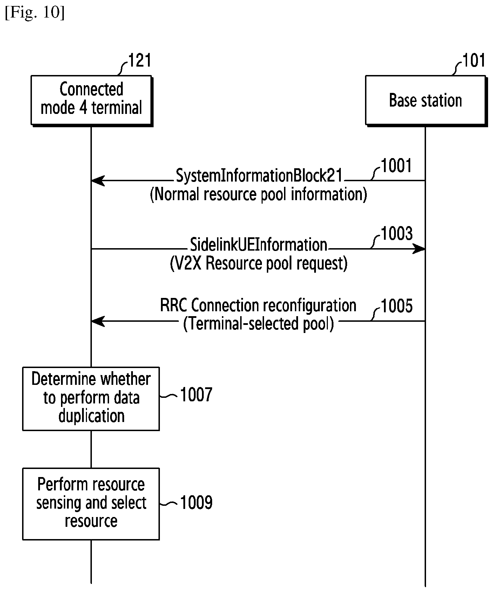

FIG. 10 illustrates a diagram of a process of allocating a duplication resource pool via a dedicated message between an RRC connected mode 4 terminal and a base station according to various embodiments of the disclosure.

In operation 1001, the bases station 101 provides normal resource pool information which the V2X terminal 121 is capable of using for transmission and reception in an RRC idle mode, via a system information block 21 or a V2X service system information message. The procedure of operation 1001 is not related to the operation of RRC connected mode 4 according to FIG. 10 of the disclosure.

In operation 1003, the V2X service terminal 121 may transfer a scheduling pool request message to the base station 101 in order to request a V2X transmission resource pool. For example, the terminal 121 may request a resource pool corresponding to a carrier that the terminal 121 is interested in, using SidelinkUElnformation of an RRC message.

In operation 1005, the base station 101 provides terminal-selected pool information that the terminal 121 is capable of using for V2X message transmission and reception, in response to the scheduling pool request message of operation 1003. The terminal-selected pool information may be provided using an RRC dedicated signaling, for example, an RRC connection reconfiguration message. When the base station 101 provides a scheduling pool to the terminal 121, the terminal 121 operates as a terminal of mode 3. When the base station 101 provides a terminal-selected pool to the terminal 121, the terminal 121 operates as a terminal of mode 4. In the case of FIG. 10, the base station 101 provides a terminal-selected pool to the terminal 121, and the terminal 121 operates as a terminal of mode 4.

The terminal-selected pool information may include two types of information as follows.
1. Information that may be included in a terminal-selected pool:
   1-i) normal pool information of a first carrier (a serving carrier)
   1-ii) sensing operation information to be applied when a transmission (Tx) resource is selected from the normal pool of the first carrier (serving carrier)
2. Information that may be included in terminal-duplication selected pool (ue-duplicationSelected Pool): The information is included when the base station 101 explicitly transfers resource pool information for duplication. When the base station 101 does not transmit the resource pool information for duplication, a resource pool defined in the terminal-selected pool information may be used for duplicated packet transmission.
   2-i) duplication pool information, for example, carrier information, resource ID information, and resource location information
   2-ii) sensing operation information to be applied when a Tx resource is selected from the duplication pool.

The example of an RRC including the duplication pool information is as follows.

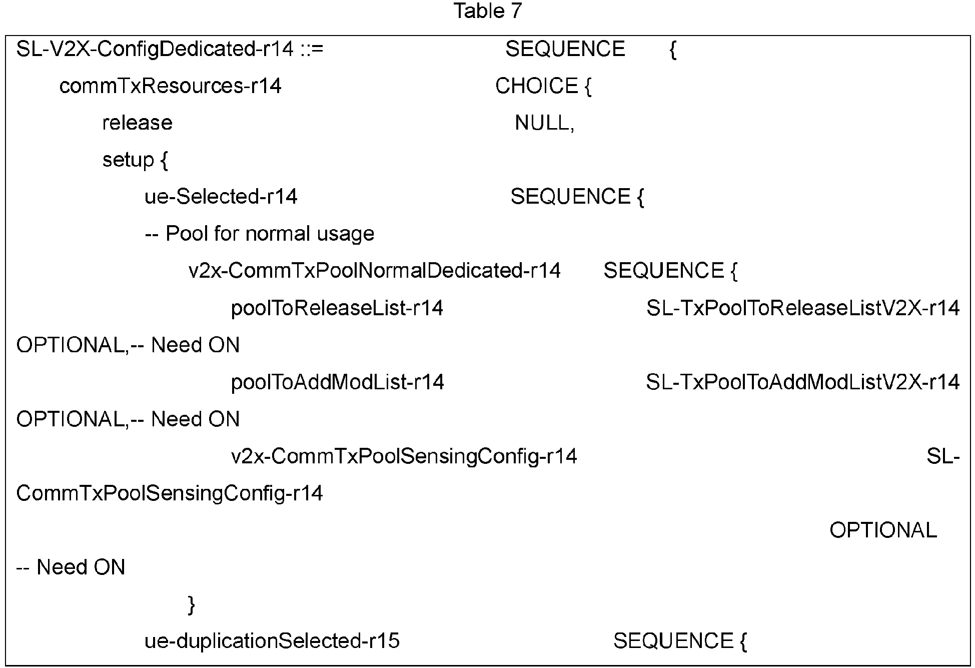

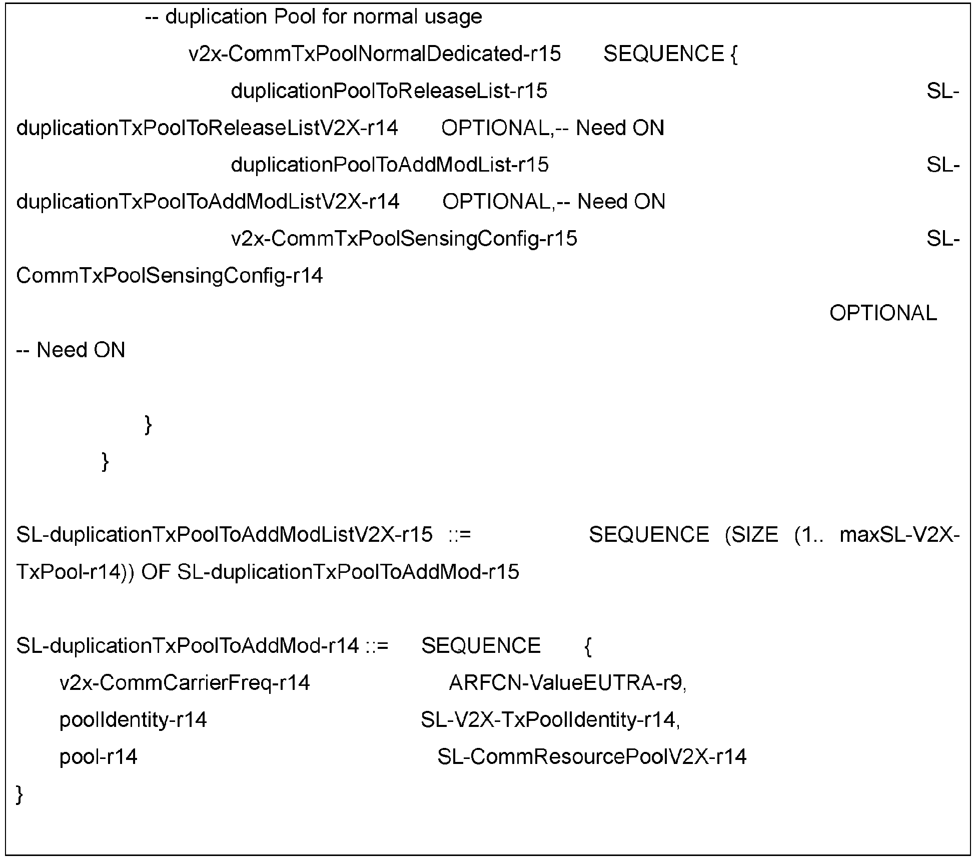

In operation 1007, the terminal 121 may determine whether to perform data duplication on the basis of ProSe per packet reliability (PPPR). Whether to perform data duplication may be determined according to the set value of the PPPR, as follows.
1. In the case in which the PPPR is set to a Boolean value: the terminal 121 determines to perform packet duplication when a PPPR value is set to true.
   1-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (True) = LCID 9.
   1-ii) As another example, in association with an LCID corresponding to a PPPP value and a PPPR value, LCID mapping information of the packet to be duplicated may be set by the base station 101.
2. In the case in which the PPPR is set to an index value, the terminal 121 may determine to duplicate data when a PPPR value is a predetermined value. For example, the terminal 121 determines to perform data duplication when the PPPR value is 1. As another example, the terminal 121 may determine to duplicate data when the PPPR value is in a predetermined range of values. For example, the terminal 121 determines to perform data duplication when the PPPR value is in a range of 1 to 4.
   2-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (index 1) = LCID 9.
   2-ii) As another example, in association with an LCID corresponding to a PPPP value and a PPPR value, LCID mapping information of the packet to be duplicated may be set by the base station 101.
3. In the case in which the PPPR is set to a class, such as "high/low", "high/medium/low", or "duplicate/non-duplicate", the terminal 121 may determine to perform data duplication when the class value of the PPPR is, for example, "high". As another example, the terminal 121 may determine to perform data duplication when the class value of the PPPR is "high/medium". As another example, the terminal 121 may determine to perform data duplication when the class value of the PPPR is "duplicate".
   3-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (high or duplicate) = LCID 9.
   3-ii) As another example, in association with an LCID corresponding to a PPPP value and a PPPR value, LCID mapping information of the packet to be duplicated may be set by a base station.

In operation 1009, the terminal 121 may select a TX resource for packet transmission from the allocated resource pool. When resource pools are allocated to multiple carriers, the terminal 121 may select a TX carrier and a resource pool using a channel busy ratio (CBR) and a ProSe per packet priority (PPPP) of the resource pool of each carrier. For example, a carrier and a resource pool are selected that have the lowest CBR, which is lower than a CBR threshold value allocated for each PPPP.

The terminal 121 may transmit an original packet using the first carrier, that is, the serving carrier, and may select a carrier and a resource pool used for transmitting a duplicated packet on the basis of the CBR/PPPP. The terminal 121 may perform a resource sensing operation in order to select a resource for packet transmission in the first carrier, that is, the serving carrier, and the carrier selected for transmitting the duplicated packet. Also, the terminal 121 may select one of the following methods in order to transmit duplicated data, and may perform data transmission.

The terminal 121 may continuously perform a resource sensing operation with respect to a selected carrier, and may select a resource for transmitting a duplicated packet. When a resource sensing operation time, for example, a difference between a resource selecting operation start time (T1) and a resource selection complete time (T2), is less than a duplication timer time, that is T2-T1 < Duplication Timer, the terminal 121 may transmit the duplicated packet via a selected carrier.

According to an embodiment, the duplication timer may be set to a time in consideration of the validity of duplicated data. For example, as a data validity time, a period of time spent until a slow start of a TCP window begins may be considered. When the terminal 121 obtains a resource for the duplicated packet, it is considered that packet duplication is activated.

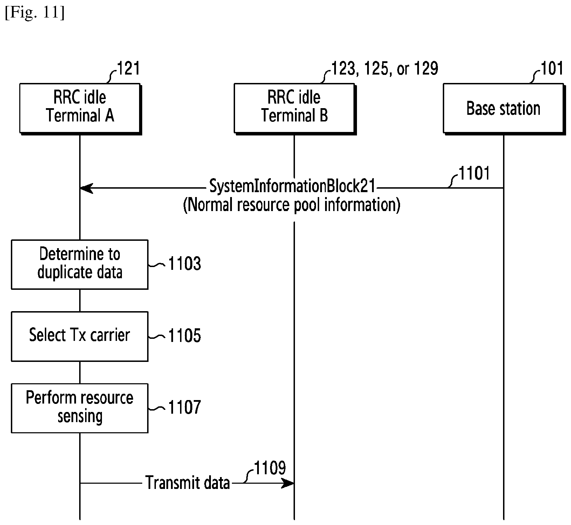

FIG. 11 illustrates a diagram of a process in which a terminal of RRC idle mode 4 uses a normal resource pool as a duplication resource pool according to various embodiments of the disclosure.

In operation 1101, the bases station 101 provides normal resource pool information which the RRC idle terminal 121 is capable of using for V2X data transmission and reception, via a system information block 21 or a system information message used for V2X service . The normal resource pool information provided from the system information block may configure normal resource pool information for each carrier.

In operation 1103, when a Boolean value is set, the terminal 121 determines to perform packet duplication when a PPPR value is set to true.

1-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and the PPPP value. For example, when PPPP index 1 is mapped to LCID 1, a packet to be duplicated is mapped to LCID 9. For example, PPPP (index 1) + PPPR (True) = LCID 9.

1-ii) As another example, in association with an LCID corresponding to a PPPP value and the PPPP value, LCID mapping information of the packet to be duplicated may be set by the base station 101.

2. In the case in which the PPPR is set to an index value, the terminal 121 may determine to duplicate data when a PPPR value is a predetermined value. For example, the terminal 121 determines to perform data duplication when the PPPR value is 1. As another example, the terminal 121 may determine to duplicate data when the PPPR value is in a predetermined range of values. For example, the terminal 121 determines to perform data duplication when the PPPR value is in a range of 1 to 4.

2-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and the PPPP value. For example, when PPPP index 1 is mapped to LCID 1, the packet to be duplicated is mapped to LCID 9. For example, PPPP (index 1) + PPPR (index 1) = LCID 9.

2-ii) As another example, in association with an LCID corresponding to a PPPP value and the PPPP value, LCID mapping information of the packet to be duplicated may be set by the base station 101.

3. In the case in which the PPPR is set to a class, such as "high/low", "high/medium/low", or "duplicate/non-duplicate", the terminal 121 may determine to perform data duplication when the class value of the PPPR is, for example, "high". As another example, the terminal 121 may determine to perform data duplication when the class value of the PPPR is "high/medium". As another example, the terminal 121 may determine to perform data duplication when the class value of the PPPR is "duplicate".

3-i) Also, a PPPP, in addition to the PPPR, may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated is mapped to LCID 9. For example, PPPP (index 1) + PPPR (High) = LCID 9.

3-ii) As another example, in association with an LCID corresponding to a PPPP value and the PPPP value, LCID mapping information of the packet to be duplicated may be set by a base station.

In operation 1105, the terminal 121 may select a TX resource for packet transmission from the resource pool allocated in operation 1101. When resource pools are allocated to multiple carriers, the terminal 121 may select a TX carrier and a resource pool using a channel busy ratio (CBR) and a ProSe per packet priority (PPPP) of the resource pool of each carrier. For example, a carrier and a resource pool are selected that have the lowest CBR, which is lower than a CBR threshold value allocated for each PPPP. The terminal 121 may transmit an original packet using the first carrier, that is, the serving carrier, and may select a carrier and a resource pool to be used for transmitting a duplicated packet on the basis of the CBR/PPPP.

In operation 1107, the terminal 121 may perform a resource sensing operation in order to select a resource for packet transmission in the first carrier, that is, the serving carrier, and the carrier selected for transmitting the duplicated packet.

The terminal 121 may perform a resource sensing operation in order to select a resource usable for transmitting a packet in the resource pools of the first carrier, that is, the serving carrier, and the carrier selected for transmitting the duplicated packet. The terminal 121 may select one of the following methods in order to transmit duplicated data, and may perform data transmission.

The terminal 121 may continuously perform a resource sensing operation with respect to a selected carrier, and may select a resource for transmitting a duplicated packet.

When a resource sensing operation time, for example, a difference between a resource selecting operation start time (T1) and a resource selection complete time (T2), is less than a duplication timer time, that is T2-T1 < duplication timer, the terminal 121 may transmit a duplicated packet via a selected carrier.

The duplication timer may be set to a time in consideration of the validity of duplicated data. For example, as a time in consideration of the validity of data, a period of time spent until a slow start of a TCP window begins.

When the terminal 121 obtains a resource for a duplicated packet, it is considered that packet duplication is activated.

In operation 1109, the terminal 121 activates packet duplication, and transmits the original packet and the duplicated packet to neighboring V2X terminals 123, 125, or 129.

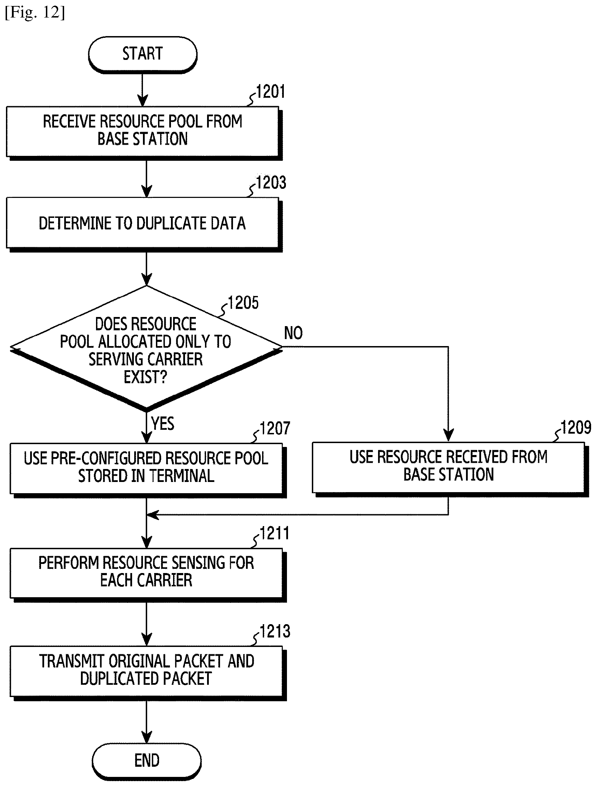

FIG. 12 illustrates a diagram of a process in which a terminal duplicates a packet when a V2X resource is not allocated in a carrier other than a first carrier, that is, a carrier other than a serving carrier according to various embodiments of the disclosure.

When the terminal 121 receives, from the base station 101, V2X transmission resource information of the first carrier, that is, the serving carrier, but does not receive resource pool information for a second carrier which is usable for packet duplication, that is, for a carrier other than the serving carrier, the terminal 121 may perform packet duplication using pre-configured resource pool information as second carrier information.

In operation 1201, the V2X terminal 121 may receive, from the base station 101, a resource pool usable for V2X message transmission.

In operation 1203, the V2X terminal 121 may determine whether to perform data duplication on the basis of a ProSe per packet reliability (PPPR). Whether to perform data duplication may be determined according to the set value of the PPPR, as follows.
1. In the case of the PPPR is set to a Boolean value, when a PPPR value is set to true, the terminal 121 may determine to perform data duplication. Also, in addition to the PPPR, a ProSe per packet priority (PPPP) may be used to perform data duplication. Further mode, a PPPP value may be used for determining the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated may be mapped to LCID 9. For example, PPPP (index 1) + PPPR (True) = LCID 9. As another example, in association with an LCID corresponding to a PPPP value and a PPPR value, LCID mapping information of the packet to be duplicated may be set by the base station 101.
2. In the case in which the PPPR is set to an index value, when a PPPR value is a predetermined value, data duplication is determined to be performed. According to an embodiment, when the PPPR value is a predetermined value, data duplication is determined to be performed. For example, when the PPPR value is 1, data duplication is determined to be performed. According to another embodiment, when the PPPR value is in a predetermined range of values, data duplication is determined to be performed. For example, when the PPPR value is in the range of 1 to 4, data duplication is determined to be performed. Also, a PPPP in addition to the PPPR may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated may be mapped to LCID 9. For example, PPPP (index 1) + PPPR (index 1) = LCID 9. As another example, in association with an LCID corresponding to a PPPP value and a PPPR value, LCID mapping information of the packet to be duplicated may be set by the base station 101.
3. In the case in which the PPPR is set to a class, that is, "high/low", or "high/medium/low", or "duplicate/non-duplicate", for example, when the class value of the PPPR is high, data duplication may be determined to be performed. According to another embodiment, when the class value of the PPPR is "high/medium", data duplication is determined to be performed. According to another embodiment, when the class value of the PPPR is "duplicate", data duplication is determined to be performed. Also, a PPPP in addition to the PPPR may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated may be mapped to LCID 9. For example, PPPP (index 1) + PPPR (high or duplicate) = LCID 9. As another example, in association with an LCID corresponding to a PPPP value and a PPPR value, LCID mapping information of the packet to be duplicated may be set by the base station 101.

In operation 1205, the V2X terminal 121 may identify whether the resource pool received in operation 1201 is allocated as a resource pool usable in the first carrier, that is, the serving carrier. The terminal 121 may identify whether the resource pool received in operation 1201 provides a resource pool usable for transmitting a duplicated packet in the second carrier, that is, a carrier other than the serving carrier,.

When it is identified that the resource pool received in operation 1201 is a resource pool usable in the first carrier, the terminal 121 may not know resource information of the second carrier, that is, a carrier other than the serving carrier, and may select a carrier and a transmission resource for packet duplication from the pre-configured V2X resource in operation 1207. The terminal 121 may select a resource for packet duplication from the pre-configured resource on the basis of a CBR/PPPP.

An RRC message of the pre-configuration information may have the following features, as shown in Table 8.
1. SL-V2X-PreconfigFreqlnfo includes a carrier and a resource pool which a V2X terminal is capable of using outside coverage (out of coverage).
2. v2x-CommPreconfigGeneral includes information associated with a carrier
3. v2x-CommTxPool includes information associated with a resource pool

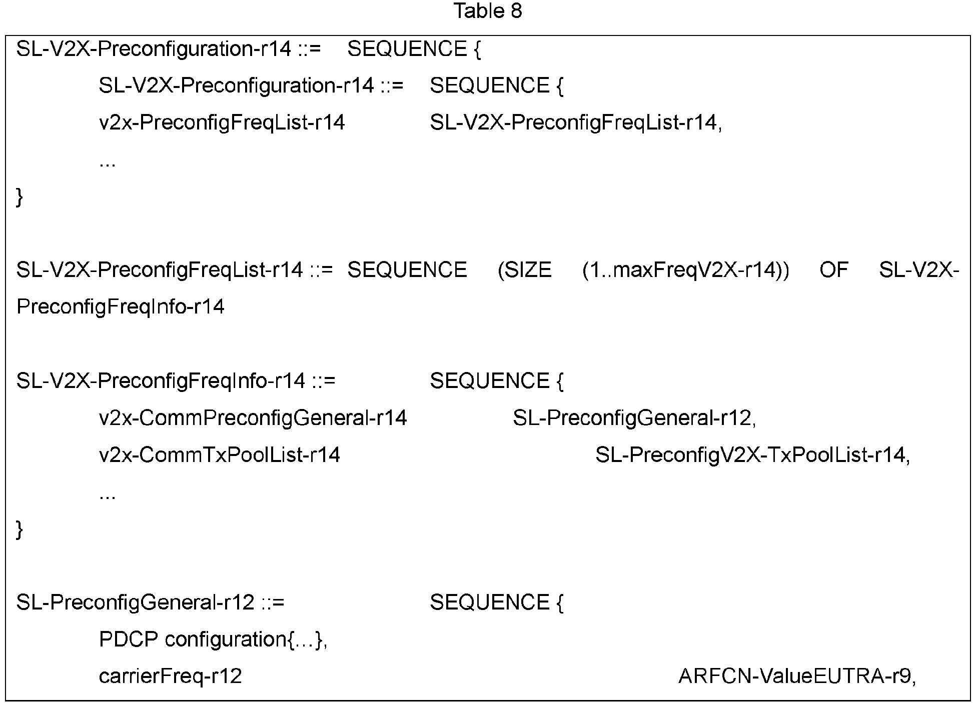

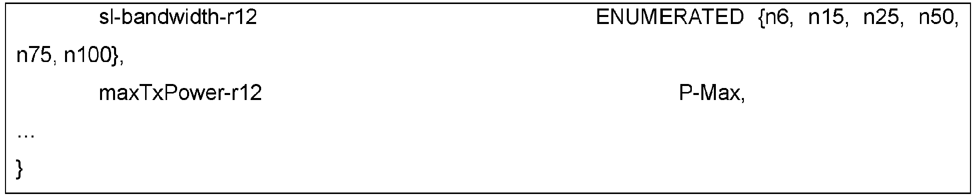

When the resource pool allocated from the base station 101 in operation 1201 includes resource pool information of the first carrier and the second carrier, the terminal 121 may select carriers and resource pools to be used for transmitting the original packet and the duplicated packet, from the resource pool received in operation 1201, in operation 1209.

In operation 1211, the V2X terminal 121 may perform a resource sensing operation that selects a transmission resource in order to transmit a packet, from the resource pools of the first carrier and the second carrier which are selected in operation 1207 and 1209.

In operation 1213, when the operation of selecting a resource in the first carrier and the second carrier is completed, the terminal 121 transmits the original packet via the first carrier and transmits the duplicated packet via the second carrier.

When the terminal 121 obtains the resource for the duplicated packet, it is considered that packet duplication is activated.

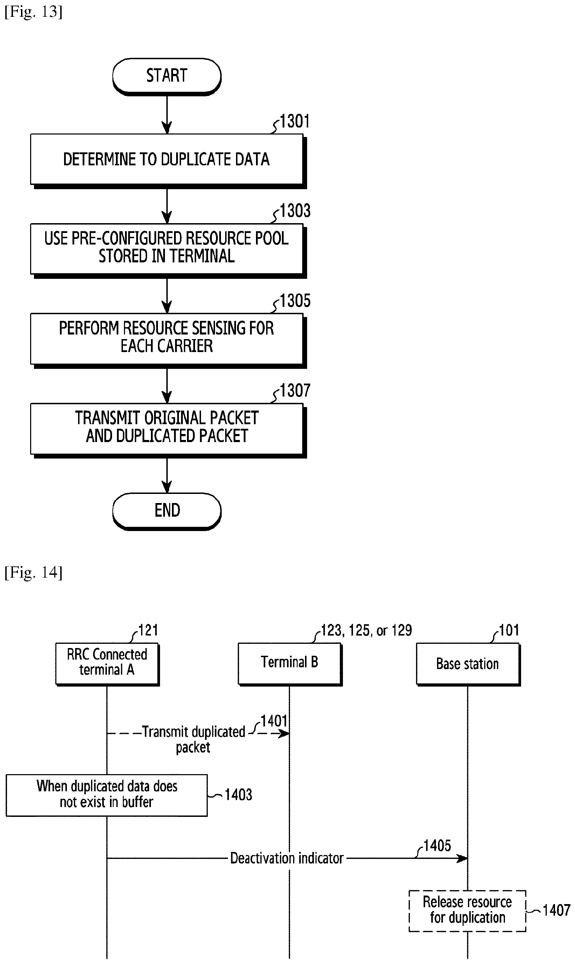

FIG. 13 illustrates a diagram of a process in which a V2X terminal performs packet duplication when V2X terminal does not receive V2X configuration information from a serving carrier, for example, when the V2X terminal is out of coverage, according to various embodiments of the disclosure.

When the V2X terminal 121 is out of the coverage of the base station 101, for example, when the V2X terminal 121 is in the coverage of the serving base station but does not receive V2X resource information from the serving base station, or when the V2X terminal 121 is out of the coverage of the serving base station, or when the V2X terminal 121 temporarily has difficulty in communicating with the serving base station, or the like, the V2X terminal 121 may transmit a packet using pre-configured resource information in order to transmit an original packet and a packet to be duplicated.

In operation 1301, while the V2X terminal 121 transmits and receives a V2X packet outside the coverage of the base station 101, the V2X terminal 121 may determine whether to perform packet duplication. Particularly, whether to perform packet duplication may be determined on the basis of the following information.
1. In the case of the PPPR is set to a Boolean value, when a PPPR value is set to true, the terminal 121 may determine to perform data duplication. Also, in addition to the PPPR, a ProSe per packet priority (PPPP) may be used to perform data duplication. Further mode, a PPPP value may be used for determining the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated may be mapped to LCID 9. For example, PPPP (index 1) + PPPR (True) = LCID 9. As another example, in association with an LCID corresponding to a PPPP value and a PPPR value, LCID mapping information of the packet to be duplicated may be pre-configured in the V2X terminal 121.
2. In the case in which the PPPR is set to an index value, when the a PPPR value is a predetermined value, data duplication is determined to be performed. According to an embodiment, when the PPPR value is a predetermined value, data duplication is determined to be performed. For example, when the PPPR value is 1, data duplication is determined to be performed. According to an embodiment, when the PPPR value is in a predetermined range of values, data duplication is determined to be performed. For example, when the PPPR value is in the range of 1 to 4, data duplication is determined to be performed. Also, a PPPP in addition to the PPPR may be used to perform data duplication is determined, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated may be mapped to LCID 9. For example, PPPP (index 1) + PPPR (index 1) = LCID 9. As another example, in association with an LCID corresponding to a PPPP value and a PPPR value, LCID mapping information of the packet to be duplicated may be pre-configured in the V2X terminal 121.
3. In the case in which the PPPR is set to a class, that is, "high/low", or "high/medium/low", or "duplicate/non-duplicate", for example, when the class value of the PPPR is "high", data duplication may be determined to be performed. According to an embodiment, when the class value of the PPPR is "high/medium", data duplication is determined to be performed. According to an embodiment, when the class value of the PPPR is "duplicate", data duplication is determined to be performed. Also, a PPPP in addition to the PPPR may be used to perform data duplication, and a PPPP value may be used to determine the LCID of a packet to be duplicated. The LCID of the packet to be duplicated may be set in advance in association with the LCID corresponding to a PPPP value and a PPPR value. For example, when PPPP index 1 is mapped to LCID 1, the packet to be duplicated may be mapped to LCID 9. For example, PPPP (index 1) + PPPR (high or duplicate) = LCID 9. As another example, in association with an LCID corresponding to a PPPP value and a PPPR value, LCID mapping information of the packet to be duplicated may be pre-configured in the V2X terminal 121.

In operation 1303, the V2X terminal 121 may select a first carrier used for transmitting the original packet, and may select a second carrier used for transmitting the duplicated packet, using the pre-configured resource information. In this instance, the terminal 121 selects the first carrier and the second carrier from the pre-configured resource, on the basis of a CBR/PPPP.

A pre-configured RRC message may have the following features, as shown in Table 9.
1. SL-V2X-PreconfigFreqlnfo includes a carrier and a resource pool which a V2X terminal is capable of using outside coverage (out of coverage).
2. v2x-CommPreconfigGeneral includes information associated with a carrier
3. v2x-CommTxPool includes information associated with a resource pool

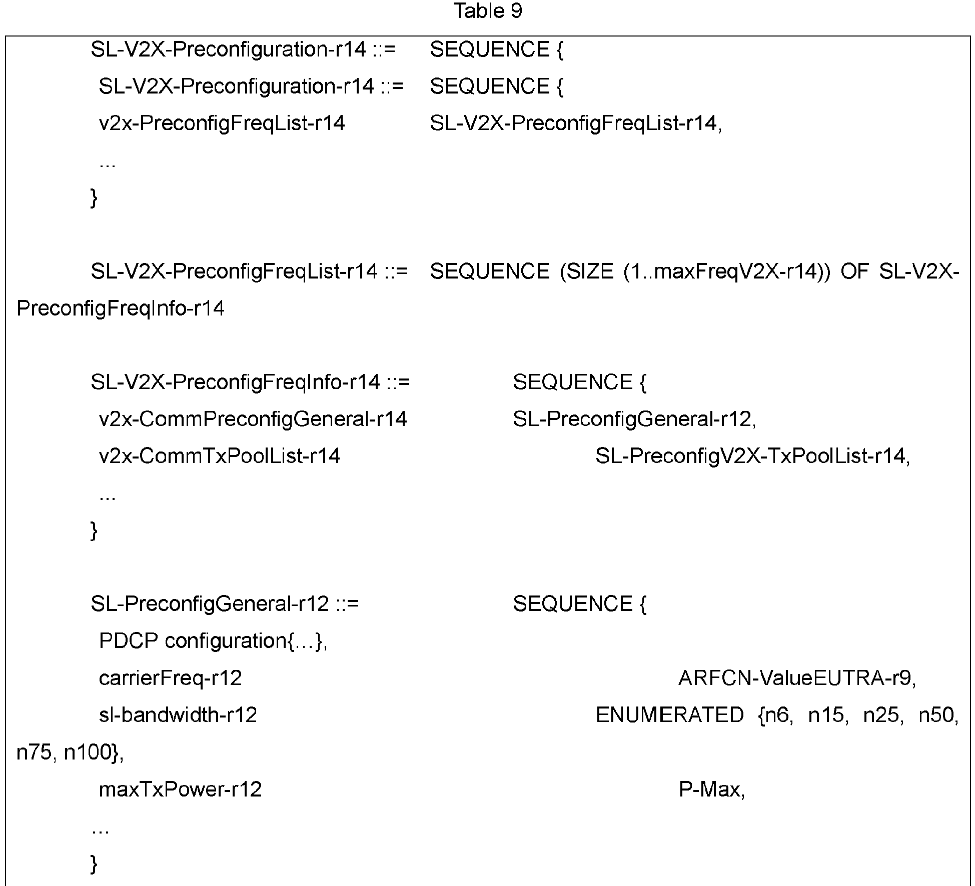

In operation 1305, the V2X terminal 121 may perform a resource sensing operation in the first carrier and a transmission resource pool in order to transmit the original packet, and may perform a resource sensing operation in the second carrier and a transmission resource pool in order to transmit the duplicated packet.

In operation 1307, when the V2X terminal 121 selects a transmission resource by completing the resource sensing operation performed in the first carrier and the transmission resource pool in order to transmit the original packet, and in the second carrier and the transmission resource pool in order to transmit the duplicated packet, the V2X terminal 121 may transmit the original packet via the first carrier and may transmit the duplicated packet via the second carrier.

When the terminal 121 obtains the resource for the duplicated packet, it is considered that packet duplication is activated.

FIG. 14 illustrates a diagram of a process when a packet to be duplicated and transmitted by an RRC connected V2X terminal does not exist according to various embodiments of the disclosure.

According to FIG. 14, in the case of the V2X terminal 121 of an RRC connected mode 3 or the V2X terminal 121 of an RRC connected mode 4 which performs V2X packet duplication, when a packet to be transmitted does not exist in a packet buffer of service that uses packet duplication or in a packet buffer corresponding to an LCID where packet duplication is performed, the terminal 121 may transmit a duplication deactivation indicator to the base station 101 in order to deactivate packet duplication.

In operation 1401, the V2X terminal 121 may activate packet duplication according to the embodiments of FIGS. 5 to 10, and may transmit an original packet and a duplicated packet to other V2X terminals 123, 125, or 129.

In operation 1403, the V2X terminal 121 determines whether a packet to be transmitted exists or not in a packet buffer of service that uses packet duplication or a packet buffer corresponding to an LCID where packet duplication is performed. When it is determined that a packet to be transmitted does not exist any longer in the packet buffer, the V2X terminal 121 may proceed with operation 1405.

In operation 1405, when data that the V2X terminal 121 needs to duplicate and to transmit does not exist, the V2X terminal 121 may transmit a packet duplication deactivation indicator to the base station 101 in order to indicate that packet duplication is not used any longer.

Information that may be included in the duplication deactivation indicator may include a simple indicator (a duplication deactivation indicator) and resource information that the V2X terminal has used for the duplicated packet, for example, at least one of a resource pool ID and a carrier ID.

In operation 1407, when the base station 101 receives a duplication deactivation indicator message from the V2X terminal 121, the base station 101 may determine that packet duplication resource allocated to the terminal 121 needs to be released. When the base station 101 determines that resource pools for duplication allocated to V2X terminals are not used any longer, for example, when all V2X terminals to which resource pools are allocated transmit deactivation indicators, the base station 101 may use the resources pools that were allocated for packet duplication as resource pools for other purposes.

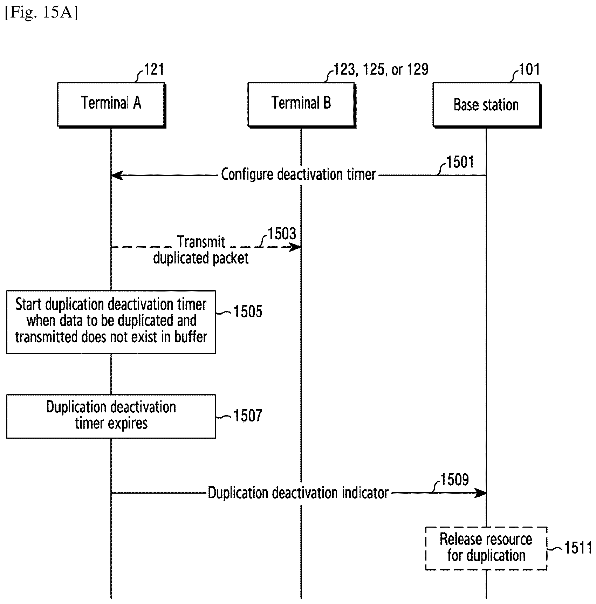

FIG. 15A illustrates a diagram of a process when a packet to be duplicated and transmitted by an RRC connected V2X terminal does not exist according to various embodiments of the disclosure.

According to FIG. 15A, in the case of the V2X terminal 121 of an RRC connected mode 3 or the V2X terminal 121 of an RRC connected mode 4 which performs V2X packet duplication, when a packet to be transmitted does not exist in a packet buffer of service that uses packet duplication or in a packet buffer corresponding to an LCID where packet duplication is performed, the terminal 121 may start a duplication deactivation timer for packet duplication deactivation, and may deactivate packet duplication. When the duplication deactivation timer expires, the V2X terminal 121 may transmit a duplication deactivation indicator to the base station 101, optionally.

In operation 1501, the base station 101 may configure a duplication deactivation timer to be used for deactivating packet duplication, for the V2X terminal 121 that is to perform packet duplication. The deactivation timer may be configured via RRC-dedicated signaling or system information signaling, or may be pre-configured.

In operation 1503, the V2X terminal 121 may activate packet duplication according to the embodiments of FIGS. 5 to 10, and may transmit an original packet and a duplicated packet to other V2X terminals 123, 125, or 129.

In operation 1505, the V2X terminal 121 determines whether a packet to be transmitted exists or not in a packet buffer of service that uses packet duplication or a packet buffer corresponding to an LCID where packet duplication is performed. When it is determined that a packet to be transmitted does not exist in the packet buffer, the V2X terminal 121 may start the duplication deactivation timer. When it is identified that a duplicated packet based on data stored in the buffer exists before the duplication deactivation timer expires, the deactivation timer may be initiated.

In operation 1507, when the duplication deactivation timer expires, the V2X terminal 121 may understand the same as the meaning that packet duplication is deactivated. When the duplication deactivation timer expires, the terminal may perform operation 1509, optionally.

In operation 1509, the V2X terminal 121 may transmit a duplication deactivation indicator to the base station in order to indicate that packet duplication is not used any longer. The duplication deactivation indicator of operation 1509 may be used when the base station 101 identifies that the terminal 121 does not need a resource for packet duplication and transmission any longer. The base station may operate a duplication deactivation timer, but a duplication deactivation indicator may be used as a supplementary means when the terminal does not accurately recognize the status of a resource pool for packet duplication (e.g., the terminal 121 in RRC-connected mode 4 may autonomously select and use a resource for packet duplication and transmission).

Information that may be included in the duplication deactivation indicator may include a simple indicator (a duplication deactivation indicator) and resource information that the V2X terminal has used for the duplicated packet, for example, at least one of a resource pool ID and a carrier ID.

In operation 1511, when the base station 101 receives a duplication deactivation indicator message from the V2X terminal 121, the base station 101 may determine that packet duplication resource allocated to the terminal 121 needs to be released. When the base station 101 recognizes that the resource pools for packet duplication allocated to V2X terminals are not used, for example, when all terminals to which resource pools for packet duplication are allocated transmit duplication deactivation indicators, or when duplication deactivation timers expire for the resources of all terminals to which resource pools for packet duplication are allocated, the base station 101 may use the resources pools allocated for packet duplication as resource pools for other purposes.

When a terminal of RRC connected mode 3 uses a duplication deactivation timer according to FIG. 15A, the terminal may performs operations 1501 to 1507, and may optionally perform operation 1509. Whether to perform operation 1509 of FIG. 15A may be indicated by setting "duplication deactivation indicator enable" in operation 1501. For example, when the "duplication deactivation enable" is set to false, the V2X terminal 121 may not perform operation 1509, that is, transmitting a duplication deactivation indicator, after the deactivation timer expires.

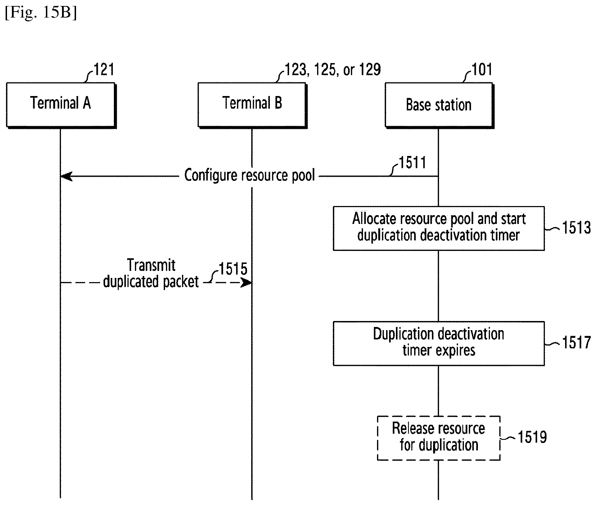

FIG. 15B illustrates a diagram of a process in which a base station uses a duplication deactivation timer according to various embodiments of the disclosure.

FIG. 15B describes an embodiment in which the base station 101 allocates, to a terminal of RRC connected mode 3, a scheduling pool and resource to be used for packet duplication and transmission, and operates a duplication deactivation indicator for the resource.

In operation 1511, the base station 101 may allocate a scheduling pool resource for V2X packet transmission to a terminal of an RRC connected mode on the basis of the embodiments of FIGS. 5 to 10.

In operation 1513, at a point in time at which the base station 101 allocates the scheduling pool to the V2X terminal A 121, for example, at a point in time at which the base station 101 transmits DCI 5A, the base station 101 may start a duplication deactivation timer. A duplication deactivation timer operation time may be determined using sidelink BSR information. For example, the duplication deactivation timer operation time may be set on the basis of the amount of buffer transferred via the sidelink BSR. As another example, the duplication deactivation timer operation time may be determined using V2X service type information of V2X service to which the terminal 121 is to apply duplicated packet transmission. The V2X service type information may be determined on the basis of SidelinkUEInformation.

In operation 1515, the V2X terminal 121 of RRC connected mode 3 may transmit an original packet and a duplicated packet to the neighboring V2X terminals 123, 125, or 129 using the scheduling pool resource allocated by the base station 101. The terminal 121 may operate according to the embodiments of FIGS. 5 to 10.

In operation 1517, the base station 101 may identify whether the duplication deactivation timer expires.

In operation 1519, when the duplication deactivation timer expires, the base station may determine to deactivate the scheduling pool resource allocated to the V2X terminal 121 of RRC connected mode 3 for packet duplication.

According to an embodiment, when the duplication deactivation timer expires, the base station 101 may wait until a duplication deactivation indicator is received from the V2X terminal 121, and may determine to deactivate the scheduling pool resource allocated to the terminal 121 for packet duplication.

Subsequently, the base station 101 may use the resource pool allocated for packet duplication as a resource pool for another purpose.

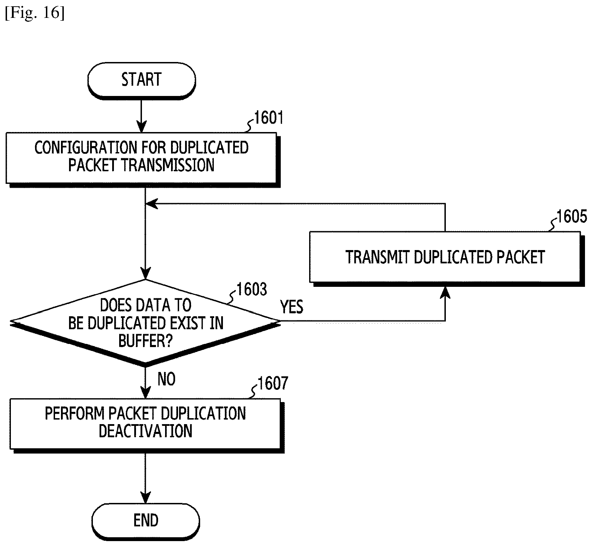

FIG. 16 illustrates a diagram of a process when a packet to be duplicated and transmitted by an RRC idle mode terminal or a terminal outside coverage of a base station does not exist according to various embodiments of the disclosure.

FIG. 16 illustrates a diagram of an operation of deactivating packet duplication when the V2X terminal 121 of an RRC idle mode or a V2X terminal that uses pre-configuration information, for example, an out-of-coverage terminal, does not have a packet to transmit in a packet buffer of service that uses packet duplication or in a packet buffer corresponding to an LCID where packet duplication is performed.

In operation 1601, a resource pool for transmitting a duplicated packet may be configured for the terminal 121 of an RRC idle mode, via system information transmitted from the base station 101. Alternatively, when a resource pool for transmitting the duplicated packet is not configured by the base station 101, the out-of-coverage terminal may configure a resource pool for transmitting the duplicated packet using pre-configuration information.

In operation 1603, the V2X terminal 121 or out-of-coverage terminal determines whether a packet to be transmitted exists or not in a packet buffer of service that uses packet duplication or a packet buffer corresponding to an LCID where packet duplication is performed. When data that needs to be duplicated and transmitted exists in a transmission buffer, the V2X terminal 121 or the out-of-coverage terminal may perform operation 1605. When it is determined that a packet to be transmitted does not exist in the transmission buffer, the V2X terminal 121 or the out-of-coverage terminal may perform operation 1607.

In operation 1605, the V2X terminal 121 or the out-of-coverage terminal may transmit a duplicated packet using the resource pool configured in operation 1601.

In operation 1607, the V2X terminal 121 or the out-of-coverage terminal deactivates packet duplication, and may deactivate the resource, resource pool, carrier information, and the like which are selected for duplicated packet transmission. According to an embodiment, the V2X terminal 121 or the out-of-coverage terminal may initiate the resource pool and carrier information for duplicated packet transmission. When packet duplication needs to be activated, for example, when service that uses packet duplication starts, the resource pool transmission carrier selecting operation may be performed again.

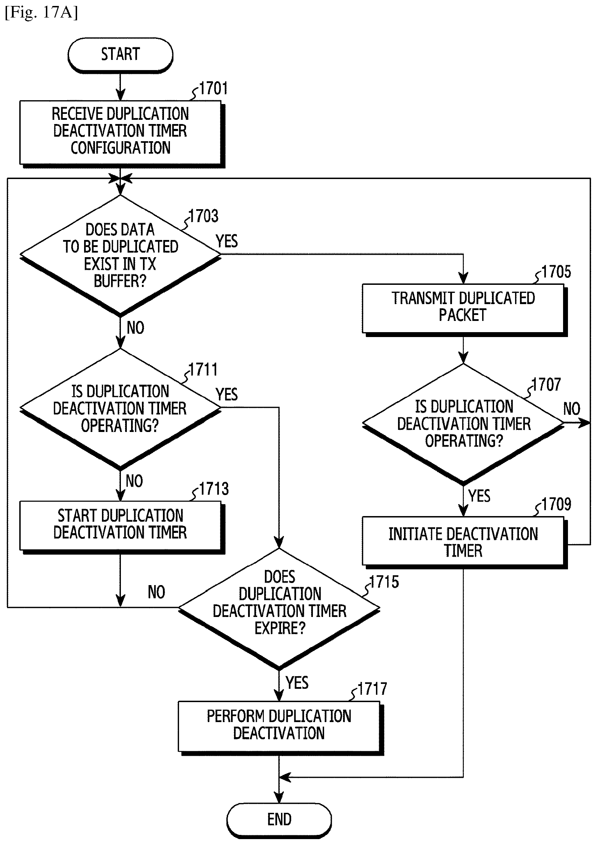

FIG. 17A illustrates a diagram of a process when a packet to be duplicated and transmitted by an RRC idle mode terminal or a terminal outside coverage of a base station does not exist according to various embodiments of the disclosure.

FIG. 17A illustrates a diagram of an operation of deactivating packet duplication when the V2X terminal 121 of an RRC idle mode or a V2X terminal that uses pre-configuration information, for example, an out-of-coverage terminal does not have a packet to transmit in a packet buffer of service that uses packet duplication or in a packet buffer corresponding to an LCID where packet duplication is performed. The terminal 121 or the out-of-coverage terminal may operate a duplication deactivation timer at a point in time at which a packet to be duplicated and transmitted does not exist in a transmission buffer, and may deactivate packet duplication.

In operation 1701, a resource pool for transmitting a duplicated packet may be configured for the terminal 121 in an RRC idle mode, via system information transmitted from the base station 101. Alternatively, when a resource pool for transmitting the duplicated packet is not configured for the out-of-coverage terminal by the base station 101, the terminal 121 may configure a resource pool for transmitting the duplicated packet using pre-configuration information. The V2X terminal 121 or the out-of-coverage terminal may receive a duplication deactivation timer configuration which may be used for deactivating packet duplication. The duplication deactivation timer of FIG. 17A may be transmitted via system information signaling transmitted by the base station 101. According to an embodiment, the duplication deactivation timer may be pre-configured.

In operation 1703, the V2X terminal 121 or the out-of-coverage terminal identifies whether a packet to be transmitted exists in a transmission buffer. When data that needs to be duplicated and transmitted exists in the transmission buffer, the V2X terminal 121 or the out-of-coverage terminal may perform operation 1705. When data that needs to be duplicated and transmitted does not exist in the transmission buffer, the V2X terminal 121 or the out-of-coverage terminal may perform operation 1711.

In operation 1705, the V2X terminal 121 or the out-of-coverage terminal may perform packet duplication using the resource pool configured in operation 1701. That is, the V2X terminal 121 or the out-of-coverage terminal may perform original packet transmission and may perform duplicated packet transmission using the resource pool for the duplicated packet which is configured in operation 1701.

In operation 1707, the V2X terminal 121 or the out-of-coverage terminal transmits the duplicated packet, and determines whether the duplication deactivation timer of the terminal 121 is operating. When the duplication deactivation timer is operating, the V2X terminal 121 or the out-of-coverage terminal may perform operation 1709. When the duplication deactivation timer does not operate, the V2X terminal 121 or the out-of-coverage terminal may perform operation 1703.

In operation 1709, the terminal 121 or the out-of-coverage terminal may initiate the duplication deactivation timer, and may perform operation 1703.

In operation 1711, the V2X terminal 121 or the out-of-coverage terminal identifies whether the duplication deactivation timer is operating. When the duplication deactivation timer does not operate, the V2X terminal 121 or the out-of-coverage terminal may perform operation 1713. When the duplication deactivation timer does not operate, the V2X terminal 121 or the out-of-coverage terminal may perform operation 1715.

In operation 1713, the V2X terminal 121 or the out-of-coverage terminal may operate the duplication deactivation timer, and may perform operation 1703.

In operation 1715, the V2X terminal 121 or the out-of-coverage terminal identifies whether the duplication deactivation timer which has been operating expires. When the duplication deactivation timer expires, the V2X terminal 121 or the out-of-coverage terminal may perform operation 1717. When the duplication deactivation timer does not expire, the V2X terminal 121 or the out-of-coverage terminal may perform operation 1703.

In operation 1717, the V2X terminal 121 or the out-of-coverage terminal deactivates packet duplication, and may deactivate the resource, resource pool, carrier information, and the like which are selected for duplicated packet transmission. According to an embodiment, the V2X terminal 121 or the out-of-coverage terminal may initiate the resource pool and carrier information for duplicated packet transmission. When packet duplication needs to be activated, for example, when service that uses packet duplication starts, the resource pool transmission carrier selecting operation may be performed again.

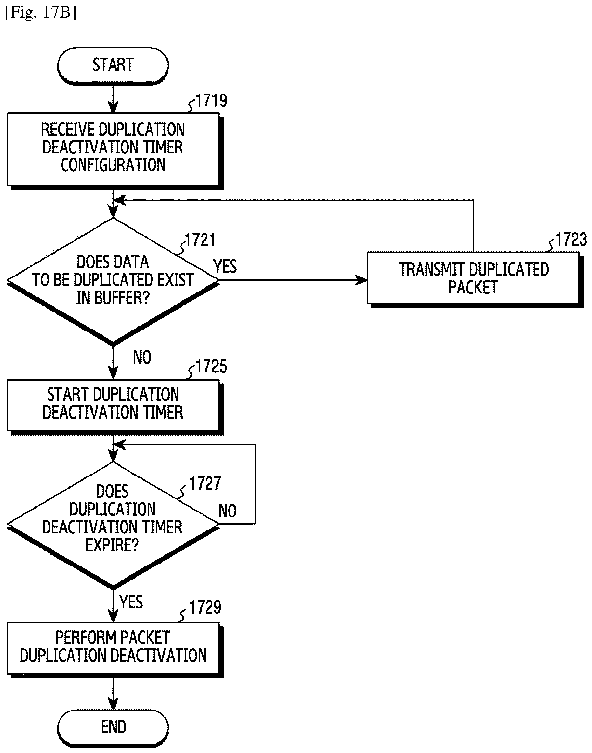

FIG. 17B illustrates a diagram of a process in which a V2X terminal in an RRC idle mode or a V2X terminal that uses pre-configuration information, for example, an out-of-coverage terminal, deactivates packet duplication using a duplication deactivation timer according to various embodiments of the disclosure.

In operation 1719, a resource pool for transmitting a duplicated packet may be configured for the terminal 121 in an RRC idle mode, via system information transmitted from the base station 101. Alternatively, when a resource pool for transmitting the duplicated packet is not configured by the base station 101, the out-of-coverage terminal may configure a resource pool for transmitting the duplication packet using pre-configuration information. The V2X terminal 121 or the out-of-coverage terminal may receive a duplication deactivation timer configuration which may be used for deactivating packet duplication. The duplication deactivation timer of FIG. 17B may be transmitted via system information signaling transmitted by the base station 101. According to an embodiment, the duplication deactivation timer may be pre-configured.

In operation 1721, the V2X terminal 121 or the out-of-coverage terminal identifies whether a packet to be transmitted exists in a transmission buffer. When data that needs to be duplicated and transmitted exists in the transmission buffer, the V2X terminal 121 or the out-of-coverage terminal may perform operation 1723. When data that needs to be duplicated and transmitted does not exist in the transmission buffer, the V2X terminal 121 or the out-of-coverage terminal may perform operation 1725.

In operation 1723, the V2X terminal 121 or the out-of-coverage terminal may perform packet duplication using the resource pool configured in operation 1719. That is, the V2X terminal 121 or the out-of-coverage terminal may perform original packet transmission and may perform duplication packet transmission using the resource pool for the duplicated packet which is configured in operation 1719.

In operation 1725, the V2X terminal 121 or the out-of-coverage terminal starts operating the duplication deactivation timer.

In operation 1727, the V2X terminal 121 or the out-of-coverage terminal identifies whether the duplication deactivation timer expires. When the duplication deactivation timer expires, the V2X terminal 121 or the out-of-coverage terminal may perform operation 1729.

In operation 1729, the V2X terminal 121 or the out-of-coverage terminal deactivates packet duplication, and may deactivate the resource, resource pool, carrier information, and the like which are selected for duplicated packet transmission. According to an embodiment, the V2X terminal or the out-of-coverage terminal may initiate the resource pool and carrier information for duplicated packet transmission. When packet duplication needs to be activated, for example, when service that uses packet duplication starts, the resource pool transmission carrier selecting operation may be performed again.

As illustrated in FIG. 1, the V2X terminals 121, 123, 125, 127, and 129 may use sidelink resources so as to transmit V2X data to other V2X terminals. For example, in the case of an LTE system, a resource corresponding to an SL-sidelink shared channel (SCH) may be used as a sidelink resource. According to various embodiments of the disclosure, the V2X transmission terminal 121 may inform V2X reception terminals 123, 125, and 129 of whether corresponding transmission is duplicated transmission of V2X data. A signaling indicating whether the transmission is duplicated transmission of V2X data may include, for example, a MAC sub-header for a sidelink which is transmitted using a sidelink resource, or a MAC control element (MAC CE) for a sidelink.

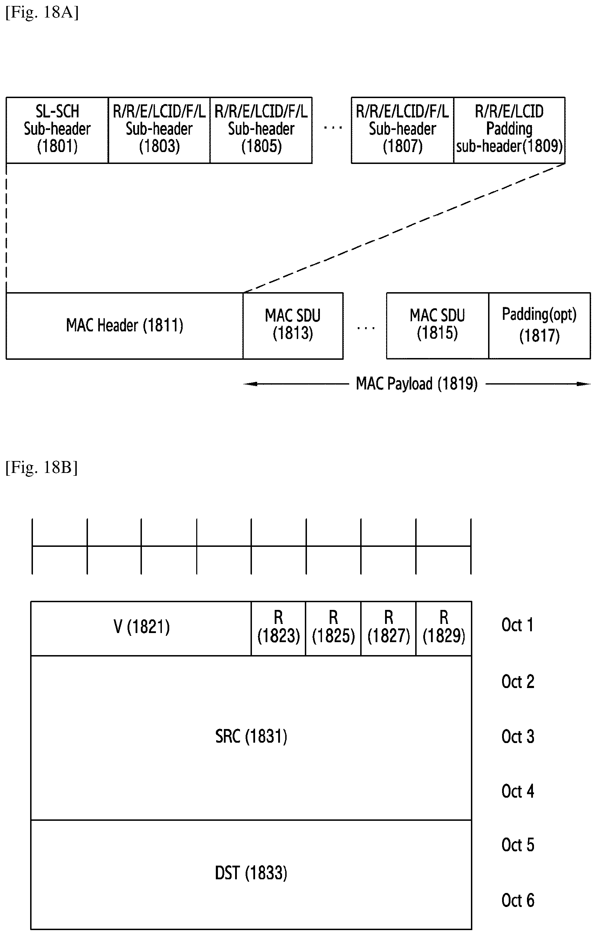

Subsequently, with reference to FIGS. 18 to 22, descriptions are provided in association with a process of reporting whether corresponding transmission is duplicated transmission of V2X data using a MAC sub-header or a MAC CE according to various embodiments of the disclosure.

FIGS. 18A and 18B illustrate diagrams of examples of the structure of a V2X MAC PDU of an LTE system according to various embodiments of the disclosure. Particularly,

FIG. 18A illustrates an example of a V2X MAC PDU including a MAC header 1811, MAC SDUs 1813 and 1815, and a padding 1817 according to various embodiments of the disclosure. FIG. 18B illustrates an example of an SL-SCH MAC sub-header according to various embodiments of the disclosure.

A MAC sub-header for a sidelink, for example, an SL-SCH sub-header 1801, is one of the sub-headers 1801, 1803, 1805, 1807, and 1809 of a V2X MAC PDU. When V2X data is carried, a V field 1821, an SRC field 1831, a DST field 1833, R fields 1823, 1825, 1827, and 1829 may be included.

The version (V) field 1821 indicates the version of a MAC PDU format. For example, when the V field 1821 is 0011, it indicates that the MAC PDU is a broadcast MAC PDU for V2X.

The source (SRC) field 1831 indicates a source layer-2 ID. This corresponds to the TX identifier of a transmitter that transmits V2X data, and the value of the SRC field may be set to an identifier that the transmitter generates, for example, ProSe UE ID.

The destination (DST) field 1833 indicates a destination layer-2 ID. This corresponds to the RX identifier of a receiver that receives V2X data, and the value of the DST field may be set to a provider service identifier (PSID) of an application that delivers V2X data from a higher layer, or ITS application identifier (ITS-AIDs). The value of the DST field may be used for indicating V2X service.

The reserved (R) fields 1823, 1825, 1827, and 1829 are reserved bits, and may be set to 0.

The MAC PDU sub-header may include E, LCID, F, L, and R fields, and the last MAC PDU sub-header or a padding MAC PDU sub-header may include E, LCID, and R fields.

The extension (E) field may indicate whether a MAC PDU sub-header including at least R/R/E/LCID fields or R/R/E/LCID/F/L fields exists after the current MAC PDU sub-header. When the value of E field is set to 0, this indicates that a MAC PDU sub-header does not exist any longer, and a MAC SDU follows or a padding exists in the last MAC SDU. When the value of the E field is set to 1, this indicates that another MAC PDU sub-header exists.

The logical channel identifier (LCID) field indicates the identifier of a logical channel corresponding to a MAC SDU, a MAC CE, or a padding.

The format (F) field may indicate the size of the length (L) field. For example, in the LTE system, when the size of an MAC SDU is less than 128 bytes, the value of the F field is set to 0. Otherwise, the value of the F field is set to 1.

The length (L) field indicates length information of a MAC SDU or a MAC CE.

The reserved (R) field may indicate a reserved bit, and may be set to 0.

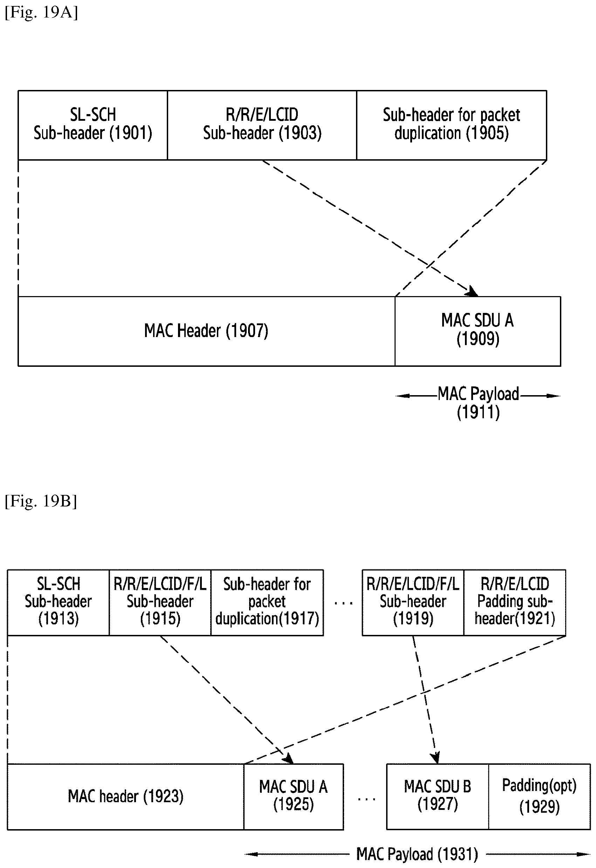

FIGS. 19A and 19B illustrate diagrams of processes of utilizing a MAC PDU subheader in order to report duplicated information of V2X data according to various embodiments of the disclosure.

According to various embodiments of the disclosure, as shown in the embodiments of FIGS. 19A and 19B, a V2X transmission end may inform a V2X reception end of whether a MAC SDU is duplicated and information associated with an LCID where a duplicated packet is used, by using at least one "R" field of the R/R/E/LCID sub-headers or R/R/E/LCID/F/L sub-headers, as a duplication information indicator, as shown in the embodiments of FIGS. 19A and 19B.

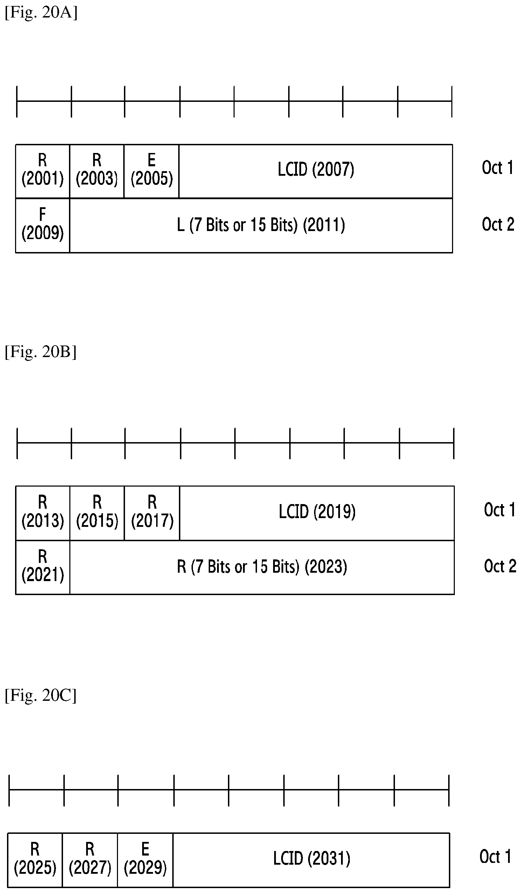

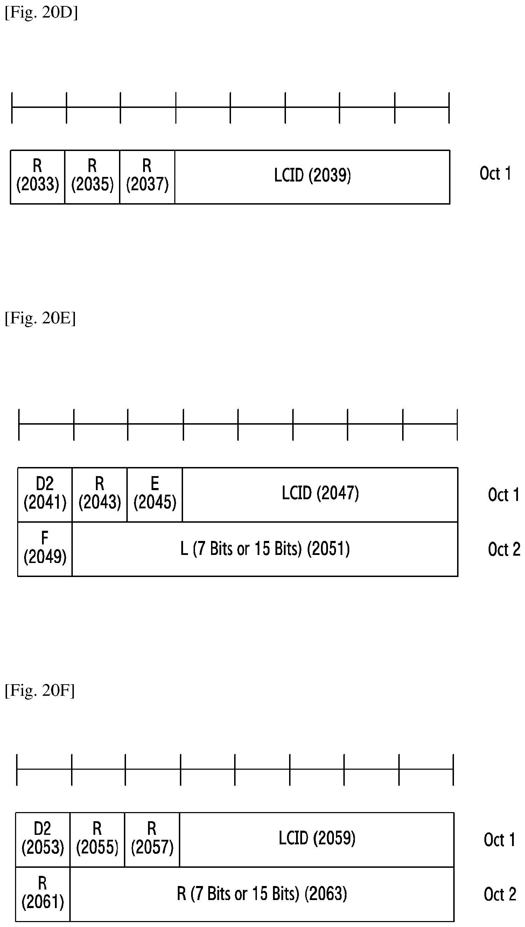

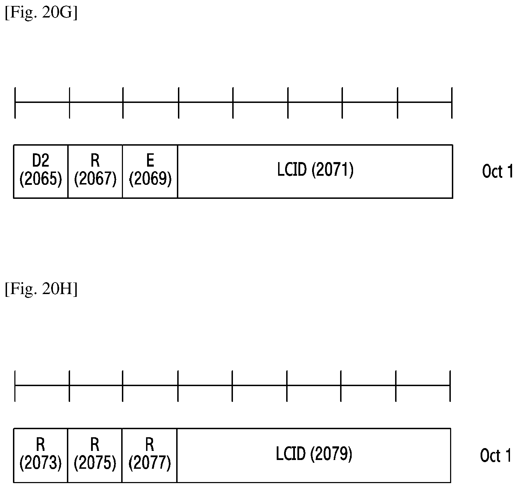

Referring to FIG. 19A, a transmitter includes a sub-header 1905 for packet duplication (sub-header for duplication) after a MAC PDU sub-header 1903 corresponding to a MAC SDU A 1909, so as to transmit LCID information of a duplicated packet corresponding to the MAC SDU A 1909 to a receiver. When the sub-header 1905 for packet duplication is included, at least one "R" field of the R/R/E/LCID fields of the MAC PDU sub-header 1903 may be used as a duplication information indicator. According to an embodiment, the duplication information indicator may be included using the format of D/R/E/LCID or the format of R/D/E/LCID of FIG. 19A. For example, when the D field is set to 1, the LCID information of the duplicated data exists after the D/R/E/LCID sub-header or the R/D/E/LCID sub-header. The sub-header 1905 for packet duplication exists after the D/R/E/LCID sub-header or the R/D/E/LCID sub-header. When the D field is 0, this indicates that the LCID information of the duplicated data does not exist. In this instance, a MAC SDU exists after the D/R/E/LCID or R/D/E/LCID sub-header. Various embodiments of the fields of the sub-header 1905 for packet duplication, which is a MAC PDU sub-header informing of the LCID information of the duplicated packet, will be described with reference to FIG. 20.

Referring to FIG. 19B, even when many MAC SDUs 1925 and 1927 are included in a single MAC PDU, a transmitter may transmit, to a receiver, LCID information of duplicated packets corresponding to one or more MAC SDUs 1925 and 1927 included in the MAC PDU. A sub-header 1917 for packet duplication may be included after the MAC PDU sub-header 1915 corresponding to the MAC SDU A 1925. When the sub-header 1917 for packet duplication is included, at least one "R" field of the fields (R/R/E/LCID/F/L) of the MAC PDU sub-header 1915 may be used as a duplication information indicator. For example, the second "R" field of FIG. 19B may be used as a duplication information indicator (duplication field, "D" field). When the value of the D field is set to 0, this indicates that a sub-header for packet duplication is not included. When the value of the D field is set to 1, a sub-header for packet duplication is included. The sub-header 1917 for packet duplication may basically include LCID information of a duplicated packet. The format of the sub-header 1917 of packet duplication will be described with reference to FIG. 20.

The sub-header 1917 for packet duplication and the duplicated packet may be transmitted via the same carrier, that is, a carrier that transmits the duplicated packet, or via different carriers, respectively, that is, a carrier that transmits an original packet and a carrier that transmits the duplicated packet.

FIG. 20A illustrates a diagram of a sub-header for packet duplication which includes R/R/E/LCID/F/L fields according to various embodiments of the disclosure.

Referring to FIG. 20A, the values of an E field 2005, an F field 2009, and an L field 2011 of the sub-header for packet duplication may be set to be the same as the values of E, F, and L fields of a MAC PDU sub-header of a MAC SDU. In this instance, a reception terminal may disregard the values of the E field 2005, the F field 2009, and the L field 2011, or may recognize that the values are the same as the set values in the MAC PDU sub-header of the MAC SDU, and thus, may obtain LCID information of a duplicated packet. Reserved (R) fields 2001 and 2003 may indicate reserved bits, and may be set to 0.

In FIG. 20A, the value of an LCID field 2007 may be set to one of the values for "identity of the logical channel for duplication" in Table 10. Table 10 shows an embodiment of a logical channel ID.

**Table 10**

| Index | LCID values |
|---|---|
| 00000 | Reserved |
| 00001-01010 | Identity of the logical channel |
| 01011-10100 | Identity of the logical channel for duplication |
| 10101-11011 | Reserved |
| 11100 | PC5-S messages that are not protected |
| 11101 | PC5-S messages "Direct Security Mode Command" and "Direct Security Mode Complete" |
| 11110 | Other PC5-S messages that are protected |
| 11111 | padding |

The "identity of the logical channel" indicates the LCID field of a packet to be duplicated. The "identity of the logical channel for duplication" indicates the LCID field of a duplicated packet. The "identity of the logical channel" and the "identity of the logical channel for duplication" may use the same number of LCID values, whereby the values may be one to one mapped. According to an embodiment, a smaller number of duplication LCID values than an actually supportable number of LCID values may be used such that the "identity of the logical channel for duplication" is one to one mapped to a part of the "identity of the logical channel", for example, 1 to 5 LCIDs.

According to an embodiment, the value of the LCID field 2007 may be set to one of the values for "identity of the logical channel" of Table 11. Table 11 shows an embodiment of a logical channel ID.

**Table 11**

| Index | LCID values |
|---|---|
| 00000 | Reserved |
| 00001-01010 | Identity of the logical channel |
| 01011-11011 | Reserved |
| 11100 | PC5-S messages that are not protected |
| 11101 | PC5-S messages "Direct Security Mode Command" and "Direct Security Mode Complete" |
| 11110 | Other PC5-S messages that are protected |
| 11111 | padding |

The "identity of the logical channel" indicates the LCID field of a packet to be duplicated, and the LCID field of a duplicated packet. That is, the same LCID value may be used.

FIG. 20B illustrates a diagram of a sub-header for packet duplication including R/R/R/LCID/R/R fields according to various embodiments of the disclosure. Referring to FIG. 20B, a sub-header including the LCID information of a duplicated packet may be configured to have R/R/R/LCID/R/R fields, which are in the size same as those of a MAC PDU sub-header corresponding to a MAC SDU. The value of an LCID field 2019 is based on the embodiments of Table 10 or Table 11.

FIG. 20C illustrates a diagram of a sub-header for packet duplication which includes R/R/E/LCID fields according to various embodiments of the disclosure. Referring to FIG. 20C, the sub-header including the LCID information of a duplicated packet may include the following fields. Reserved (R) fields 2025 and 2027 may indicate reserved bits, and may be set to 0. An extension field (E) 2029 may indicate whether a MAC PDU sub-header including at least R/R/E/LCID fields exists after the current MAC PDU sub-header. The value of an LCID field 2031 is based on the embodiments of Table 10 or Table 11.

FIG. 20D illustrates a diagram of a sub-header for packet duplication which includes R/R/R/LCID fields according to various embodiments of the disclosure. Referring to FIG. 20D, the sub-header including the LCID information of a duplicated packet may include the following fields. Reserved (R) fields 2033, 2035, 2037 may indicate reserved bits, and may be set to 0. The value of an LCID field 2039 is based on the embodiments of Table 10 or Table 11.

FIG. 20E is a diagram illustrating a sub-header for packet duplication which includes D2/R/E/LCID/F/L or R/D2/E/LCID/F/L fields according to various embodiments of the disclosure.

A D2 field 2041 may be used for indicating that a corresponding sub-header is a sub-header for packet duplication. That is, D2 field 2041 indicates a sub-header including the LCID information of a duplicated packet. Referring to FIG. 20E, the values of an E field 2045, an F field 2049, and an L field 2051 may be set to be the same as the values of the E field, the F field, the L field of a MAC PDU sub-header corresponding to a MAC SDU. In this instance, a reception terminal may disregard the values of the E field, the F field, and the L field, or may recognize that the values are the same as the set values in the MAC PDU sub-header of the MAC SDU, and thus, may obtain the LCID information of a duplicated packet. A reserved (R) field 2043 may indicate a reserved bit, and may be set to 0. The value of an LCID field 2047 is based on the embodiments of Table 10 or Table 11.

FIG. 20F illustrates a diagram of a sub-header for packet duplication which includes D2/R/R/LCID/R/R fields, R/D2/R/LCID/R/R fields, R/R/D2/LCID/R/R fields, R/R/R/LCID/D2/R fields, or R/R/R/LCID/R/D2 fields according to various embodiments of the disclosure.

A D2 field 2053 may be used for indicating that a corresponding sub-header is a sub-header for packet duplication. That is, D2 field 2053 indicates a sub-header including the LCID information of a duplicated packet. The value of an LCID field 2059 is based on the embodiments of Table 10 or Table 11. Reserved (R) fields 2055, 2057, 2061 may indicate reserved bits, and may be set to 0.

FIG. 20G illustrates a diagram of a sub-header for packet duplication which includes D2/R/E/LCID fields or R/D2/E/LCID fields according to various embodiments of the disclosure. A D2 field 2065 may be used for indicating that a corresponding sub-header is a sub-header for packet duplication. That is, D2 field 2065 indicates a sub-header including the LCID information of a duplicated packet. A reserved (R) field 2067 may indicate a reserved bit, and may be set to 0. An extension field 2069 may indicate whether a MAC PDU sub-header including at least R/R/E/LCID fields exists after the current MAC PDU sub-header. The value of an LCID field 2071 is based on the embodiments of Table 10 or Table 11.

FIG. 20H illustrates a diagram of a sub-header for packet duplication which includes D2/R/R/LCID fields, R/D2/R/LCID fields, or R/R/D2/LCID fields according to various embodiments of the disclosure. Reserved (R) fields 2073, 2075, 2077 may indicate reserved bits, and may be set to 0. The value of an LCID field 2079 is based on the embodiments of Table 10 or Table 11.

According to an embodiment, the case is considered in which a MAC PDU sub-header corresponding to a MAC SDU uses an existing format structure, that is, the MAC PDU sub-header uses R/R/E/LCID or R/R/E/LCID/F/L fields, and a sub-header for packet duplication uses fields of the structure of FIGS. 20E to 20H.

When a D2 field exists in the sub-header for packet duplication, a reception terminal may identify that the LCID of a sub-header right in front of the sub-header for packet duplication is the LCID information of an original packet that is mapped to the duplicated packet.

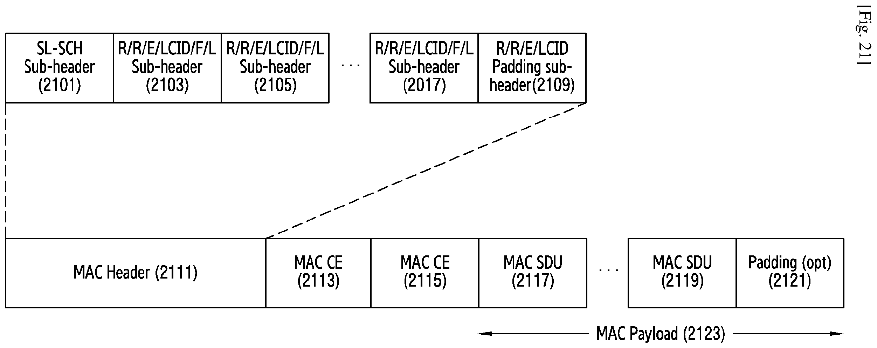

FIG. 21 illustrates a diagram of the structure of a V2X MAC PDU for transmitting and receiving LCID information of duplicated data using a MAC CE according to various embodiments of the disclosure.

An SL-SCH sub-header 2101 may indicate that a corresponding MAC PDU is a MAC PDU for V2X, and when the MAC PDU is used for V2X, the SL-SCH sub-header 2101 may include a V field, an SRC field, a DST field, and an R field. The version (V) field indicate the version of a MAC PDU format. For example, when the value of the V field is 0011, it indicates the corresponding MAC PDU is a broadcast MAC PDU for V2X. The source (SRC) field indicates a source layer-2 ID. This corresponds to the TX identifier of a transmitter that transmits V2X data, and an SRC field value may be set to an identifier that the transmitter generates, for example, ProSe UE ID. The destination (DST) field indicates a destination layer-2 ID. This corresponds to the RX identifier of a receiver that receives V2X data, and the value of the DST field may be set to a provider service identifier (PSID) of an application that delivers V2X data from a higher layer, or ITS application identifier (ITS-AIDs). The value of the DST field may be used for indicating V2X service. The reserved (R) field is a reserved bit, and may be set to 0.

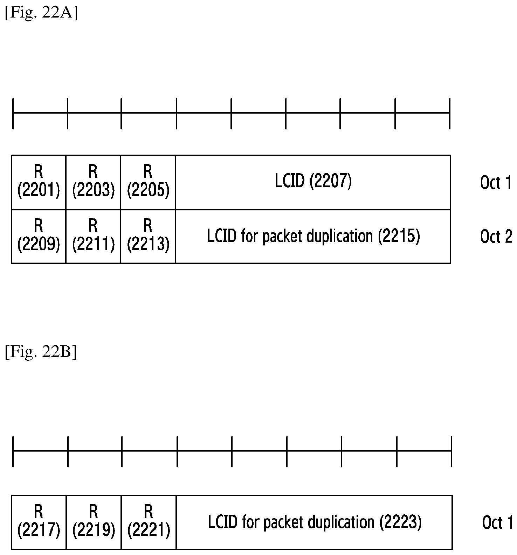

According to various embodiments of the disclosure, a new MAC CE may be defined in order to report the LCID information of a duplicated packet. The new MAC CE is as shown in FIG. 22A or FIG. 22B. The structure of the sub-header of the MAC CE may be configured to include the fields the same as those of a MAC PDU sub-header which corresponds to a MAC CE of an LTE system. According to an embodiment, an LCID value corresponding to the MAC CE may be newly defined.

An LCID is as shown in Table 12 or Table 13 described below. For example, when the LCID of the MAC PDU sub-header is set to "10101", it is recognized as a MAC CE for indicating the LCID of a duplicated packet. In Table 12 or Table 13, an LCID of "10101" is allocated for the use of a MAC CE. However, it is a matter of course that the LCID value for the use of a MAC CE is set to a value different from the value in Table 12 or Table 13.

A transmitting end may report the LCID of a duplicated packet including the new MAC CE, and a receiving end may identify the LCID of the duplicated packet, and whether the MAC SDU is duplicated, on the basis of the MAC CE. For the embodiment of an LCID used for a MAC CE, refer to Table 12 or Table 13 provided below.

Table 12 shows an embodiment of a logical channel ID.

**Table 12**

| Index | LCID values |
|---|---|
| 00000 | Reserved |
| 00001-01010 | Identity of the logical channel |
| 01011-10100 | Identity of the logical channel for duplication |
| 10101 | LCID MAC CE for duplication |
| 10110-11011 | Reserved |
| 11100 | PC5-S messages that are not protected |
| 11101 | PC5-S messages "Direct Security Mode Command" and "Direct Security Mode Complete" |
| 11110 | Other PC5-S messages that are protected |
| 11111 | Padding |

The "identity of the logical channel" indicates the LCID field of a packet to be duplicated. The "identity of the logical channel for duplication" indicates the LCID field of a duplicated packet. The "identity of the logical channel" and the "identity of the logical channel for duplication" may use the same number of LCID values, whereby the values may be one to one mapped. According to an embodiment, a smaller number of duplicated LCID values than an actually supportable number of LCID values may be used such that the "identity of the logical channel for duplication" is one to one mapped to a part of the "identity of the logical channel", for example, 1 to 5 LCIDs.

Table 13 shows an embodiment of a logical channel ID.

**Table 13**

| Index | LCID values |
|---|---|
| 00000 | Reserved |
| 00001-01010 | Identity of the logical channel |
| 01011-10100 | Reserved |
| 10101 | LCID MAC CE for packet duplication (LCID MAC CE for duplication) |
| 10110-11011 | Reserved |
| 11100 | PC5-S messages that are not protected |
| 11101 | PC5-S messages "Direct Security Mode Command" and "Direct Security Mode Complete" |
| 11110 | Other PC5-S messages that are protected |
| 11111 | Padding |

The "identity of the logical channel" indicates the LCID field of a packet to be duplicated. That is, the same LCID value may be used.

FIGS. 22A and FIG. 22B illustrate diagrams of the structure of a MAC CE for packet duplication, which is used for reporting an LCID for packet duplication according to various embodiments of the disclosure.

Referring to FIG. 22A, R fields 2201, 2203, 2205, 2209, 2211, and 2213 indicate reserved bits, and may be set to 0. An LCID field 2207 indicates an LCID mapped to a packet to be duplicated, and may be set to "identity of the logical channel" information of Table 12 or Table 13. An LCID field 2215 for packet duplication indicates an LCID mapped to a duplicated packet, and may be set to "identity of the logical channel for duplication" information of Table 12 or "identity of the logical channel" information of Table 13.

Referring to FIG. 22B, R fields 2217, 2219, and 2221 indicate reserved bits, and may be set to 0. An LCID field 2223 for packet duplication indicates an LCID mapped to a packet to be duplicated, and may be set to "identity of the logical channel for duplication" information of Table 12 or "identity of the logical channel" information of Table 13.

The MAC PDU sub-header for packet duplication of FIGS. 20A to 20H and the MAC CE for packet duplication of FIGS. 22A and 22B may be used separately or may be used together, depending on the embodiment.

When duplicated V2X packet transmission is activated a transmission terminal may transmit an original packet and a duplicated packet using resources allocated by a base station or resources selected by the transmission terminal. The resources used for transmitting the original packet and the duplicated packet may be resources of different carriers. According to various embodiments of the disclosure, the transmission terminal may configure a V2X MAC PDU including LCID information of the duplicated packet as shown in FIGS. 18 to 22B, and may transmit the V2X MAC PDU. A reception terminal may receive the V2X MAC PDU from the transmission terminal, and may obtain and process duplicated packet information using the LCID information of the duplicated packet of FIGS. 18 to 22B.

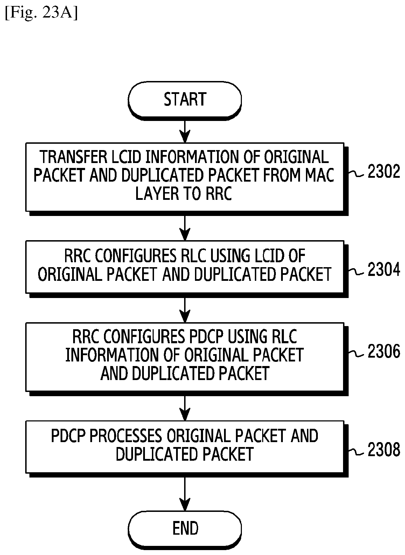

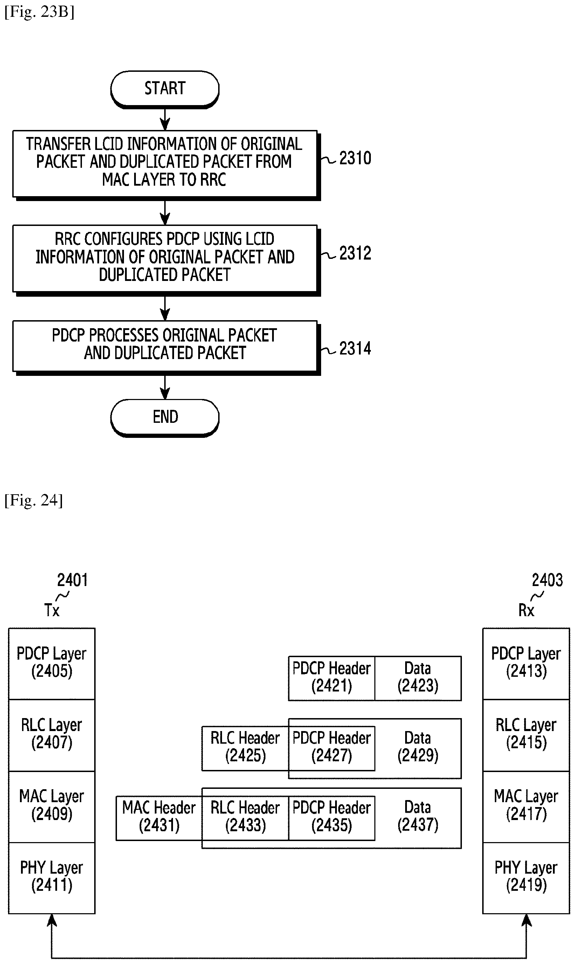

FIGS. 23A and 23B illustrate diagrams of the operation of a reception V2X terminal when the method of FIGS. 18A to 22B is used according to various embodiments of the disclosure.

Referring to FIG. 23A, in operation 2302, a V2X reception terminal may identify the LCID information of an original packet and the LCID information of a duplicated packet corresponding to the original packet, which are transmitted by a V2X transmission terminal via a MAC CE or a MAC sub-header of FIGS. 18A to 22B in a MAC layer. Also, the MAC layer transfers the LCID information of the original packet and the LCID information of the duplicated packet obtained according to the method of FIGS. 18A to 22B, to an RRC layer.

In operation 2304, the RRC layer of the V2X reception terminal may configure a radio link control (RLC) layer using the LCID of the original packet and the LCID of the duplicated packet. According to an embodiment, the RRC layer of the V2X reception terminal may map two RLC entities on the basis of the LCID information received respectively.

In operation 2306, the RRC layer of the V2X reception terminal may map the two RLC entities which are mapped in operation 2304, to a single packet data convergence protocol (PDCP).

In operation 2308, the PDCP layer of the V2X reception terminal may process the original packet and the duplicated packet received via the configured RLC entities.

Referring to FIG. 23B, in operation 2310, a V2X reception terminal may identify the LCID information of an original packet and the LCID information of a duplicated packet corresponding to the original packet, which are transmitted by a V2X transmission terminal via a MAC CE or a MAC sub-header of FIGS. 18A to 22B in a MAC layer. Also, the MAC layer transfers the LCID information of the original packet and the LCID information of the duplicated packet obtained according to the method of FIGS. 18A to 22B, to an RRC layer.

In operation 2312, the RRC layer of the V2X reception terminal configures RLC entity information based on the received LCID information with respect to a PDCP layer, using the LCID of the original packet and the LCID of the duplicated packet. The RLC entity information may include information associated with two RLC entities mapped to the respective LCIDs.

In operation 2314, the PDCP layer of the V2X reception terminal may process the original packet and the duplicated packet received on the basis of the RLC entity information.

FIG. 24 illustrates a diagram of a method performed when a duplication indicator is included in each layer, for example, a PDCP layer, an RLC layer, and a MAC layer.

According to an embodiment, a method of configuring a duplication indicator in each layer of a reception end 2403 is as follows.
1. A MAC layer 2417 may determine whether a packet is duplicated on the basis of the LCID information of a MAC CE or a MAC header according to various embodiments of the disclosure. When a duplicated packet exists, the MAC layer 2417 may map the duplicated packet to the LCID of the duplicated packet and an RLC entity and may transfer MAC data to an RLC layer 2415. In this instance, a packet duplication indicator that may be interpreted by the RLC layer 2415 may be transmitted together with an RLC header, for example, the LCID information of an original packet and LCID information of the duplicated packet, or the RLC information of the duplicated packet and the RLC information of the original packet.
2. The RLC layer 2415 may identify whether the packet is duplicated on the basis of the packet duplication indicator transferred together with the RLC header. When the duplicated packet exists, a packet duplication indicator that may be interpreted by a PDCP layer 2413 may be transferred together with a PDCP header, for example, information associated with duplicated RLC entity and information associated with original RLC entity, or information associated with a PDCP entity mapped to RLC of the duplicated packet and the original packet.
3. The PDCP layer 2413 may identify whether the packet is duplicated on the basis of the packet duplication indicator transferred together with the PDCP header, and may process data received via the original packet and the duplicated packet received from respective RLC entities in a single PDCP.

According to an embodiment, a method of configuring a duplication indicator in each layer of a transmission end 2401 and the reception end 2403 is as follows.
1. A PDCP layer 2405 may determine whether packet duplication exists on the basis of information associated with an RRC or higher layer of the V2X transmission terminal 2401, for example, service type information. The operation of the V2X transmission terminal 2401 is as follows.
   1-1) When the PDCP layer 2405 determines to duplicate a packet, the PDCP layer 2405 transfer a PDCP header 2421 including a PDCP duplication indicator, for example, information associated with packet duplication exists, to a higher layer, that is, an RLC layer 2407.
   1-2) When the PDCP duplication indicator is transferred from a higher layer, that is, the PDCP layer 2405, the RLC layer 2407 transfers the RLC header 2425 including an RLC duplication indicator informing that a packet duplicated in a higher layer exists, for example, including packet duplication existence or PDCP information mapped to RLC, to a lower layer, that is, a MAC layer 2409.
   1-3) When the RLC duplication indicator is transferred from a higher layer, that is, the RLC layer 2407, the MAC layer 2409 may transfer a MAC header 2431 including a MAC duplication indicator indicating that a packet duplicated in a higher layer exists, that is, including a MAC header or a MAC CE according to various embodiments of the disclosure, to a lower layer, that is, a physical (PHY) layer 2411.
   1-4) The PHY layer 2411 transmits data to a reception end using a radio channel.
2. The operation of the V2X reception terminal 2403 is as follows.
   2-1) A PHY layer 2419 receives data via a radio channel, and transfers the same to a higher layer, that is, a MAC layer 2417.
   2-2) The MAC layer 2417 obtains, for example, information associated with whether a MAC packet is duplicated or mapping information associated with RLC and the LCID of the duplicated packet, via a MAC duplication indicator included in a MAC CE or a MAC header according to various embodiments of the disclosure. When a duplicated packet exists, the MAC layer 2417 may map the duplicated packet to the LCID of the duplicated packet and an RLC entity, and may transfer MAC data to an RLC layer 2415.
   2-3) The RLC layer 2415 may transfer the duplicated packet to a PDCP layer 2413, using PDCP information mapped to RLC obtained via an RLC duplication indicator included in an RLC header.
   2-4) The PDCP layer may process, in a single PDCP, data received via an original packet and the duplicated packet received from respective RLC entities.

In the case of a transmission entity, when a transmission packet exists, a higher layer, for example, an application layer or a ProSe function may determine a PPPP and a PPPR for each packet and may perform transmission to a higher layer, for example, PDCP/RLC/MAC or RRC layer. According to an embodiment, the PPPP indicates packet delay budget requirements, and the PPPR indicates reliability requirements. The PPPP or PPPR are parameters which are used as references when determining a packet transmission priority, a logical channel priority, whether to perform packet duplication, a packet transmission parameter configuration, and the like.

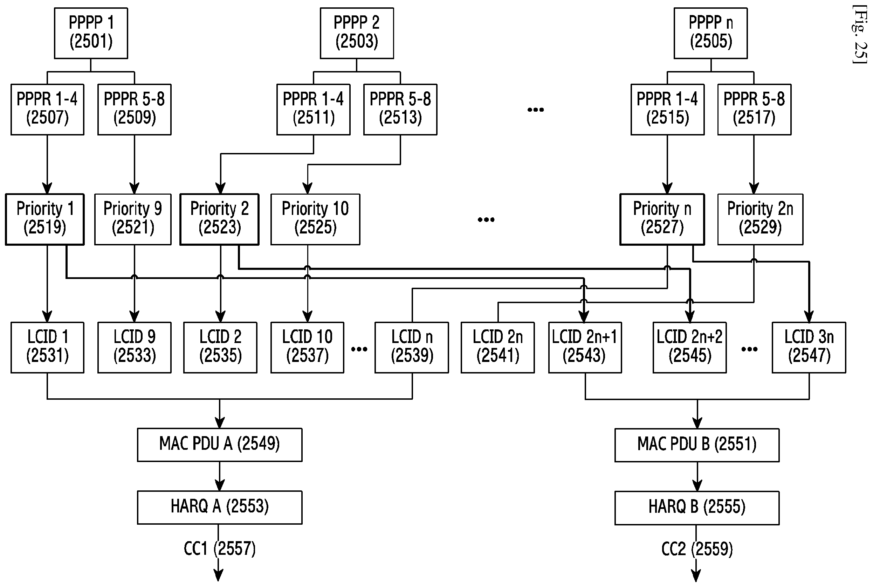

Subsequently, with reference to FIGS. 25 to 27, a method of determining a logical channel priority on the basis of a PPPP or a PPPR for packet transmission will be described. That is, determining a priority mapped to a logical channel, which is a channel of a logical view, and a packet processing procedure on the basis of the set priority will be described. Here, a logical channel is indicated by an LCID. Also, according to various embodiments of the disclosure, a method determined autonomously by a terminal or a method set by a system, that is, a method indicated by a base station or set by pre-configuration information, or the like may be considered as a method of mapping an LCID and a priority. According to an embodiment, a priority mapped to an LCID is set by a PPPP priority, or a (PPPP+PPPR) combination priority.

FIG. 25 illustrates a diagram of a process of determining the priority of a logical channel on the basis of a PPPP and a PPPR, and mapping an LCID according to various embodiments of the disclosure.

According to various embodiments of the disclosure, when a priority is determined on the basis of a PPPP and a PPPR, data duplication may be performed on the basis of the PPPR. A V2X terminal may determine whether to duplicate a packet on the basis of a PPPR threshold provided from a base station or a PPPR threshold value preconfigured in the V2X terminal. According to an embodiment, when a PPPR threshold value is set to 4, the V2X terminal may indicate duplication of packets corresponding to PPPRs 1-4 2507, 2511, and 2515. When the PPPR threshold value is n, the V2X terminal may indicate duplication of packets corresponding to PPPR 1 to PPPR n.

According to various embodiments, the priority of a logical channel is determined using a PPPP and a PPPR. The V2X terminal may map a packet to be transmitted to an LCID according to the determined priority. Hereinafter, according to various embodiments of the disclosure, a method in which the V2X terminal determines the priority of a logical channel will be described by assuming that the PPPR threshold value is 4. Referring to FIG. 25, the priority mapped to the LCID of a logical channel may be determined on the basis of the priority of a PPPP and the priority of a PPPR of a packet. That is, a high priority is determined for a packet to be duplicated on the basis of a PPPR when the PPPP value has a high priority. A high transmission priority may be determined for a packet having a high PPPR priority among packets having the same PPPP priority. That is, a packet having a lower PPPP priority and a higher PPPR priority may have a higher transmission priority than a packet having a higher PPPP priority and a lower PPPR priority. Conversely, a packet having a lower PPPR priority and a higher PPPP priority may have a higher transmission priority than a packet having a higher PPPR priority and a higher PPPP priority. The priority of an LCID may be determined according to the logical channel prioritizing rule. That is, the transmission priority of a packet to be transmitted via a logical channel corresponding to an LCID may be determined.

For example, according to the logical channel transmission prioritizing rule, when a PPPP is 1 in block 2501 and a PPPR is 1 in block 2507, the V2X terminal may set, to 1, the priority of a logical channel for processing an original packet and a duplicated packet in diagram 2519. In this instance, the logical channel corresponding to a priority of 1 in diagram 2519 may be mapped to LCID 1 2531 or LCID 2n+1 2543. For example, the original data may be mapped to LCID 1 2531, and the duplicated packet may be mapped to LCID 2n+1 2543. Here, n indicates the maximum index of a PPPP.

Also, an LCID used for transmitting the duplicated packet and an LCID used for transmitting the original packet may not be multiplexed to a MAC PDU transmitted in the same carrier. For example, LCID 1 2531 and LCID 2n+1 2543 may not be generated as the same MAC PDU, and may be generated as different MAC PDUs, and may be transmitted via respective carriers. FIG. 25 illustrates an embodiment in which a packet mapped to LCID 1 2531 is included in a MAC PDU A 2549, and a packet mapped to LCID 2n+1 2543 is included in a MAC PDU B 2551. The MAC PDU A 2549 may be transmitted via HARQ A 2553 and component carrier 1 (CC 1) 2557. Also, the MAC PDU B 2551 may be transmitted via HARQ B 2555 and component carrier 2 (CC 2) 2559.

As an embodiment, according to the logical channel transmission prioritizing rule, when a PPPP is 1 in diagram 2501 and a PPPR is 5 in diagram 2509, the V2X terminal may set, to 9, the priority of a logical channel for processing a packet in diagram 2521. In this instance, PPPR 5 2509 does not satisfy a packet duplication permission level, a logical channel for transmitting an original packet may be mapped. For example, the logical channel corresponding to a priority of 9 in diagram 2521 may be mapped to LCID 9 2533, and the packet may be multiplexed to one of the MAC PDU A 2549 and the MAC PDU B 2551 which may be transmitted via the LCID 9 2533.

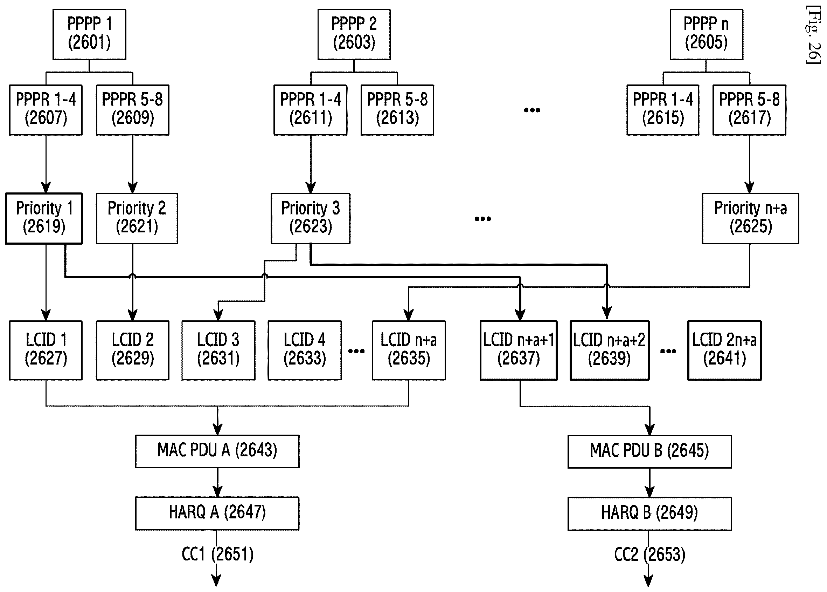

FIG. 26 illustrates a diagram of a process of determining the priority of a logical channel on the basis of a PPPP and a PPPR, and mapping an LCID according to various embodiments of the disclosure.

According to various embodiments of the disclosure, when a priority is determined on the basis of a PPPP and a PPPR, data duplication may be performed on the basis of the PPPR. A V2X terminal may determine whether to duplicate a packet on the basis of a PPPR threshold value provided from a base station or a PPPR threshold value preconfigured in the V2X terminal. According to an embodiment, when a PPPR threshold value is set to 4, the V2X terminal may indicate duplication of packets corresponding to PPPRs 1-4 2607, 2611, and 2615. When the PPPR threshold value is n, the V2X terminal may indicate duplication of packets corresponding to PPPR 1 to PPPR n.

In FIG. 26, a logical channel priority may be determined on the basis of the PPPP and PPPR of a packet. According to various embodiments, when the priority of a PPPP is high and the priority of a PPPR is high, a high transmission priority may be determined. Also, when the priority of a PPPP is the same and the priority of a PPPR is high, a high transmission priority may be determined. Also, when the priority of a PPPR is the same and the priority of a PPPP is high, a high transmission priority may be determined. According to the prioritizing rule, a priority may be mapped to an LCID, and a high transmission priority may be determined for a packet that is transmitted via a logical channel corresponding to an LCID having a high priority. The prioritizing rule may be applied to an LCID which is configured for duplicated packet transmission, and the transmission priority of a duplicated packet may be determined according to the prioritizing rule.

Hereinafter, according to various embodiments of the disclosure, a method in which the V2X terminal determines the priority of a logical channel will be described by assuming that a PPPR threshold value is 4.

For example, when the PPPP of a packet is 1 in block 2601 and the PPPR is 1 in block 2607, the priority of a logical channel for processing an original packet and a duplicated packet may be set to 1 in diagram 2619. In this instance, the logical channel corresponding to a priority of 1 in diagram 2619 may be mapped to LCID 1 2627 or LCID n+a+1 2637.

Also, a logical channel for transmitting a duplicated packet and a logical channel for transmitting an original packet may not be multiplexed to a MAC PDU transmitted from the same carrier. MAC PDU A 2643 of LCID 1 2627 may be transmitted via HARQ A 2647 and CC 1 2651, and MAC PDU B 2645 of LCID n+a+1 2637 may be transmitted via HARQ B 2649 and CC 2 2653.

Also, a logical channel in which a duplication is not performed such as LCID 2 2629, may be multiplexed to one of MAC PDU A 2643 and MAC PDU B 2645 of the same carrier.

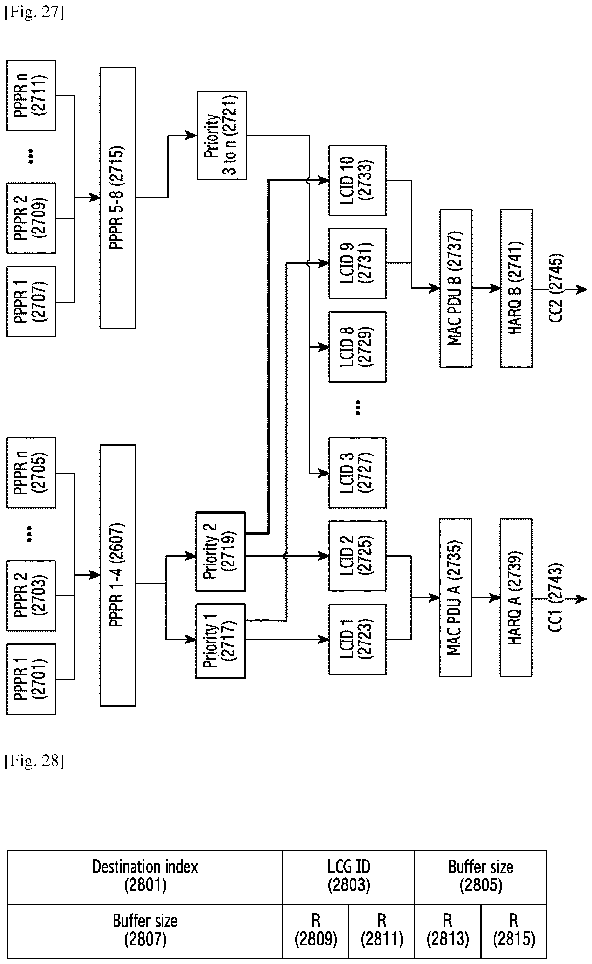

FIG. 27 illustrates a diagram of a process of determining the priority of a logical channel on the basis of a PPPP and a PPPR, and mapping an LCID according to various embodiments of the disclosure.

A V2X terminal may perform data duplication on the basis of a PPPR. The V2X terminal may determine whether to duplicate a packet on the basis of a PPPR threshold provided from a base station or a PPPR threshold value preconfigured in the V2X terminal. According to an embodiment, when packet duplication is performed with respect to packets of PPPRs 1-4 2713, this indicates that PPPR threshold value = 4. Also, when the PPPR threshold value is n, packet duplication may be performed with respect to packets corresponding to PPPR 1 to PPPR n.

The priority of a logical channel may be determined on the basis of PPPP or PPPR information. According to various embodiments, when the PPPR of a packet satisfies a threshold value, the priority may be determined by taking into consideration the PPPR together. When the PPPR of the packet does not satisfy the threshold value, the priority may be set on the basis of the PPPP. The case in which the PPPR of the packet does not satisfy the threshold value may include the case in which PPPR information is not configured in the packet. Also, an LCID may be mapped on the basis of the determined priority.

Hereinafter, according to various embodiments of the disclosure, a method in which the V2X terminal determines the priority of a logical channel will be described by assuming that the PPPR threshold value is 4.

For example, when the PPPR is 1 to 4 in diagram 2713, irrespective of the PPPP, the priority of the LCID of a logical channel for transmitting a duplicated packet may be set to 1 or 2, in diagram 2717 or 2719. The V2X terminal may make reference to a PPPP in order to determine a priority of 1 in diagram 2717 or a priority of 2 in diagram 2719. For example, the priorities of some PPPPs are set to 1 in order of high PPPP values in diagram 2717, and the priorities of the remaining PPPPs are set to 2 in diagram 2719. Alternatively, the V2X terminal may apply the opposite case. For example, the LCID of an original packet and the LCID of a duplicated packet may be mapped to the same priority.

Also, a logical channel for transmitting the duplicated packet and a logical channel for transmitting the original packet may not be multiplexed to the same MAC PDU transmitted from the same carrier. For example, LCID 1 2723 and LCID 9 2731 of FIG. 27 may not be multiplexed to the same MAC PDU, and may be generated as different MAC PDUs, that is, MAC PDU A 2735 or MAC PDU B 2737. MAC PDU A 2735 of LCID 1 2723 may be transmitted via HARQ A 2739 and CC 1 2743. Also, MAC PDU B 2737 of LCID 9 2731 may be transmitted via HARQ B 2741 and CC 2 2745. Also, a logical channel where duplication is not performed, such as LCID 3 2727, may be multiplexed to one of MAC PDU A 2735 and MAC PDU B 2737 of the same carrier.

According to an embodiment, which has not been described with reference to FIGS. 25 to 27, a logical channel priority may be determined on the basis of the PPPP value of a packet. That is, a transmission priority may be determined on the basis of the priority of a PPPP value. Accordingly, a high transmission priority may be determined for a packet that is transmitted via a logical channel corresponding to an LCID mapped to a PPPP having a high priority. Here, in the case of an LCID to which a duplicated packet is mapped, the transmission priority may be determined on the basis of the priority of a PPPP of the duplicated packet. For example, when it is assumed that a PPPR threshold value indicating duplication of a packet is 4, if a packet that is configured to have a PPPP of 1 and a PPPR of 5, that is a packet that is configured not to be duplicated, is transmitted, the priority of an LCID mapped to the PPPP of 1 is set and the packet is transmitted according to the priority via a logical channel mapped to the LCID. As another example, when it is assumed that a PPPR threshold value indicating duplication of a packet is 4, if a packet that is configured to have a PPPP of 1 and a PPPR of 2, that is a packet that is configured to be duplicated, is transmitted, the priorities of LCIDs of an original packet and a duplicated packet mapped to the PPPP 1 may be set, and the packets are transmitted according to the priorities via logical channels mapped to the respective LCIDs.

FIG. 28 illustrates a diagram of an example of a sidelink buffer status report (SL BSR) according to various embodiments of the disclosure.

According to an embodiment, LCG ID 2803 may be operated using 2 bits. The LCG ID 2803 may be determined on the basis of the priority information of a packet, for example, the PPPP of a packet. According to an embodiment, when the PPPP is 1 or 2, the LCG ID 2803 is determined to be 00. When the PPPP is 3 or 4, the LCG ID 2803 is determined to be 01. When the PPPP is 5 or 6, the LCG ID 2803 is determined to be 10. When the PPPP is 7 or 8, the LCG ID 2803 is determined to be 11. A base station may transfer the mapping information of the LCG ID 2803 and a PPPP value to a V2X terminal, and may operate the same. The mapping information of the LCG ID 2803 and a PPPP value may be pre-configured.

As another method of determining the LCG ID 2803 according to the disclosure, priority information, for example, a PPPP, and reliability information, for example, a PPPR may be used. According to an embodiment, when a PPPR threshold value, which is received from the base station and is to be used for determining whether to perform duplication, is 4, the V2X terminal may determine that a packet that has a PPPR in the range of PPPR 1 to PPPR 4 needs to be duplicated. The V2X terminal may determine to perform packet duplication on the basis of a PPPP, in addition to a PPPR. According to an embodiment, when a PPPP threshold value, which is received from the base station and is to be used for determining whether to perform duplication, is 4, the V2X terminal may determine that a packet that has a PPPP in the range of PPPP 1 to PPPP 4 needs to be duplicated. In this instance, the base station may generate the LCG ID 2803 on the basis of a PPPP threshold value or a PPPR threshold value.

The LCG ID 2803 may be determined using Table 14.

**Table 14**

| LCG ID | PPPR 1 | PPPR 2 | PPPR 3 | PPPR 4 | PPPR 5 | PPPR 6 | PPPR 7 | PPPR 8 |
|---|---|---|---|---|---|---|---|---|
| PPPP 1 | 00 | 00 | 00 | 00 | 01 | 01 | 01 | 01 |
| PPPP 2 | 00 | 00 | 00 | 00 | 01 | 01 | 01 | 01 |
| PPPP 3 | 00 | 00 | 00 | 00 | 01 | 01 | 01 | 01 |
| PPPP 4 | 00 | 00 | 00 | 00 | 01 | 01 | 01 | 01 |
| PPPP 5 | 10 | 10 | 10 | 10 | 11 | 11 | 11 | 11 |
| PPPP 6 | 10 | 10 | 10 | 10 | 11 | 11 | 11 | 11 |
| PPPP 7 | 10 | 10 | 10 | 10 | 11 | 11 | 11 | 11 |
| PPPP 8 | 10 | 10 | 10 | 10 | 11 | 11 | 11 | 11 |

According to Table 14, when a PPPR is in the range 1 to 4, or when the PPPP is in the range of 1 to 4, the LCG ID 2803 may be set to 00. The LCG ID 2803 for a packet to be duplicated is set to 00. An SL BSR in which the LCG ID 2803 is 00 is transmitted to a base station, so as to inform the base station that allocation of a resource for data to be duplicated is to be performed.

When the LCG ID 2803 is 01, 10, or 11, that is not a request for the resource for data that needs duplication, but indicates the priority of a resource allocation request for other purposes than duplication. For example, "01", as the LCG ID 2803, indicates that the priority of a resource request is higher than "10".

According to another embodiment, when the PPPP threshold value that the base station transfers so as to determine whether to perform duplication is 4, the V2X terminal may determine that a packet having a PPPR in the range of PPPR 1 to PPPR 4 needs to be duplicated. In this instance, the base station may generate the LCG ID 2803 on the basis of the PPPR threshold value. The LCG ID 2803 may be determined using Table.

**Table 15**

| LCG ID | PPPR 1 | PPPR 2 | PPPR 3 | PPPR 4 | PPPR 5 | PPPR 6 | PPPR 7 | PPPR 8 |
|---|---|---|---|---|---|---|---|---|
| PPPP 1 | 00 | 00 | 00 | 00 | 01 | 01 | 01 | 01 |
| PPPP 2 | 00 | 00 | 00 | 00 | 01 | 01 | 01 | 01 |
| PPPP 3 | 00 | 00 | 00 | 00 | 10 | 10 | 10 | 10 |
| PPPP 4 | 00 | 00 | 00 | 00 | 10 | 10 | 10 | 10 |
| PPPP 5 | 00 | 00 | 00 | 00 | 10 | 10 | 10 | 10 |
| PPPP 6 | 00 | 00 | 00 | 00 | 10 | 10 | 10 | 10 |
| PPPP 7 | 00 | 00 | 00 | 00 | 11 | 11 | 11 | 11 |
| PPPP 8 | 00 | 00 | 00 | 00 | 11 | 11 | 11 | 11 |

According to Table 15, when a PPPR is in the range of PPPR 1 to PPPR 4, the LCG ID 2803 may be set to 00, irrespective of a PPPP.

The LCG ID 2803 for a packet to be duplicated is set to 00. An SL BSR in which the LCG ID 2803 is 00 is transmitted to a base station, so as to inform the base station that allocation of a resource for data to be duplicated is to be performed. When the LCG ID 2803 is 01, 10, or 11, it is not a request for the resource for data that needs duplication, but indicates the priority of a resource allocation request for other purposes than duplication. For example, "01", as the LCG ID 2803, indicates that the priority of a resource request is higher than "10".

According to an embodiment, when the PPPP threshold value that the base station transfers so as to determine whether to perform duplication is 4, the V2X terminal may determine that a packet having a PPPR in the range of PPPR 1 to PPPR 4 needs to be duplicated. In this instance, the base station may generate the LCG ID 2803 on the basis of the PPPR threshold value. The LCG ID 2803 may be determined using Table 16.

**Table 16**

| LCG ID | PPPR 1 | PPPR 2 | PPPR 3 | PPPR 4 | PPPR 5 | PPPR 6 | PPPR 7 | PPPR 8 |
|---|---|---|---|---|---|---|---|---|
| PPPP 1 | 00 | 00 | 00 | 00 | 01 | 01 | 01 | 01 |
| PPPP 2 | 00 | 00 | 00 | 00 | 01 | 01 | 01 | 01 |
| PPPP 3 | 00 | 00 | 00 | 00 | 01 | 01 | 01 | 01 |
| PPPP 4 | 00 | 00 | 00 | 00 | 01 | 01 | 01 | 01 |
| PPPP 5 | 00 | 00 | 00 | 00 | 01 | 01 | 01 | 01 |
| PPPP 6 | 00 | 00 | 00 | 00 | 01 | 01 | 01 | 01 |
| PPPP 7 | 00 | 00 | 00 | 00 | 01 | 01 | 01 | 01 |
| PPPP 8 | 00 | 00 | 00 | 00 | 01 | 01 | 01 | 01 |

According to Table 16, when a PPPR is in the range of PPPR 1 to PPPR 4, the LCG ID 2803 may be set to 00, irrespective of a PPPP.

The LCG ID 2803 for a packet to be duplicated is set to 00. An SL BSR in which the LCG ID 2803 is 00 is transmitted to a base station so as to inform the base station that allocation of a resource for data to be duplicated is to be performed. For a packet corresponding to a PPPR that does not satisfy a PPPR threshold value, that is, a packet duplication activation threshold value, "01" may be used as the value of the LCG ID 2803.

The mapping rule information of the LCG ID 2803 according to various embodiments may be transferred from a bases station to a V2X terminal using system information or dedicated signaling. Alternatively, the mapping rule information of the LCG ID 2803 may be pre-configured.

Also, the V2X terminal may operate a different buffer for each of the PPPP and the PPPR of a packet, or may operate a buffer for the PPPP and the PPPR of a packet. In the case in which various PPPPs and PPPRs of packets mixedly exist, when one or more values for the LCG ID 2803 are determined on the basis of a PPPP and a PPPR, the LCG ID 2803 having that highest value, that is, the highest priority, may be selected and an SL BSR may be transmitted.

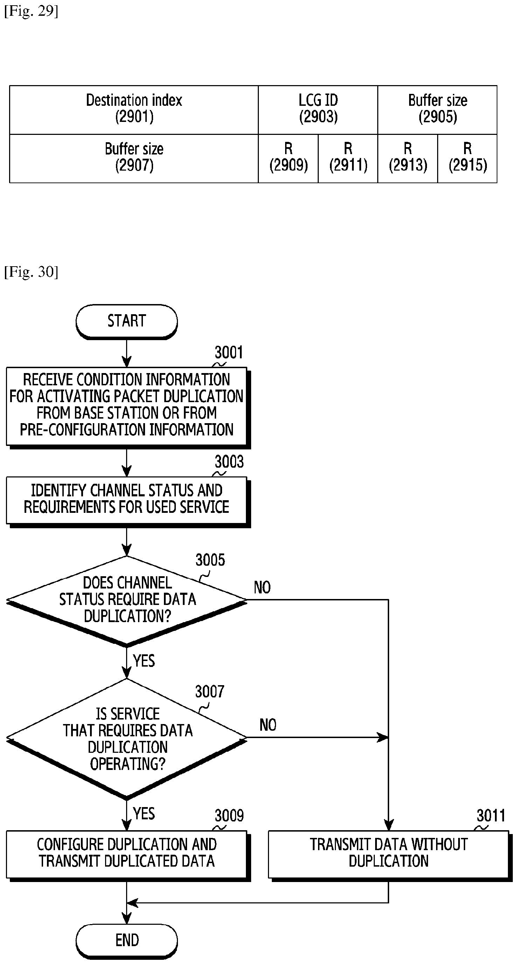

FIG. 29 illustrates a diagram of an example of a sidelink buffer status report (SL BSR) according to various embodiments of the disclosure. Particularly, FIG. 29 illustrates an example of a method of transmitting PPPR information using reserved bits 2901, 2911, 2913, and 2915.

According to an embodiment, a PPPR field may be operated using three bits of the reserved bits 2901, 2911, 2913, and 2915, for example, RRR. As an example of a method of setting the PPPR field, a V2X terminal may check packets in a buffer in order to request a resource from a base station, for example, may check a buffer for each LCID. The V2X terminal may check packets mapped to, for example, an LCG ID 2903 in a buffer, may set the PPPR of a packet having the highest priority among packets, and may transmit an SL BSR. For example, packets in the buffer of the V2X terminal have PPPR 1 and PPPR 4 at the same time, the SL BSR is transmitted by setting the PPPR field to "0000" so as to indicate that PPPR 1 exists. When packets in the buffer have PPPR 4 and PPPR 5, the SL BSR is transmitted by setting the PPPR field to "100" so as to indicate that PPPR 4 exists.

According to an embodiment, one bit of the reserved bits 2901, 2911, 2913, and 2915, for example, "R" is used as a PPPR field. Before the V2X terminal requests a resource from a base station, the V2X terminal checks packets mapped to, for example, the LCG ID 2903 in the buffer, and determines whether a packet that uses duplication exists. A packet that needs to be duplicated may be identified on the basis of a PPPR threshold value which is information that the base station transfers to the V2X terminal. For example, in the case in which the PPPR threshold value is set to 4, when the PPPR of the packet in the buffer of the V2X terminal is less than or equal to 4, for example, when PPPR 1 or PPPR 4 is included, the V2X terminal may transmit an SL SBR to the base station by setting the PPPR field to "1". When the PPPR field is set to "1", the base station may recognize that resource request information transmitted by the V2X terminal indicates that allocation of a resource for packet duplication is used. Alternatively, when the PPPR of a packet of the buffer of the V2X terminal is greater than or equal to 4, for example, when PPPR 5 or PPPR 6 is included, the V2X terminal may transmit an SL SBR by setting the PPPR field to "0". When the PPPR field of the SL BSR is set to "0", the base station may recognize that resource request information transmitted by the V2X terminal indicates that allocation of a resource for packet duplication is not used.

The base station may recognize whether the V2X terminal needs a resource for duplicated packet transmission, on the basis of the PPPR field information of the SL BSR. After identifying the PPPR field information, the base station may allocate, to the V2X terminal, a resource for transmitting a duplicated packet. Also, as a resource on which the duplicated packet is to be transmitted, a resource of a carrier different from the carrier of a resource to be used for original data transmission may be allocated.

FIG. 30 illustrates a diagram of an example of the operation of a terminal that activates data duplication on the basis of a channel status and a service status according to various embodiments of the disclosure. The disclosure of FIG. 30 is used when a terminal of mode 4 activates data duplication.

In operation 3001, a V2X terminal may obtain a condition for activating data duplication from information transmitted by a base station or from pre-configuration information. The information transmitted by the base station may be received via system information or dedicated RRC signaling. The condition for activating data duplication may include at least one from among a channel status condition, for example, a CBR threshold for activating duplication, which is on the basis of a CBR, the reliability requirements of service, for example, a PPPR threshold for activating duplication, and the latency requirements of service, for example, a PPPP threshold for activating duplication.

In operation 3003, the V2X terminal may identify a channel status, for example, measuring a CBR, and may identify the requirements of service of a packet, for example, a PPPR or a PPPP.

In operation 3005, the V2X terminal may determine whether the measured channel status uses duplication or not. For example, when the measured CBR value is greater than or equal to the CBR threshold for activating duplication, which is set in operation 3001, for example, when the measured CBR ≥ CBR threshold for activating duplication, the V2X terminal may determine that the measured channel status allows activation of packet duplication. As another example, when the measured CBR value is less than the CBR threshold for activating duplication, which is set in operation 3001, for example, when the measured CBR < CBR threshold for activating duplication, the V2X terminal may determine that the measured channel status allows activation of packet duplication. When it is determined that activation of packet duplication is not allowed, the terminal proceeds with operation 3011, and transmits data without duplication.

In operation 3007, the V2X terminal may determine whether to transmit a service packet that uses packet duplication, in addition to checking a channel status. The requirements of service that uses packet duplication may be recognized on the basis of information included in a packet. For example, when the PPPR value of a packet is less than or equal the PPPR threshold for activating duplication, which is set in operation 3001, for example, when the PPPR of the current packet ≤ PPPR threshold for activating duplication, the V2X terminal may determine that the packet needs to be duplicated and transmitted. As another example, when the PPPR value of a packet is greater than the PPPR threshold value for activating duplication, which is set in operation 3001, for example, when the PPPR of the current packet > PPPR threshold for activating duplication, the V2X terminal may determine that the packet needs to be duplicated and transmitted. When the V2X terminal determines that duplication is not used on the basis of the requirements of service of a packet to be transmitted (PPPR), the V2X terminal proceeds with operation 3011, and transmits data without duplication.

As another example, when the PPPP value of a packet to be transmitted is less than or equal to the PPPP threshold value for activating duplication, which is set in operation 3001, for example, when the PPPP of the current packet ≤ PPPP threshold for activating duplication, the V2X terminal may determine that the packet needs to be duplicated and transmitted. As another example, when the PPPP value of a packet to be transmitted is greater than the PPPP threshold for activating duplication, which is set in operation 3001, for example, when the PPPP of the current packet > PPPP threshold for activating duplication, the V2X terminal may determine that the packet needs to be duplicated and transmitted. When the V2X terminal determines that duplication is not used on the basis of the requirement of service of a packet to be transmitted (PPPP), the V2X terminal proceeds with operation 3011, and transmits data without duplication.

The V2X terminal may determine whether to activate packet duplication using at least one of a PPPR or a PPPP in operation 3007.

In operation 3009, when the V2X terminal determines to activate packet duplication using operations 3005 to 3007, the V2X terminal may perform layer configuration for activating packet duplication, for example, mapping 2 RLC entities to 1 PDCP entity, and may transmit duplicated packets.

In operation 3011, when the V2X terminal determines not to activate packet duplication using operations 3005 to 3007, the V2X terminal may transmit data without duplication.

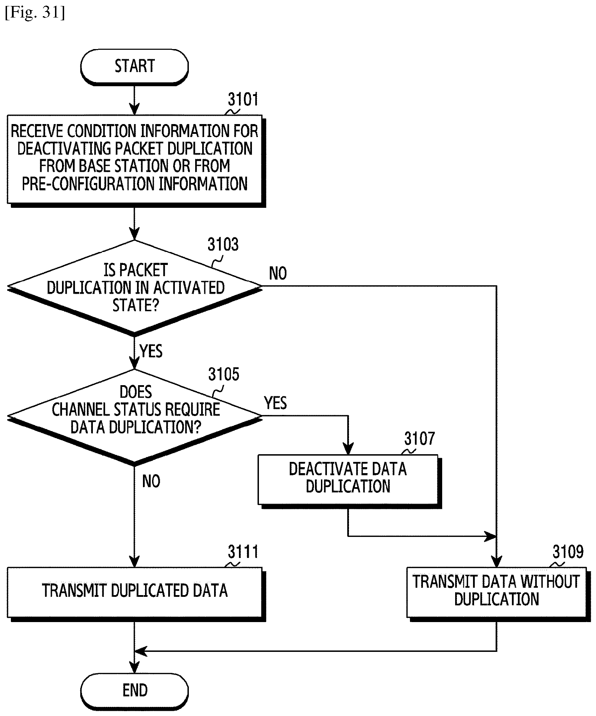

FIG. 31 illustrates a diagram of an example of the operation of a terminal that deactivates data duplication on the basis of a channel status according to various embodiments of the disclosure. The disclosure of FIG. 31 is used when a terminal of mode 4 deactivates data duplication.

In operation 3101, a V2X terminal obtains a condition for deactivating data duplication from information transmitted by a base station or pre-configuration information. The information transmitted by the base station may be received via system information or dedicated RRC signaling. A channel status condition, for example, a CBR threshold for deactivating duplication, which is on the basis of a CBR, may be used as the condition for deactivating data duplication.

In operation 3103, the V2X terminal may activate packet duplication and may perform packet duplication according to the data duplication activation operation of FIGS. 3 to 30.

In operation 3105, when the data duplication is in an activated state, the V2X terminal may determine to deactivate data duplication on the basis of a measured channel status, for example, a measured CBR, and the condition for deactivating packet duplication, which is received in operation 3101.

According to an embodiment, when the measured channel status value, that is, a CBR, is less than or equal to a CBR threshold for deactivating duplication, which is set in operation 3101, for example, when CBR ≤ CBR threshold for deactivating duplication, the V2X terminal may determine to deactivate packet duplication. According to an embodiment, when the measured channel status value, that is, a CBR, is greater than a CBR threshold for deactivating duplication, which is set in operation 3101, for example, when CBR > CBR threshold for deactivating duplication, the V2X terminal may determine to deactivate packet duplication. When the condition for deactivating packet duplication is not satisfied, the V2X terminal proceeds with operation 3111 and maintains duplicated packet transmission.

In operation 3107, when the V2X terminal determines to deactivate data duplication, the V2X terminal may initiate information of layers for data duplication. For example, the V2X terminal may change two RLC entities mapped to a PDCP entity to one RLC entity.

In operation 3109, when data duplication is deactivated, the V2X terminal may transmit data without duplication.

In operation 3111, when the condition of operation 3107 is not satisfied, the duplicated packet transmission maintains the activated state.

Also, the same PPPR threshold value may be used as the condition for activation and the condition for deactivation for data duplication of FIGS. 30 and 31.

Methods according to embodiments stated in claims and/or specifications of the disclosure may be implemented in hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which is accessible through communication networks such as the Internet, Intranet, local area network (LAN), wide area network (WAN), and storage area network (SAN), or a combination thereof. Such a storage device may access the electronic device via an external port. Further, a separate storage device on the communication network may access a portable electronic device.

In the above-described detailed embodiments of the disclosure, a component included in the disclosure is expressed in the singular or the plural according to a presented detailed embodiment. However, the singular form or plural form is selected for convenience of description suitable for the presented situation, and various embodiments of the disclosure are not limited to a single element or multiple elements thereof. Further, either multiple elements expressed in the description may be configured into a single element or a single element in the description may be configured into multiple elements.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a first terminal (121) in a wireless communication system, the method comprising:
obtaining a configuration for a sidelink packet duplication;
activating the sidelink packet duplication based on a proximity service per packet reliability, PPPR, value of a first packet and the configuration for the sidelink packet duplication;
transmitting, to a base station (101), a sidelink buffer status report, BSR, requesting resources allocation for the sidelink packet duplication, wherein the BSR includes a first destination index for the first packet which is an original packet, a first logical channel group identifier, LCG ID, associated with the first packet, a second destination index for a second packet which is a duplicated packet for the original packet, and a second LCG ID associated with the second packet, wherein the first destination index and the second destination index correspond to a same destination;
receiving, from the base station (101), resource allocation information for the first packet and the second packet; and
transmitting, to a second terminal which is the same destination, the first packet on a first carrier and the second packet on a second carrier which is different from the first carrier, based on the resource allocation information.

2. The method of claim 1, wherein the sidelink BSR further includes a first buffer size associated with the first packet and a second buffer size associated with the second packet.

3. The method of claim 1, wherein the configuration for the sidelink packet duplication is obtained based on information received from a base station (101) or pre-configuration information.

4. The method of claim 1, wherein the configuration for the sidelink packet duplication includes a PPPR threshold for activating the sidelink packet duplication, and
wherein the sidelink packet duplication is activated in case that the PPPR value of the first packet is lower than the PPPR threshold.

5. The method of claim 1, wherein a first logical channel identifier, LCID, value of the first packet is set to one among 10 values ranging from 00001 to 01010, and a second LCID value of the second packet is set to one among 10 values ranging from 01011 to 10100.

6. The method of claim 1, wherein the configuration for the sidelink packet duplication includes information on the first carrier and the second carrier.

7. The method of claim 1, wherein information on a mapping between the first LCG ID associated with the first packet and the PPPR value is configured by an upper layer.

8. A terminal (121) for a wireless communication system, the terminal comprising:
a transceiver (210); and
at least one processor coupled with the transceiver and configured to:
obtain a configuration for a sidelink packet duplication;
activate the sidelink packet duplication based on a proximity service per packet reliability, PPPR, value of a first packet and the configuration for the sidelink packet duplication,
transmit, to a base station (101), a sidelink buffer status report, BSR, requesting resources allocation for the sidelink packet duplication, wherein the BSR includes a first destination index for the first packet which is an original packet, a first logical channel group identifier, LCG ID, associated with the first packet, a second destination index for a second packet which is a duplicated packet for the original packet, and a second LCG ID associated with the second packet, wherein the first destination index and the second destination index correspond to a same destination,
receive, from the base station (101), resource allocation information for the first packet and the second packet, and
transmit, to a second terminal which is the same destination, the first packet on a first carrier and the second packet on a second carrier which is different from the first carrier, based on the resource allocation information.

9. The terminal (121) of claim 8, wherein the sidelink BSR further includes a first buffer size associated with the first packet and a second buffer size associated with the second packet.

10. The terminal (121) of claim 8, wherein the configuration for the sidelink packet duplication is obtained based on information received from a base station (101) or pre-configuration information.

11. The terminal (121) of claim 8, wherein the configuration for the sidelink packet duplication includes a PPPR threshold for activating the sidelink packet duplication, and
wherein the sidelink packet duplication is activated in case that the PPPR value of the first packet is lower than the PPPR threshold.

12. The terminal (121) of claim 8, wherein a first logical channel identifier, LCID, value of the first packet is set to one among 10 values ranging from 00001 to 01010, and a second LCID value of the second packet is set to one among 10 values ranging from 01011 to 10100.

13. The terminal (121) of claim 8, wherein the configuration for the sidelink packet duplication includes information on the first carrier and the second carrier.

14. The terminal (121) of claim 8, wherein information on a mapping between the first LCG ID associated with the first packet and the PPPR value is configured by an upper layer.

## Patentansprüche

1. Ein Verfahren, das von einem ersten Endgerät (121) in einem drahtlosen Kommunikationssystem durchgeführt wird, wobei das Verfahren umfasst:
Erhalten einer Konfiguration für eine Sidelink-Paketduplizierung;
Aktivieren der Sidelink-Paketduplizierung auf der Grundlage eines Proximity Service per Packet Reliability-PPPR-Werts eines ersten Pakets und der Konfiguration für die Sidelink-Paketverdopplung;
Übertragen eines Sidelink-Pufferstatusberichts, BSR, an eine Basisstation (101), der eine Ressourcenzuweisung für die Sidelink-Paketduplizierung anfordert, wobei der BSR einen ersten Zielindex für das erste Paket, das ein ursprüngliches Paket ist, eine erste logische Kanalgruppenkennung, LCG-ID, die dem ersten Paket zugeordnet ist, einen zweiten Zielindex für ein zweites Paket, das ein dupliziertes Paket für das ursprüngliche Paket ist, und eine zweite LCG-ID, die dem zweiten Paket zugeordnet ist, enthält, wobei der erste Zielindex und der zweite Zielindex demselben Ziel entsprechen;
Empfangen von Ressourcenzuweisungsinformationen für das erste Paket und das zweite Paket von der Basisstation (101); und
Übertragen des ersten Pakets auf einem ersten Träger und des zweiten Pakets auf einem zweiten Träger, der sich vom ersten Träger unterscheidet, an ein zweites Endgerät, das dasselbe Ziel ist, auf der Grundlage der Ressourcenzuweisungsinformationen.

2. Das Verfahren nach Anspruch 1, wobei der Sidelink-BSR ferner eine erste Puffergröße, die dem ersten Paket zugeordnet ist, und eine zweite Puffergröße, die dem zweiten Paket zugeordnet ist, umfasst.

3. Das Verfahren nach Anspruch 1, wobei die Konfiguration für die Sidelink-Paketduplizierung auf der Grundlage von Informationen, die von einer Basisstation (101) empfangen werden, oder Vorkonfigurationsinformationen erhalten wird.

4. Das Verfahren nach Anspruch 1, wobei die Konfiguration für die Sidelink-Paketduplizierung einen PPPR-Schwellenwert zum Aktivieren der Sidelink-Paketduplizierung enthält, und
wobei die Duplizierung von Sidelink-Paketen aktiviert wird, wenn der PPPR-Wert des ersten Pakets niedriger ist als der PPPR-Schwellenwert.

5. Das Verfahren nach Anspruch 1, wobei ein erster logischer Kanalkennungs-LCID-Wert des ersten Pakets auf einen von 10 Werten im Bereich von 00001 bis 01010 gesetzt wird und ein zweiter LCID-Wert des zweiten Pakets auf einen von 10 Werten im Bereich von 01011 bis 10100 gesetzt wird.

6. Das Verfahren nach Anspruch 1, wobei die Konfiguration für die Sidelink-Paketduplizierung Informationen über den ersten Träger und den zweiten Träger enthält.

7. Das Verfahren nach Anspruch 1, wobei Informationen über eine Abbildung zwischen der ersten LCG-ID, die dem ersten Paket zugeordnet ist, und dem PPPR-Wert von einer oberen Schicht konfiguriert werden.

8. Ein Endgerät (121) für ein drahtloses Kommunikationssystem, wobei das Endgerät umfasst:
einen Transceiver (210); und
mindestens einen Prozessor, der mit dem Transceiver gekoppelt und konfiguriert ist zum:
Erhalten einer Konfiguration für eine Sidelink-Paketduplizierung;
Aktivieren der Sidelink-Paketduplizierung auf der Grundlage eines Proximity Service per Packet Reliability-PPPR-Werts eines ersten Pakets und der Konfiguration für die Sidelink-Paketduplizierung,
Übertragen eines Sidelink-Pufferstatusberichts, BSR, an eine Basisstation (101), der eine Ressourcenzuweisung für die Sidelink-Paketduplizierung anfordert, wobei der BSR einen ersten Zielindex für das erste Paket, das ein ursprüngliches Paket ist, eine erste logische Kanalgruppenkennung, LCG-ID, die dem ersten Paket zugeordnet ist, einen zweiten Zielindex für ein zweites Paket, das ein dupliziertes Paket für das ursprüngliche Paket ist, und eine zweite LCG-ID, die dem zweiten Paket zugeordnet ist, enthält, wobei der erste Zielindex und der zweite Zielindex demselben Ziel entsprechen,
Empfangen, von der Basisstation (101), von Informationen über die Ressourcenzuweisung für das erste Paket und das zweite Paket, und
Übertragen des ersten Pakets auf einem ersten Träger und des zweiten Pakets auf einem zweiten Träger, der sich vom ersten Träger unterscheidet, auf der Grundlage der Ressourcenzuordnungsinformationen an ein zweites Endgerät, das dasselbe Ziel ist.

9. Das Endgerät (121) nach Anspruch 8, wobei der Sidelink-BSR ferner eine erste Puffergröße, die dem ersten Paket zugeordnet ist, und eine zweite Puffergröße, die dem zweiten Paket zugeordnet ist, enthält.

10. Das Endgerät (121) nach Anspruch 8, wobei die Konfiguration für die Sidelink-Paketduplizierung auf der Grundlage von Informationen, die von einer Basisstation (101) empfangen werden, oder Vorkonfigurationsinformationen erhalten wird.

11. Das Endgerät (121) nach Anspruch 8, wobei die Konfiguration für die Sidelink-Paketduplizierung einen PPPR-Schwellenwert zum Aktivieren der Sidelink-Paketduplizierung enthält, und
wobei die Duplizierung von Sidelink-Paketen aktiviert wird, wenn der PPPR-Wert des ersten Pakets niedriger ist als der PPPR-Schwellenwert.

12. Das Endgerät (121) nach Anspruch 8, wobei ein erster logischer Kanalkennungs-LCID-Wert des ersten Pakets auf einen von 10 Werten im Bereich von 00001 bis 01010 und ein zweiter LCID-Wert des zweiten Pakets auf einen von 10 Werten im Bereich von 01011 bis 10100 eingestellt ist.

13. Das Endgerät (121) nach Anspruch 8, wobei die Konfiguration für die Sidelink-Paketduplizierung Informationen über den ersten Träger und den zweiten Träger enthält.

14. Das Endgerät (121) nach Anspruch 8, wobei Informationen über eine Abbildung zwischen der ersten LCG-ID, die dem ersten Paket zugeordnet ist, und dem PPPR-Wert von einer oberen Schicht konfiguriert werden.

## Revendications

1. Un procédé exécuté par un premier terminal (121) dans un système de communication sans fil, le procédé comprenant: :
obtenir une configuration pour une duplication de paquets de liaison latérale ;
activer la duplication de paquets de liaison latérale sur la base d'une valeur de fiabilité de service de proximité par paquet, PPPR, d'un premier paquet et de la configuration pour la duplication de paquets de liaison latérale ;
transmettre, à une station de base (101), un rapport d'état de tampon de liaison latérale, BSR, demandant une allocation de ressources pour la duplication de paquets de liaison latérale, dans lequel le BSR comprend un premier index de destination pour le premier paquet qui est un paquet original, un premier identifiant de groupe de canaux logiques, LCG ID, associé au premier paquet, un deuxième index de destination pour un deuxième paquet qui est un paquet dupliqué pour le paquet original, et un deuxième LCG ID associé au deuxième paquet, dans lequel le premier index de destination et le deuxième index de destination correspondent à une même destination ;
recevoir, à partir de la station de base (101), des informations d'allocation de ressources pour le premier paquet et le deuxième paquet ; et
transmettre, à un deuxième terminal qui est la même destination, le premier paquet sur une première porteuse et le deuxième paquet sur une deuxième porteuse qui est différente de la première porteuse, sur la base des informations d'allocation de ressources.

2. Le procédé selon la revendication 1, dans lequel le BSR de liaison latérale comprend en outre une première taille de tampon associée au premier paquet et une deuxième taille de tampon associée au deuxièmepaquet.

3. Le procédé selon la revendication 1, dans lequel la configuration pour la duplication de paquets de liaison latérale est obtenue sur la base d'informations reçues d'une station de base (101) ou d'informations de pré-configuration.

4. Le procédé selon la revendication 1, dans lequel la configuration pour la duplication de paquets de liaison latérale comprend un seuil PPPR pour activer la duplication de paquets de liaison latérale, et
dans lequel la duplication de paquets de liaison latérale est activée dans le cas où la valeur PPPR du premier paquet est inférieure au seuil PPPR.

5. Le procédé selon la revendication 1, dans lequel une première valeur d'identifiant de canal logique, LCID, du premier paquet est fixée à une valeur parmi 10 valeurs allant de 00001 à 01010, et une deuxième valeur LCID du deuxième paquet est fixée à une valeur parmi 10 valeurs allant de 01011 à 10100.

6. Le procédé selon la revendication 1, dans lequel la configuration pour la duplication de paquets de liaison latérale comprend des informations sur la première porteuse et la deuxième porteuse.

7. Le procédé selon la revendication 1, dans lequel les informations sur un mappage entre le premier identifiant LCG associé au premier paquet et la valeur PPPR sont configurées par une couche supérieure.

8. Un terminal (121) pour un système de communication sans fil, le terminal comprenant :
un émetteur-récepteur (210) et
au moins un processeur couplé à l'émetteur-récepteur et configuré pour :
obtenir une configuration pour une duplication de paquets de liaison latérale ;
activer la duplication de paquets de liaison latérale sur la base d'une valeur de fiabilité de service de proximité par paquet, PPPR, d'un premier paquet et de la configuration pour la duplication de paquets de liaison latérale,
transmettre, à une station de base (101), un rapport d'état de tampon de liaison latérale, BSR, demandant une allocation de ressources pour la duplication de paquets de liaison latérale, dans lequel le BSR comprend un premier index de destination pour le premier paquet qui est un paquet original, un premier identifiant de groupe de canaux logiques, LCG ID, associé au premier paquet, un deuxième index de destination pour un deuxième paquet qui est un paquet dupliqué pour le paquet original, et un deuxième LCG ID associé au deuxième paquet, dans lequel le premier index de destination et le deuxième index de destination correspondent à une même destination,
recevoir, à partir de la station de base (101), des informations d'allocation de ressources pour le premier paquet et le deuxième paquet, et
transmettre, à un deuxième terminal qui est la même destination, le premier paquet sur une première porteuse et le deuxième paquet sur une deuxième porteuse qui est différente de la première porteuse, sur la base des informations d'attribution de ressources.

9. Le terminal (121) selon la revendication 8, dans lequel le BSR de liaison latérale comprend en outre une première taille de tampon associée au premier paquet et une deuxième taille de tampon associée au deuxième paquet.

10. Le terminal (121) selon la revendication 8, dans lequel la configuration pour la duplication de paquets de liaison latérale est obtenue sur la base d'informations reçues d'une station de base (101) ou d'informations de pré-configuration.

11. Le terminal (121) selon la revendication 8, dans lequel la configuration pour la duplication de paquets de liaison latérale comprend un seuil PPPR pour activer la duplication de paquets de liaison latérale, et
dans lequel la duplication depaquets de liaison latérale est activée dans le cas où la valeur PPPR du premier paquet est inférieure au seuil PPPR.

12. Le terminal (121) selon la revendication 8, dans lequel une première valeur d'identifiant de canal logique, LCID, du premier paquet est fixée à une valeur parmi 10 valeurs allant de 00001 à 01010, et une deuxième valeur LCID du deuxième paquet est fixée à une valeur parmi 10 valeurs allant de 01011 à 10100.

13. Le terminal (121) selon la revendication 8, dans lequel la configuration pour la duplication de paquets de liaison latérale comprend des informations sur la première porteuse et la deuxième porteuse.

14. Le terminal (121) selon la revendication 8, dans lequel des informations sur un mappage entre le premier identifiant LCG associé au premier paquet et la valeur PPPR sont configurées par une couche supérieure.
